(19) Europäisches Patentamt
European Patent Office
Office européen des brevets

(11) **EP 4 707 120 A1**

(12) **EUROPEAN PATENT APPLICATION**
published in accordance with Art. 153(4) EPC

(43) Date of publication:
**11.03.2026 Bulletin 2026/11**

(21) Application number: **24800103.4**

(22) Date of filing: **26.04.2024**

(51) International Patent Classification (IPC):
**B62B 3/00** *(2006.01)*    **B62B 5/00** *(2006.01)*
**B62B 5/04** *(2006.01)*    **G01L 5/1627** *(2020.01)*

(52) Cooperative Patent Classification (CPC):
**B62B 3/00; B62B 5/00; B62B 5/04; G01L 5/1627**

(86) International application number:
**PCT/JP2024/016532**

(87) International publication number:
**WO 2024/228372 (07.11.2024 Gazette 2024/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.05.2023 JP 2023075801**

(71) Applicant: **NSK LTD.**
**Tokyo 141-8560 (JP)**

(72) Inventors:
• **PAN, Siyi**
**Fujisawa-shi, Kanagawa 251-8501 (JP)**
• **TESHIGAWARA, Seiichi**
**Fujisawa-shi, Kanagawa 251-8501 (JP)**

(74) Representative: **SSM Sandmair**
**Patentanwälte Rechtsanwalt**
**Partnerschaft mbB**
**Joseph-Wild-Straße 20**
**81829 München (DE)**

(54) **TRAVEL ASSISTANCE DEVICE AND TRAVEL ASSISTANCE CONTROL METHOD**

(57) A traveling assistance device is connectable to and disconnectable from an existing traveling tool and assists traveling of a traveling tool without requiring a dedicated operating unit. The traveling assistance device includes: a driving wheel 20 supported by a device main body; a speed acquisition unit 20a configured to acquire information on a speed and an angular speed; a connection portion connected to a traveling tool including a plurality of driven wheels and configured to receive a load applied to the traveling tool; a driving force acquisition unit 10b configured to acquire driving forces $\psi_R$ of the driving wheel 20; and a controller 22, in which the controller 22 calculates frictional forces $\psi_f$ of the driven wheel 220 based on the driving forces $\psi_R$ in a state where external force $\psi_H$ is not applied to the traveling tool 200, when the speed v of the device main body 10 is a predetermined threshold or higher, executes a control such that the driving wheel 20 travels with the driving forces against the frictional forces $\psi_f$, and when the speed v of the device main body 10 is lower than the predetermined threshold, executes a control such that the driving force of the driving wheel 20 is zero.

FIG.24

EP 4 707 120 A1

## Description

Field

The present invention relates to a traveling assistance device and a traveling assistance control method.

Background

There is known a traveling assistance device for assisting the traveling of a traveling tool having universal wheels, such as a trolley, a transporting cart, a moving bed, or a stretcher, that travels on a floor through a hand-push operation of an operator while having a transport target placed thereon. The traveling assistance device reduces a force required for the operator to operate the traveling tool by applying a driving force for traveling depending on a force that is applied by the operator.

For example, Patent Literature 1 discloses a floor platform that omnidirectionally moves an operating table based on an operation of a dedicated manual operation element provided to the operating table. Patent Literature 2 discloses a power-assisted transport device where a handle and a driving unit operated by the handle can be mounted on an existing stretcher. Patent Literature 3 discloses a unit that is mounted on a lower part of a stretcher and is operated to travel while assisting the stretcher's traveling with an operating panel mounted on the stretcher when its wheels touch the ground.

Citation List

Patent Literature

Patent Literature 1: JP 2017-536150 A
Patent Literature 2: JP 2006-001426 A
Patent Literature 3: JP 2000-107230 A

Summary

Technical Problem

However, the traveling assistance devices disclosed in Patent Literatures 1, 2, and 3 are operated by the dedicated operating unit. Therefore, the traveling assistance devices cannot be applied to various transporting tools or to a case where a transporting tool is operated to travel by a plurality of people.

The present invention has been made under these circumstances, and an object thereof is to provide a traveling assistance device that is connectable to and disconnectable from an existing traveling tool and can assist the traveling of a traveling tool without requiring a dedicated operating unit, and a traveling assistance control method.

Solution to Problem

A traveling assistance device according to an aspect of the present invention includes: a driving wheel supported by a device main body and configured to cause the device main body to travel; a speed acquisition unit configured to acquire information on a speed and an angular speed of the device main body; a connection portion connected to a traveling tool including a main body portion and a plurality of driven wheels supported by the main body portion and configured to receive a load applied to the traveling tool; a driving force acquisition unit configured to acquire a driving force of the driving wheel; and a controller. The controller is configured to: calculate a frictional force of the driven wheel based on the driving force in a state where an external force is not applied to the traveling tool; when the speed of the device main body is a predetermined threshold or higher, execute a control such that the driving wheel travels with a driving force against the frictional force; and when the speed of the device main body is lower than the predetermined threshold, execute a control such that the driving force of the driving wheel is zero.

This configuration eliminates the need for a dedicated operating unit and can reduce a load caused by the frictional force applied to the traveling tool through the driven wheel, whereby the external force applied to the traveling tool by the operator can be reduced. In addition, the traveling assistance device is connectable to and disconnectable from the existing traveling tool in the connection portion, and is applicable to various traveling tools. In addition, the frictional force applied to the traveling tool on which a transport target is placed is calculated. Therefore, even when transport targets having different weights are loaded each time, the traveling assistance control for applying the driving force against the frictional force corresponding to the weight can be executed. In addition, depending on a condition based on the speed information acquired from the speed acquisition unit, it is possible to transition to and execute the more suitable control of a control of executing traveling assistance and a control of not executing traveling assistance.

In the traveling assistance device according to an aspect of the present invention, the controller is configured to: calculate an estimated value of the external force applied to the traveling tool based on the driving force and the frictional force; when the speed of the device main body is the predetermined threshold or higher, calculates a driving force for reducing the external force based on the external force and execute a control such that the driving wheel travels with the calculated driving force; and when the speed of the device main body is lower than the predetermined threshold, execute a control such that the driving force of the driving wheel is zero.

This configuration eliminates the need for a dedicated operating unit and allows the assistance to be executed such that the traveling tool travels in a direction in which the operator applies the external force, whereby a burden of the operator can be reduced. Even without a dedicated operating unit, the operator can directly operate the traveling tool by holding any portion of the traveling tool with their hand. Therefore, a special training for operating the traveling assistance device is not required, and a precise movement of the traveling tool can be achieved even in a narrow space or a crowded environment. In addition, the frictional force applied to the traveling tool on which a transport target is placed is calculated. Therefore, assuming that the frictional force of the traveling tool is the frictional force of the traveling tool including the transport target, the external force by the operator who operates the traveling tool is estimated from the frictional force and the driving force, and a control is executed such that the external force decreases. Therefore, even when transport targets having different weights are loaded each time, the traveling assistance control corresponding to the weight can be executed.

In the traveling assistance device according to an aspect of the present invention, the controller is configured to, when the speed of the device main body is the predetermined threshold or higher, calculate a driving force that is proportional to the external force and lower than the external force and execute a control such that the driving wheel travels with the calculated driving force.

With this configuration, as the external force by the operator increases, the driving force that assists the traveling increases in proportion thereto. Therefore, the operator can execute an intuitive operation.

The traveling assistance device according to an aspect of the present invention further includes an acceleration acquisition unit configured to acquire information on an acceleration of the device main body. When the speed of the device main body is the predetermined threshold or higher and an acceleration applied to the device main body acts in a direction opposite to a traveling direction such that the acceleration is a predetermined threshold or higher, the controller is configured to set a brake force calculated by multiplying the speed and the angular speed by a predetermined viscous resistance coefficient as the driving force, and change a control such that the driving wheel travels with the set driving force.

With this configuration, when the speed and the angular speed are low, vibration can be suppressed, and the brake force can be increased at the time of high-speed traveling. Accordingly, for example, when the traveling tool is about to come into contact with an obstacle, the traveling tool can be decelerated or stopped immediately while reducing the burden on the transport target.

In the traveling assistance device according to an aspect of the present invention, the controller is configured to, when the speed of the device main body is lower than the predetermined threshold in a state where the brake force is controlled as the driving force, change a control such that the driving force of the driving wheel is zero.

With this configuration, depending on the condition based on the speed information acquired from the speed acquisition unit, it is possible to transition to and execute the more suitable control of a control of executing braking assistance and a control of not executing traveling assistance and braking assistance. In addition, depending on the condition based on the traveling speed information, it is possible to transition to and execute the more suitable control of a control of executing traveling assistance and a control of not executing traveling assistance.

In the traveling assistance device according to an aspect of the present invention, the controller is configured to, when the acceleration applied to the device main body acts in the traveling direction such that the acceleration is the predetermined threshold or higher in a state where the brake force is controlled as the driving force, change a control such that the driving wheel travels with a driving force for reducing the external force based on the external force.

With this configuration, depending on the condition based on the speed information acquired from the speed acquisition unit, it is possible to transition to and execute the more suitable control or continue a control of a control of restarting traveling assistance and a control of continuing braking.

In the traveling assistance device according to an aspect of the present invention, the driven wheel of the traveling tool is a universal wheel.

At the start of travel, when the universal wheel is pushed in a horizontal direction perpendicular to an axial direction of the universal wheel, the load on the operator is at a minimum, and when the universal wheel is pushed in the axial direction, the load is at a maximum. The traveling assistance device applies the driving force against the load caused by the frictional force of the traveling tool. Therefore, the load on the operator at the start of travel is reduced, and even when a load is applied in the axial direction of the universal wheel, the traveling tool can be easily made to start traveling.

In the traveling assistance device according to an aspect of the present invention, the controller is configured to: align directions of the plurality of driven wheels by controlling the traveling tool such that the traveling tool travels in one direction, and re-aligns the directions of the plurality of driven wheels by controlling the traveling tool such that the traveling tool travels in a cross direction orthogonal to the one direction; and calculate a maximum static frictional force as the frictional force of the driven wheel based on the driving force when the driving wheel starts to travel by applying the driving force to the driving wheel in the cross direction.

With this configuration, when the driven wheel turns or a load in the axial direction of the driven wheel is applied at the start of travel, excessive calculation of the frictional force can be suppressed. In addition, by setting the value of the frictional force used for the traveling assistance control as the maximum static frictional force, a large load at the start of travel from the stationary state can be reduced.

In the traveling assistance device according to an aspect of the present invention, the controller is configured to: align directions of the plurality of driven wheels by controlling the traveling tool such that the traveling tool travels in one direction, and re-aligns the directions of the plurality of driven wheels by controlling the traveling tool such that the traveling tool travels in a cross direction orthogonal to the one direction; and calculate a kinetic frictional force as the frictional force of the driven wheel based on the driving force in a state where the driving force is applied to the driving wheel in the cross direction such that the driving wheel travels at a constant speed.

With this configuration, even if the driven wheel, oriented in the opposite direction before the start of travel, turns during travel such that a load is applied in the axial direction of the driven wheel, excessive calculation of the frictional force can be suppressed. In addition, by setting the value of the frictional force used for the traveling assistance control as the kinetic frictional force, the load can be reduced by substantially the same amount as the load caused by the frictional force applied during travel.

In the traveling assistance device according to an aspect of the present invention, the driving force acquisition unit includes a load sensor configured to detect the load applied to the connection portion, and the load detected by the load sensor is determined to be the driving force of the traveling assistance device.

In this way, the load applied to the connection portion when the traveling assistance device transports the traveling tool is a force with which the traveling assistance device pushes the traveling tool, and thus can be determined to be the driving force of the traveling assistance device. Accordingly, the load sensor for detecting whether or not the connection state between the traveling assistance device and the traveling tool is normal can also be used as driving force acquisition means.

In the traveling assistance device according to an aspect of the present invention, the connection portion includes a base portion having a square shape in a plan view, the load sensor includes a plurality of load sensors that are mounted in a sensor mounting member having a channel portion where the base portion of the connection portion is accommodated. The plurality of load sensors include a first sensor group that is located with the base portion interposed in the first sensor group in a first direction on a plane crossing an axial direction and is in contact with the base portion to measure a first measured value corresponding to a displacement of the base portion, a second sensor group that is located with the base portion interposed in the second sensor group in a second direction crossing the first direction on the plane and is in contact with the base portion to measure a second measured value corresponding to a displacement of the base portion, and a third sensor group that is in contact with the base portion to measure a third measured value corresponding to a displacement of the base portion in a third direction along the axial direction.

In the connection portion that receives the load from the traveling tool, four side surfaces and a bottom surface are supported through the plurality of sensors mounted in the sensor mounting member, and the first measured value, the second measured value, and the third measured value corresponding to the displacements of the connection portion in the first direction, the second direction, and the third direction are measured by the plurality of load sensors. As a result, for example, the controller 22 can calculate the three-axis loads based on the respective measured values measured by the load sensors. Accordingly, the traveling assistance device can measure the respective measured values for separately calculating the three-axis loads applied from the traveling tool. In addition, in the traveling assistance device, the material of the sensor mounting member to which the load sensor is mounted is not limited.

In the traveling assistance device according to an aspect of the present invention, two load sensors in the first sensor group are provided for each of two side surfaces of the base portion facing each other in the first direction such that each of the load sensors in the first sensor group measures the first measured value to measure the two first measured values, and two load sensors in the second sensor group are provided for each of two side surfaces of the base portion facing each other in the second direction such that each of the load sensors in the second sensor group measures the second measured value to measure the two second measured values.

In the traveling assistance device, when a moment is applied to the connection portion in the rotation direction around the third direction, two load sensors that are diagonally positioned among four load sensors located on the side surfaces of the base portion facing each other are pressed. Accordingly, by arranging the two load sensors on each of the side surfaces of the base portion, for example, the controller can calculate the moment around the third direction based on each of the measured values measured by the load sensors, the distance to the load sensor, and the rotation angle around the third direction. That is, the traveling assistance device can measure the respective measured values for separately calculating the loads of four axes applied from the traveling tool.

In the traveling assistance device according to an aspect of the present invention, the controller is configured to: calculate three-axis loads applied to the connection portion based on the first measured value, the second measured value, and the third measured value; calculate a moment in the third direction applied to the connection portion based on the first measured value, the second measured value, a distance from a predetermined origin point of the connection portion to a contact point between the base portion and the load sensor, and a rotation angle of the connection portion in the third direction; and determine loads in the first direction and the second direction among the calculated three-axis loads and the moment in the third direction to be the driving force of the traveling assistance device.

In the traveling assistance device, the load from the traveling tool is applied to the connection portion in a state where the traveling tool is connected, and the first measured value, the second measured value, and the third measured value corresponding to the displacements of the connection portion that is displaced due to the load applied from the traveling tool are measured. The traveling assistance device can calculate the three-axis loads using the controller based on the respective measured values. In addition, in the traveling assistance device, when a moment is applied to the connection portion in the rotation direction around the third direction, two load sensors that are diagonally positioned among four load sensors located on the side surfaces of the base portion facing each other are pressed. Accordingly, by arranging the two load sensors on each of the side surfaces of the base portion, the traveling assistance device can calculate the moment around the third direction using the controller based on each of the measured values, the distance to the load sensor, and the rotation angle around the third direction. As a result, the traveling assistance device can calculate not only the loads applied in the first direction, the second direction, and the third direction but also the moment around the third direction. The loads applied in the first direction and the second direction are determined to be a translational driving force, the moment around the third direction is determined to be a turning driving force, and the estimated values of the external forces by the operator who operates the traveling tool can be calculated.

In the traveling assistance device according to an aspect of the present invention, the load sensors each includes an outer frame that is a plate body having a rectangular ring shape, a tongue piece as a plate body having a rectangular shape that is linked to one side of an inner peripheral edge of the outer frame and provided on an inner peripheral side of the outer frame, and a protrusion portion that protrudes from one surface of the tongue piece to be in contact with the base portion. Two load sensors supporting the same side surface of the base portion are mounted in the sensor mounting member such that positions of the protrusion portions in the third direction are shifted from each other.

As a result, the positions of the portions that support the side surfaces of the base portion vary in the third direction. Therefore, unintended rotation of the connection portion including the base portion relative to the sensor mounting member can be suppressed.

In the traveling assistance device according to an aspect of the present invention, the connection portion includes a load receiving member including a base portion that has a square shape in a plan view and a connection pin portion that protrudes from an upper surface of the base portion to extend in an axial direction, and an attachment member that is attached to the traveling tool and has a fitting hole into which the connection pin portion is insertable.

In the traveling assistance device, the load receiving member includes the connection pin portion, and the mounting member mounted on the traveling tool has the fitting hole into which the connection pin portion is insertable. Therefore, connection to and separation from the traveling tool can be easily executed.

In the traveling assistance device according to an aspect of the present invention, the connection pin portion includes a first pillar portion having a shape other than a true circle when seen in the axial direction in an upper end portion. The fitting hole communicates with a first hole portion, a second hole portion, and a third hole portion in the order as listed. The first hole portion has an inner wall having a tapered shape of which a size gradually decreases toward the second hole portion,

the second hole portion has an inner wall having a tapered shape of which a size gradually decreases toward the third hole portion and a taper ratio is less than a taper ratio of the first hole portion. The first pillar portion of the connection pin portion is fittable into the third hole portion.

As a result, in the connection portion of the traveling assistance device, when the load receiving member and the mounting member are positioned, the positioning in the two axial directions on the plane crossing the axial direction is achieved by the first hole portion, the positioning in the rotation direction around the axial direction is achieved by the second hole portion, and the positioning in one axial direction is achieved by the fitting using the third hole portion. As a result, the four-axis positioning can be achieved using only one set of the fitting hole and the connection pin portion. In addition, when the load receiving member moves in the direction of the second hole portion relative to the mounting member in the first hole portion, one angular portion of an upper edge of the first pillar portion comes into contact with the inner wall of the first hole portion and is guided by the inner wall to move in a radial center direction. In addition, when the load receiving member moves in the direction of the third hole portion relative to the mounting member in the second hole portion, the angular portion that is positioned in both end portions of a major axis of the first pillar portion is guided to the angular portion of the second hole portion while being in contact with the inner wall of the second hole portion, thereby rotating around an axial center. That is, in the connection portion, by inserting the connection pin portion into the fitting hole in a state where the connection pin portion and the fitting hole face each other, the positioning in the two axial directions on the plane crossing the axial direction, the positioning in the rotation direction around the axial direction, and the positioning in the one axial direction are sequentially achieved. Therefore, the four-axis positioning can be easily achieved.

The traveling assistance device according to an aspect of the present invention further includes: a sliding member that is provided to be movable in one direction relative to the device main body; a lifting mechanism that is connected to the device main body and the load receiving member and lifts up and lowers the load receiving member relative to the device main body with movement of the sliding member; and a linear actuator that moves the sliding member in the one direction relative to the device main body. The load receiving member is configured to lift up from below the attachment member fixed to a lower surface side of the main body portion to hold the traveling tool through the attachment member, and lower to be disconnected from the attachment member and the traveling tool.

As a result, in the traveling assistance device, the traveling assistance device is moved underneath the traveling tool, and the load receiving member is connected to the mounting member mounted on the traveling tool from below. Therefore, it is easy to switch between turning right and left, cornering, traveling forward, and traveling backward, whereby stable traveling can be executed. In addition, when the traveling assistance device is moved underneath the traveling tool before being connected to the traveling tool, a total height of the traveling assistance device 1 can be reduced by lowering the load receiving member. Therefore, it is also possible to support the low-floor traveling tool. In addition, the connection to the mounting member mounted on the traveling tool can be easily released by lowering the load receiving member. Therefore, by previously mounting the plurality of mounting members to the plurality of traveling tools, respectively, the plurality of traveling tools can be sequentially transported.

A traveling assistance control method for assisting traveling of a traveling tool in a traveling assistance device including a driving wheel supported by a device main body and configured to cause the device main body to travel, a speed acquisition unit configured to acquire information on a speed and an angular speed of the device main body, a connection portion connected to the traveling tool including a main body portion and a plurality of driven wheels supported by the main body portion and configured to receive a load applied to the traveling tool, and a driving force acquisition unit configured to acquire a driving force of the driving wheel, includes: a calibration process of calculating a frictional force of the driven wheel based on the driving force in a state where an external force is not applied to the traveling tool; and a finite state machine control process. The finite state machine control process includes a driving control of executing a control such that the driving wheel travels with a driving force against the frictional force, and a stop control of executing a control such that the driving force of the driving wheel is zero. The finite state machine control process transitions from the driving control to the stop control when a first condition is satisfied in the driving control, and transitions from the stop control to the driving control when a second condition is satisfied in the stop control.

This configuration eliminates the need for a dedicated operating unit and can reduce the load caused by the frictional force applied to the traveling tool through the driven wheel, whereby the external force applied to the traveling tool by the operator can be reduced. In addition, the traveling assistance device is connectable to and disconnectable from the existing traveling tool in the connection portion, and is applicable to various traveling tools. In addition, the frictional force applied to the traveling tool on which a transport target is placed is calculated. Therefore, even when transport targets having different weights are loaded each time, the traveling assistance control for applying the driving force against the frictional force corresponding to the weight can be executed. In addition, based on the condition, it is possible to transition to and execute the more suitable control of a control of executing traveling assistance and a control of not executing traveling assistance.

In the traveling assistance control method according to an aspect of the present invention, the first condition includes a condition that the speed of the device main body is lower than a predetermined threshold, and the second condition includes a condition that the speed of the device main body is the predetermined threshold or higher.

With this configuration, depending on the condition based on the speed information acquired from the speed acquisition unit, it is possible to transition to and execute the more suitable control of a control of executing traveling assistance and a control of not executing traveling assistance.

The traveling assistance control method according to an aspect of the present invention further includes an estimation process of calculating an estimated value of the external force applied to the traveling tool based on the driving force and the frictional force. The estimation process and the finite state machine control process are repeatedly executed. In the driving control, a driving force for reducing the external force is calculated based on the external force and a control is executed such that the driving wheel travels with the calculated driving force. In the stop control, a control is executed such that the driving force of the driving wheel is zero.

This configuration eliminates the need for a dedicated operating unit and allows the assistance to be executed such that the traveling tool travels in a direction in which the operator applies the external force, whereby a burden of the operator can be reduced. Even without a dedicated operating unit, the operator can directly operate the traveling tool by holding any portion of the traveling tool with their hand. Therefore, a special training for operating the traveling assistance device is not required, and a precise movement of the traveling tool can be achieved even in a narrow space or a crowded environment. In addition, the frictional force applied to the traveling tool on which a transport target is placed is calculated. Therefore, assuming the frictional force of the traveling tool is the frictional force of the traveling tool including the transport target, the external force by the operator who operates the traveling tool is estimated from the frictional force and the driving force, and a control is executed such that the external force decreases. Therefore, even when transport targets having different weights are loaded each time, the traveling assistance control corresponding to the weight can be executed.

In the traveling assistance control method according to an aspect of the present invention, the finite state machine control process further includes a braking control of setting a brake force calculated by multiplying the speed and the angular speed by a predetermined viscous resistance coefficient as the driving force and executing a control such that the driving wheel travels with the set driving force. The finite state machine control process transitions from the driving control to the braking control when a third condition is satisfied in the driving control, transitions from the braking control to the driving control when a fourth condition is satisfied in the braking control, and transitions from the braking control to the stop control when a fifth condition is satisfied in the braking control.

With this configuration, when the traveling speed and the angular speed are low, vibration can be suppressed, and the brake force can be increased at the time of high-speed traveling. Accordingly, for example, when the traveling tool is about to come into contact with an obstacle, the traveling tool can be decelerated or stopped immediately while reducing the burden on the transport target. In addition, based on the condition, it is possible to transition to and execute the most suitable control of a control of executing traveling assistance, a control of not executing traveling assistance, and a control of applying braking.

In the traveling assistance control method according to an aspect of the present invention, the traveling assistance device further includes an acceleration acquisition unit configured to acquire information on an acceleration of the device main body, the third condition includes a condition that an acceleration applied to the device main body acts in a direction opposite to a traveling direction such that the acceleration is a predetermined threshold or higher, the fourth condition includes a condition that the acceleration applied to the device main body acts in the traveling direction such that the acceleration is the predetermined threshold or higher, and the fifth condition includes a condition that the speed of the device main body is lower than the predetermined threshold.

With this configuration, depending on the condition based on the speed information acquired from the speed acquisition unit, it is possible to transition to and execute the most suitable control or continue a control of a control of restarting traveling assistance, a control of not executing traveling assistance, and a control of continuing braking.

Advantageous Effects of Invention

According to the present invention, it is possible to provide a traveling assistance device that is connectable to and disconnectable from an existing traveling tool and can assist traveling of a traveling tool without requiring a dedicated operating unit, and a traveling assistance control method.

Brief Description of Drawings

FIG. 1 is a perspective view illustrating a state before connection of a traveling assistance device according to an embodiment to a traveling tool.
FIG. 2 is a perspective view illustrating a configuration example of the traveling assistance device according to the embodiment.
FIG. 3 is a plan view illustrating the traveling assistance device illustrated in FIG. 2.
FIG. 4 is a perspective view illustrating a configuration example of a lifting mechanism of the traveling assistance device illustrated in FIG. 2.
FIG. 5 is a perspective view illustrating a lifted state of the lifting mechanism of FIG. 4.
FIG. 6 is a perspective view illustrating a configuration example of a sliding member in the state of FIG. 5.
FIG. 7 is an exploded perspective view illustrating a configuration example of a connection module according to the embodiment.
FIG. 8 is a perspective view illustrating a configuration example of a sensor mounting member of the connection module illustrated in FIG. 7.
FIG. 9 is a perspective view illustrating a state where sensors are mounted in the connection module illustrated in FIG. 7.
FIG. 10 is a perspective view illustrating a configuration example of a load receiving member of the connection module illustrated in FIG. 7.
FIG. 11 is a cross-sectional view illustrating a state where the load receiving member illustrated in FIG. 10 is mounted in the sensor mounting member and the sensor illustrated in FIG. 9.

FIG. 12 is a plan view illustrating a configuration example of a cover member of the connection module illustrated in FIG. 7.

FIG. 13 is a perspective view illustrating a configuration example of an attachment member of the connection module illustrated in FIG. 7.

FIG. 14 is a diagram illustrating an example of a circuit diagram of sensors located facing each other in an X-axis direction or a Y-axis direction.

FIG. 15 is a diagram illustrating an example of a circuit diagram of a sensor located with a protrusion portion facing upward in a Z-axis direction.

FIG. 16 is a side view illustrating a partial cross-section of a state before connection of the traveling assistance device illustrated in FIG. 2 to the traveling tool.

FIG. 17 is a side view illustrating the partial cross-section of the state after the connection of the traveling assistance device illustrated in FIG. 2 to the traveling tool.

FIG. 18 is a diagram illustrating an example of a dynamic model of the traveling tool used for a traveling assistance control process according to the embodiment.

FIG. 19 is a flowchart illustrating a sequence of the traveling assistance control process in the traveling assistance device according to the embodiment.

FIG. 20 is a flowchart illustrating an example of a sequence of a calibration process illustrated in FIG. 19.

FIG. 21 is a flowchart illustrating a detailed example of Step S310 illustrated in FIG. 20.

FIG. 22 is a schematic diagram illustrating an alignment operation of driven wheels of the traveling tool.

FIG. 23 is a flowchart illustrating a detailed example of Step S320 illustrated in FIG. 20.

FIG. 24 is a control block diagram of the traveling assistance device in an estimation process and an FSM control process.

FIG. 25 is a control block diagram of the FSM control process.

Description of Embodiments

An embodiment for carrying out the present invention (embodiment) will be described in detail with reference to the drawings. The present invention is not limited to the contents described in the following embodiment. In addition, components described below can be easily conceived by those skilled in the art, and substantially identical components are also included. Further, the components described below can be appropriately combined.

(Embodiment)

(Configuration of Traveling Assistance Device 1)

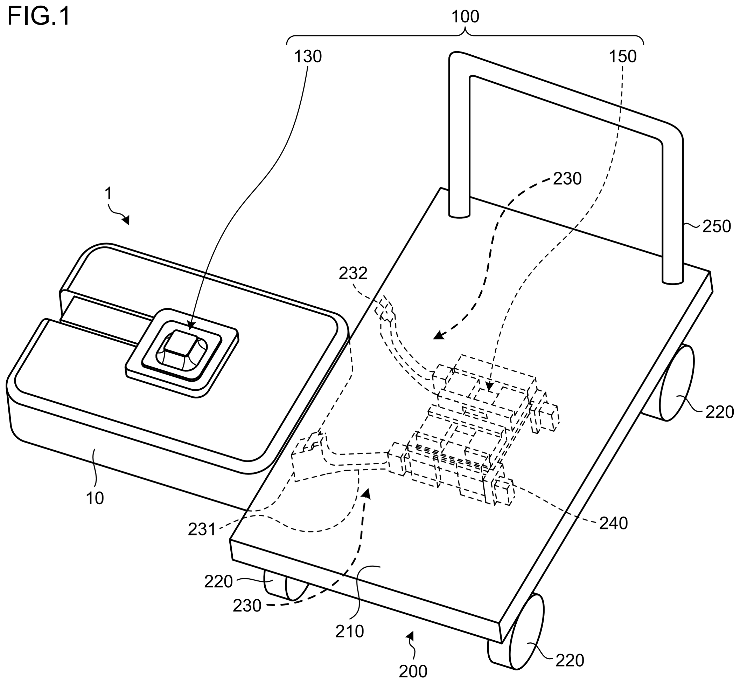

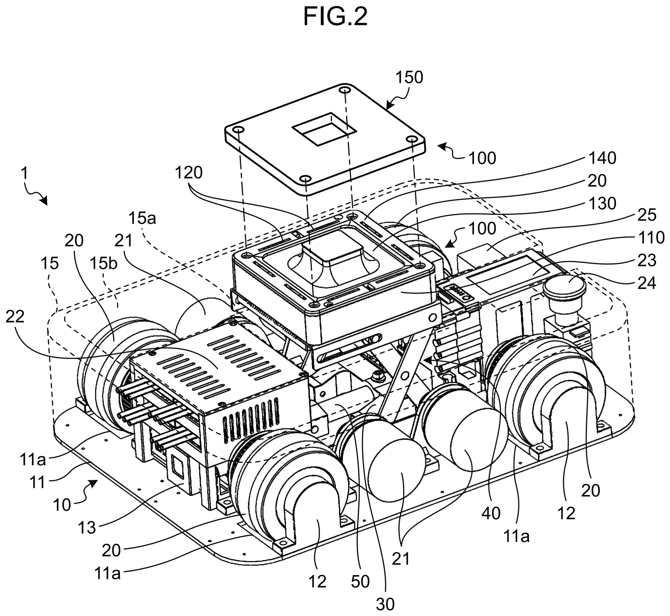

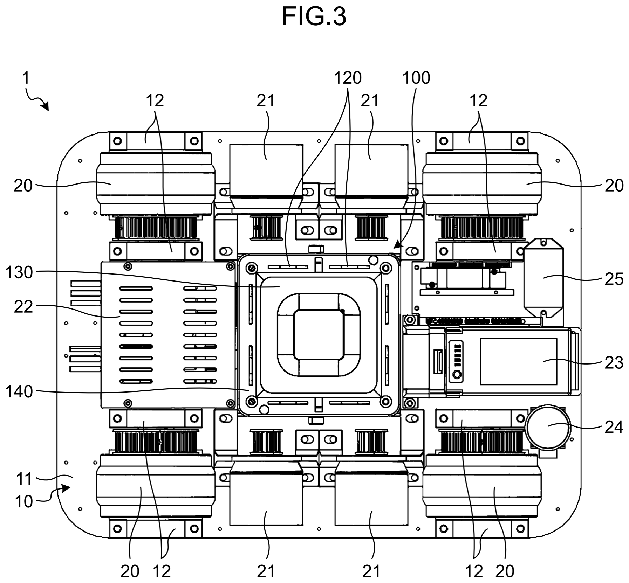

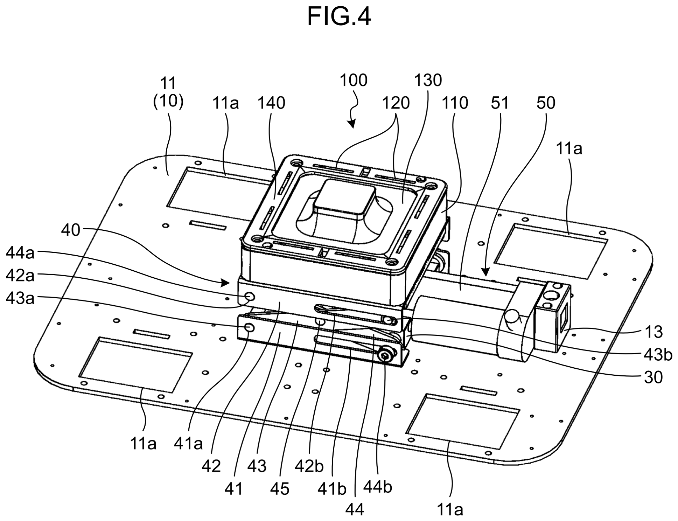

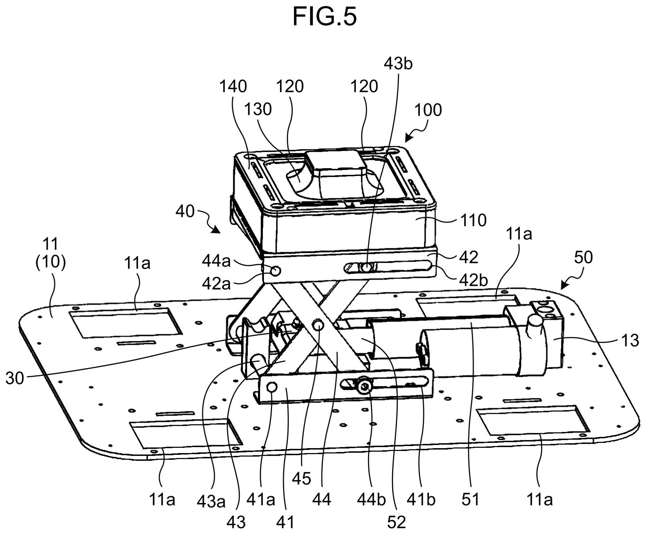

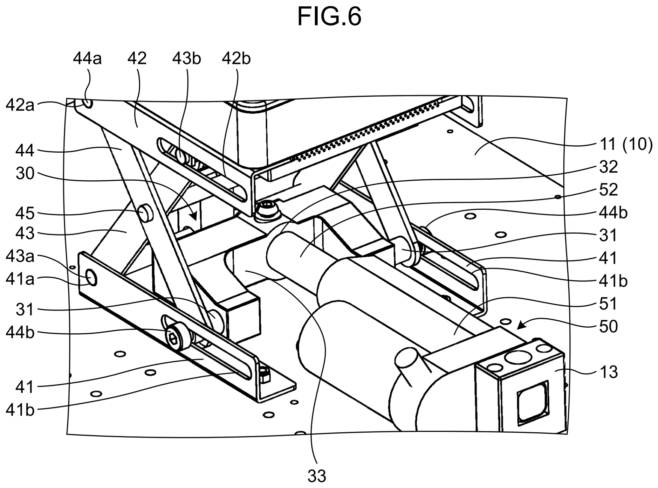

First, a configuration of a traveling assistance device 1 according to the embodiment will be described with reference to FIGS. 1 to 6. FIG. 1 is a perspective view illustrating a state before connection of the traveling assistance device according to the embodiment to a traveling tool. FIG. 2 is a perspective view illustrating a configuration example of the traveling assistance device 1 according to the embodiment. FIG. 3 is a plan view illustrating the traveling assistance device 1 illustrated in FIG. 2. FIG. 4 is a perspective view illustrating a configuration example of a lifting mechanism 40 of the traveling assistance device 1 illustrated in FIG. 2. FIG. 5 is a perspective view illustrating a lifted state of the lifting mechanism 40 of FIG. 4. FIG. 6 is a perspective view illustrating a configuration example of a sliding member 30 in the state of FIG. 5. In these diagrams, components other than the components according to the present invention are appropriately omitted. In addition, in the following description, a horizontal longitudinal direction (horizontal direction of FIG. 3) of the traveling assistance device 1 will be referred to as a "front-back direction", and a transverse direction thereof (vertical direction of FIG. 3) will be referred to as a "width direction".

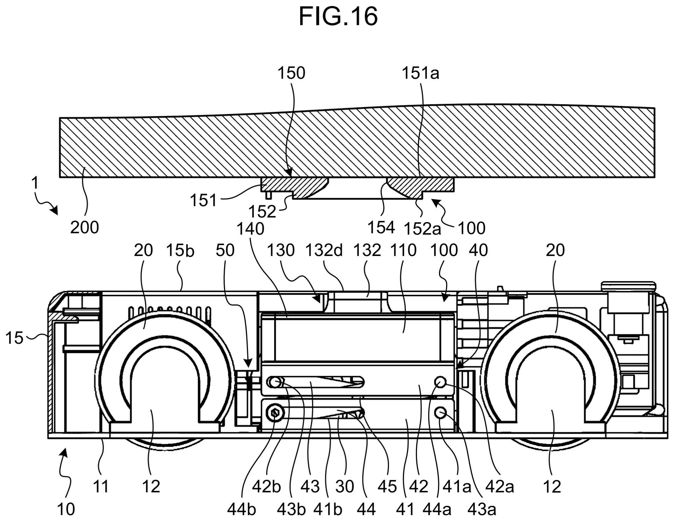

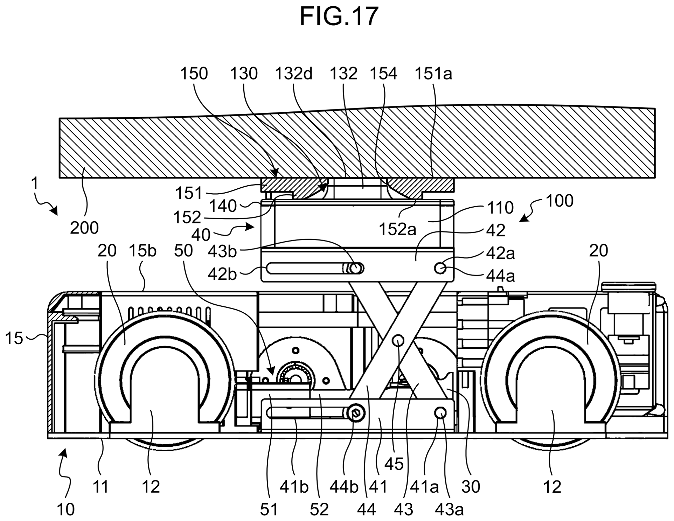

The traveling assistance device 1 is moved underneath a traveling tool 200 (refer to FIGS. 16 and 17) and is connected to the traveling tool 200 from below to assist traveling of the traveling tool 200. As illustrated in FIG. 1, the traveling tool 200 includes a main body portion 210 on which the transport target is to be placed, a plurality of driven wheels 220 (universal wheels) that can move the main body portion 210 in the horizontal direction while maintaining the main body portion 210 in a horizontal attitude when an external force including a horizontal direction component is applied, an attachment member 150 described below that is fixed to a center portion of the main body portion 210, a guide member 230, a stopper 240, and a handle 250 to be used by an operator to operate the traveling tool 200. The traveling tool 200 has a gap where the traveling assistance device 1 is moved underneath the main body portion 210. The guide member 230 includes a first arm 231 and a second arm 232 that is provided parallel to the first arm 231. The traveling tool 200 is, for example, a trolley, a transporting cart, a moving bed, or a stretcher. The second arm 232 extends in one direction toward the outside of the main body portion 210 without crossing the first arm 231.

The first arm 231 and the second arm 232 are provided facing each other with the attachment member 150 interposed therebetween, and a rear end side of each of the first arm 231 and the second arm 232 is fixed to a position of the attachment member 150 perpendicular to a traveling direction of the traveling tool 200. Front end sides of the first arm 231 and the second arm 232 extend outward in an arch shape. The first arm 231 and the second arm 232 have a structure in which the spacing therebetween is smallest at a connection position below the traveling tool 200.

The first arm 231 and the second arm 232 protrude from the attachment member 150. Therefore, as described below, when a connection module 100 is moved underneath the traveling tool 200 before being connected to the traveling tool 200, a space between the connection module 100 and the attachment member 150 is provided. The connection module 100 is moved between the first arm 231 and the second arm 232, and the first arm 231 and the second arm 232 guide a position of the traveling assistance device 1 relative to the traveling tool 200 to the connection position below the traveling tool 200.

The stopper 240 is provided at both end sides of the attachment member 150 at positions opposite to positions where the first arm 231 and the second arm 232 are provided. The width between the stoppers 240 is narrower than the width of the connection module 100. In a state where the connection module 100 is immediately below the attachment member 150, the stoppers 240 abut against the connection module 100 to stop the traveling assistance device 1, whereby the connection module 100 can be connected to the traveling tool 200. When the connection module 100 is moved underneath the attachment member 150 before being connected to the traveling tool 200, and the position of the traveling assistance device 1 relative to the traveling tool 200 deviates from the connection position, the stopper 240 located at a center portion of the traveling tool 200 on the lower surface side of a device main body 10 can abut against a side surface of the connection module 100 on the front side to stop the traveling assistance device 1. As a result, the stopper 240 can prevent the connection module 100 from overpassing the lower side of the attachment member 150.

As illustrated in FIG. 2, the traveling assistance device 1 according to the embodiment includes the device main body 10, four driving wheels 20, the sliding member 30, the lifting mechanism 40, a linear actuator 50, and the connection module 100.

The device main body 10 supports the main components of the traveling assistance device 1 such as the driving wheels 20, the sliding member 30, the lifting mechanism 40, and the linear actuator 50 on a plate-like base 11 in a horizontal attitude. In the base 11, an opening 11a for a driving wheel is formed for each of the driving wheels 20 such that a part of the driving wheel 20 is exposed to a region below the base 11. In addition, the base 11 includes four sets of driving wheel support portions 12, an actuator support portion 13 that fixes a fixed portion 51 (refer to FIG. 4 or the like) of the linear actuator 50 to the base 11, and various support members of other components that are provided on the base 11, wherein each set of the driving wheel support portions 12 consists of two driving wheel support portions 12, that is, eight in total, and supports a rotating shaft of the corresponding driving wheel 20.

In addition, the device main body 10 includes a cover member 15 that covers the lateral side and the upper side of the components provided on the base 11. The cover member 15 includes an opening 15a for a lifting mechanism. The opening 15a for a lifting mechanism is provided in a center portion of an upper surface 15b of the cover member 15. The connection module 100 described below moves up and down to protrude from and retract into the opening 15a for a lifting mechanism. In the traveling assistance device 1 according to the embodiment, a height from a contact surface, which is in contact with a traveling surface of the driving wheels 20, to the upper surface 15b of the cover member 15 is 125 mm. The base 11 and the cover member 15 of the device main body 10 form a housing having a substantially rectangular parallelepiped shape.

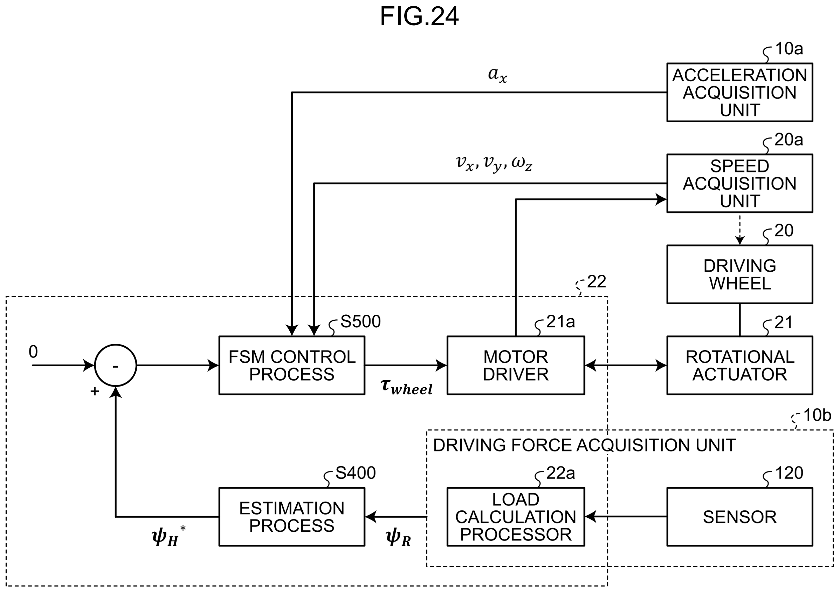

In addition, an acceleration acquisition unit 10a (refer to FIG. 24) that acquires an acceleration a of the device main body 10 is mounted on the device main body 10. The acceleration acquisition unit 10a is fixed to, for example, the base 11 or the cover member 15. The acceleration acquisition unit 10a includes, for example, an inertial measurement unit (IMU). The acceleration acquisition unit 10a may include, for example, an acceleration sensor and an angular acceleration sensor (gyro sensor) separately. The acceleration acquisition unit 10a can acquire the acceleration "a" separately for each component in a direction in which an acceleration is applied, for example, an acceleration $a_x$ in an X-axis direction. The acceleration acquisition unit 10a outputs the information on the acquired acceleration "a" to a controller 22 described below.

In the embodiment, the four driving wheels 20 in total are provided in the front, rear, left, and right portions of the device main body 10. In the embodiment, the driving wheel 20 is a mecanum wheel that is omnidirectionally movable, but may be, for example, an omni wheel. Each of the driving wheels 20 is provided to be rotatable around the rotating shaft by the driving wheel support portion 12 fixed to the base 11. In the embodiment, each set of driving wheel support portions 12 includes two support members that are located to face each other with one driving wheel 20 interposed therebetween. The support members support both end portions of the rotating shaft of one driving wheel 20.

A rotational driving force is transmitted from a rotational actuator 21 to the driving wheel 20. The rotational actuator 21 includes four rotational actuators 21 that drive the driving wheels 20, respectively. The rotational actuator 21 includes, for example, a brush-less direct-current motor (BLDC). In the embodiment, the rotational actuator 21 includes a position detector such as a rotary encoder or a Hall sensor for estimating a speed by odometry. In the embodiment, the rotational actuator 21 is located adjacent to the driving wheel 20 such that an output shaft is parallel to the rotating shaft of the driving wheel 20 in a space between the driving wheels 20 located in the front and rear portions, and transmits a torque to the driving wheel 20 through a pulley, a belt, and the like.

The rotational actuator 21 is controlled by a motor driver 21a (refer to FIG. 24). The motor driver 21a is provided in, for example, the controller 22 that controls each component of the traveling assistance device 1. The motor driver 21a acquires information on a rotating speed from the rotational actuator 21. The motor driver 21a according to the embodiment outputs the information on the rotating speed to a speed acquisition unit 20a (refer to FIG. 24). The speed acquisition unit 20a acquires converted values of a speed v and an angular speed ω of the entire traveling assistance device 1 based on the rotating speeds of the four driving wheels 20. In the embodiment, the speed acquisition unit 20a acquires the information on the rotating speed from each of the motor drivers 21a that control the respective rotational actuators 21, and includes an arithmetic processing device that calculates the speed v and the angular speed ω of the entire traveling assistance device 1 based on the acquired rotating speed. The speed acquisition unit 20a can acquire separately a speed $v_x$ in the X-axis direction and a speed $v_y$ in a Y-axis direction, as components of the speed v. The speed acquisition unit 20a outputs the acquired information on the speeds $v_x$ and $v_y$ and an angular speed $\omega_z$ to the controller 22 described below.

In addition, the traveling assistance device 1 includes a driving force acquisition unit 10b that acquires the values of driving forces (driving forces $\psi_R$ in Mathematical Expression (10) and the like described below) for making the traveling assistance device 1 to travel. In the embodiment, the driving force acquisition unit 10b includes a sensor 120 described below and a load calculation processor 22a that is a part of the controller 22 described below.

The controller 22 includes hardware resources, for example, an arithmetic processing unit including a microprocessor such as a central processing unit (CPU), a memory such as a read only memory (ROM) or a random access memory (RAM), a storage, and an input/output interface device. A function of the controller 22 is achieved by the arithmetic processing unit executing a predetermined program stored in the storage.

In addition, the controller 22 drives a driving source of the linear actuator 50 described below, for example, by executing a predetermined program. In addition, the controller 22 includes the load calculation processor 22a. For example, by executing a predetermined program, the load calculation processor 22a calculates three-axis loads $F_x$, $F_y$, and $F_z$ and a moment $M_z$ around a Z-axis applied to a load receiving member 130 described below based on measured values of the sensor 120 described below. In addition, in the embodiment, the controller 22 acquires the acceleration $a_x$ in the X-axis direction of the entire traveling assistance device 1 acquired by the acceleration acquisition unit 10a. In addition, in the embodiment, the controller 22 acquires, from the speed acquisition unit 20a, the speed $v_x$ and $v_y$ and the angular speed $\omega_z$ of the entire traveling assistance device 1 calculated based on the rotating speed acquired from the rotational actuator 21 by the speed acquisition unit 20a. The controller 22 outputs control signals that cause the respective components to execute various functions based on the calculation results by the arithmetic processing unit, and outputs the calculation results to the outside.

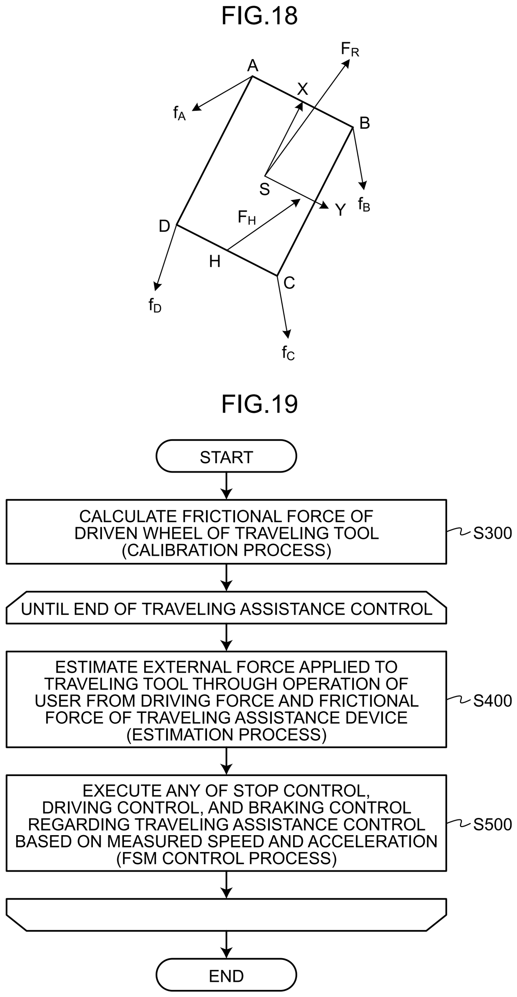

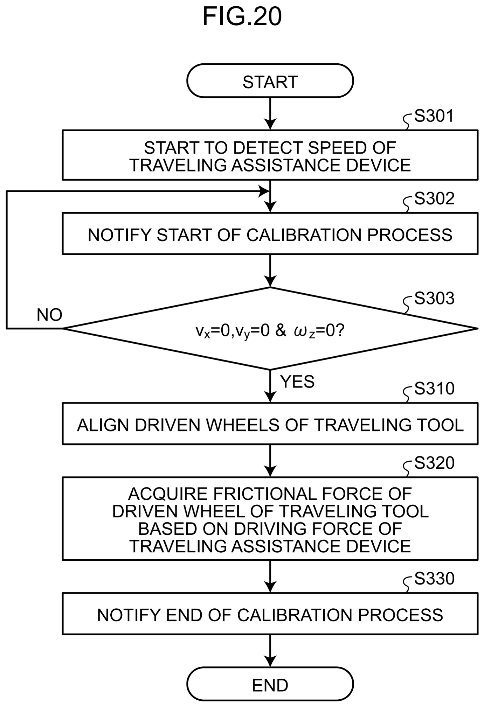

In addition, the controller 22 executes a traveling assistance control process illustrated in FIG. 19 and the like described below. In addition, in a calibration process S300 (refer to FIGS. 19 and 20) described below, the device main body 10 may include a notification part for notifying start and end of the calibration process S300 to an operator of the traveling tool 200 and the surroundings. The notification part may include a speaker, a light emitting device, or the like that outputs a predetermined voice, an alarm sound, light, or the like according to a predetermined calculation result by the controller 22.

In the embodiment, the controller 22 is located above the fixed portion 51 of the linear actuator 50 described below on one end portion side of the device main body 10 in the front-back direction. For example, four motor drivers 21a (refer to FIG. 24) are located. In addition, the controller 22 including the rotational actuators 21 and the motor drivers 21a is driven when power is supplied from a battery 23. The battery 23 is located on the other end portion side of the device main body 10 in the front-back direction. Further, in the device main body 10, an emergency stop button 24 and a relay switch 25 are provided. In the traveling assistance device 1, when the emergency stop button 24 is pressed by the operator, the relay switch 25 turns off a main power supply to stop the power supply from the battery 23.

The sliding member 30 is provided to be movable in the front-back direction relative to the base 11 of the device main body 10. For example, the sliding member 30 may be provided to be movable along a guide rail provided parallel to the front-back direction in a horizontal attitude. The sliding member 30 includes a pair of guide shaft portions 31 and a fixed portion 32.

Each of the guide shaft portions 31 is a shaft member that extends in the width direction of the device main body 10. The guide shaft portion 31 is provided coaxially and integrally with a slide shaft member 44b inserted into one of a pair of guide holes 41b of the lifting mechanism 40 described below, but is fixed to the slide shaft member 44b or is provided to double as the slide shaft member 44b. The sliding member 30 is movable in the front-back direction relative to the base 11 in a range where the guide shaft portion 31 and the slide shaft member 44b are movable in the guide hole 41b.

A movable portion 52 of the linear actuator 50 described below is fixed to the fixed portion 32. When the linear actuator 50 is driven to expand and contract, the sliding member 30 moves in the front-back direction relative to the base 11 together with the movable portion 52.

In the embodiment, the sliding member 30 is formed in a U-shape in a plan view, so that the fixed portion 32 fixed to the linear actuator 50 is a recessed portion 33. That is, the sliding member 30 has a shape having an end portion in a direction in which the linear actuator 50 contracts, and the end portion is bifurcated relative to the fixed portion 32. The guide shaft portion 31 is provided in each of the bifurcated end portions. In the sliding member 30, the recessed portion 33 is provided in a direction in which the linear actuator 50 expands, relative to the guide shaft portion 31. That is, the sliding member 30 is formed such that a connection portion between the sliding member 30 and the movable portion 52 of the linear actuator 50 is positioned in the direction in which the linear actuator 50 expands, relative to a connection portion between the sliding member 30 and the lifting mechanism 40.

In the embodiment, the lifting mechanism 40 includes a scissors link mechanism including an X-shaped link. The lifting mechanism 40 connects the base 11 of the device main body 10 and the connection module 100 described below to each other and supports the connection module 100 such that the connection module 100 can move vertically while maintaining its horizontal attitude. The lifting mechanism 40 lifts up and lowers the connection module 100 relative to the device main body 10 with the movement of the sliding member 30 in the front-back direction. The lifting mechanism 40 according to the embodiment includes a base fixing portion 41, a connection mechanism fixing portion 42, a first link arm 43, a second link arm 44, and a center shaft member 45.

The base fixing portion 41 is fixed to the base 11 of the device main body 10. In the embodiment, the base fixing portion 41 includes a pair of support frames having an L-shape in cross-section that extends in the front-back direction. In the base fixing portion 41, an L-shaped bottom portion is fixed to the base 11. The base fixing portion 41 includes a shaft hole 41a and the guide hole 41b in a flange portion that is bent upward from one end side of the L-shaped bottom portion in the width direction.

The shaft hole 41a is a round hole that is provided in an end portion of the base fixing portion 41 in the direction in which the linear actuator 50 expands, the base fixing portion 41 extending in the front-back direction. The shaft hole 41a is provided in a horizontal attitude in a penetrating manner in the width direction of the device main body 10. A rotating shaft member 43a that is provided on a lower end side of the first link arm 43 is inserted into the shaft hole 41a.

The guide hole 41b formed in the base fixing portion 41 extending in the front-back direction is a long hole that is provided from the center of the base fixing portion 41 to an end portion of the base fixing portion 41 on the side where the linear actuator 50 contracts. The guide hole 41b is provided in a horizontal attitude in a penetrating manner in the width direction of the device main body 10. The slide shaft member 44b that is provided on a lower end side of the second link arm 44 is inserted into the guide hole 41b.

The connection mechanism fixing portion 42 is fixed to a sensor mounting member 110 that is positioned at a lower end of the connection module 100 described below. In the embodiment, the connection mechanism fixing portion 42 includes a pair of support frames having an inverted L-shape in cross-section that extends in the front-back direction. In the connection mechanism fixing portion 42, an inverted L-shaped top portion is fixed to the sensor mounting member 110. The connection mechanism fixing portion 42 includes a shaft hole 42a and a guide hole 42b in a flange portion that is bent downward from one end side of the inverted L-shaped top portion in the width direction.

The shaft hole 42a is a round hole that is provided in an end portion of the connection mechanism fixing portion 42 in the direction in which the linear actuator 50 expands, the connection mechanism fixing portion 42 extending in the front-back direction. The shaft hole 42a is provided in a horizontal attitude in a penetrating manner in the width direction of the device main body 10. A rotating shaft member 44a that is provided on an upper end side of the second link arm 44 is inserted into the shaft hole 42a.

The guide hole 42b formed in the connection mechanism fixing portion 42 extending in the front-back direction is a long hole that is provided from the center of the connection mechanism fixing portion 42 to an end portion of the connection mechanism fixing portion 42 on the side where the linear actuator 50 contracts. The guide hole 42b is provided in a horizontal attitude in a penetrating manner in the width direction of the device main body 10. A slide shaft member 43b that is provided on an upper end side of the first link arm 43 is inserted into the guide hole 42b.

The first link arm 43 links the base fixing portion 41 and the connection mechanism fixing portion 42. The first link arm 43 is supported by relative to the base fixing portion 41 through the rotating shaft member 43a provided in a lower end portion in the longitudinal direction such that the first link arm 43 can rotate around a shaft parallel to the width direction of the device main body 10. The rotating shaft member 43a is inserted into the shaft hole 41a provided in the base fixing portion 41. The rotating shaft member 43a is, for example, a pin member.

The first link arm 43 is supported by the connection mechanism fixing portion 42 through the slide shaft member 43b provided in an upper end portion in the longitudinal direction such that the first link arm 43 can slide in the front-back direction of the device main body 10 and rotatable around a shaft parallel to the width direction of the device main body 10. The slide shaft member 43b is inserted into the guide hole 42b provided in the connection mechanism fixing portion 42. The slide shaft member 43b is, for example, a pin member.

The second link arm 44 links the base fixing portion 41 and the connection mechanism fixing portion 42. The second link arm 44 is supported by the connection mechanism fixing portion 42 through the rotating shaft member 44a provided in an upper end portion in the longitudinal direction such that the second link arm 44 can rotate around a shaft parallel to the width direction of the device main body 10. The rotating shaft member 44a is inserted into the shaft hole 42a provided in the connection mechanism fixing portion 42. The rotating shaft member 44a is, for example, a pin member.

The second link arm 44 is supported by the base fixing portion 41 through the slide shaft member 44b provided in a lower end portion in the longitudinal direction such that the second link arm 44 can slide in the front-back direction of the device main body 10 and rotatable around a shaft parallel to the width direction of the device main body 10. The slide shaft member 44b is inserted into the guide hole 42b provided in the base fixing portion 41. The slide shaft member 44b is fixed to the guide shaft portion 31 to be coaxial with the guide shaft portions 31 of the sliding member 30. The slide shaft member 44b is, for example, a bolt.

The center shaft member 45 rotatably links the center portions of the first link arm 43 and the second link arm 44 in the longitudinal direction to each other. The center shaft member 45 is, for example, a pin member.

The linear actuator 50 is a single-axis actuator that expands and contracts in the front-back direction of the device main body 10. For example, when the control device (controller 22) mounted on the device main body 10 drives the driving source, the linear actuator 50 expands and contracts with a driving force of the driving source. The linear actuator 50 includes the fixed portion 51 and the movable portion 52.

In the embodiment, the fixed portion 51 is a cylindrical housing and a shaft center thereof is in a horizontal attitude and parallel to the front-back direction of the device main body 10. In the fixed portion 51, an opening is formed in one end portion in the longitudinal direction, and a part of the movable portion 52 is accommodated therein. The other end portion of the fixed portion 51 in the longitudinal direction is fixed to the actuator support portion 13 provided in the base 11 of the device main body 10.

In the embodiment, the movable portion 52 is a shaft and a shaft center thereof is in a horizontal attitude and parallel to the front-back direction of the device main body 10. In the movable portion 52, a part on one end portion side in the longitudinal direction is accommodated in the fixed portion 51. The other end portion of the movable portion 52 in the longitudinal direction is fixed to the fixed portion 32 of the sliding member 30.

The movable portion 52 is linearly movable in the front-back direction relative to the fixed portion 51 and the device main body 10. When the linear actuator 50 expands and contracts, the movable portion 52 linearly moves in the front-back direction relative to the fixed portion 51 and the device main body 10. When the movable portion 52 linearly moves in the front-back direction, the linear actuator 50 linearly moves the sliding member 30 in the front-back direction.

(Configuration of Connection Module 100)

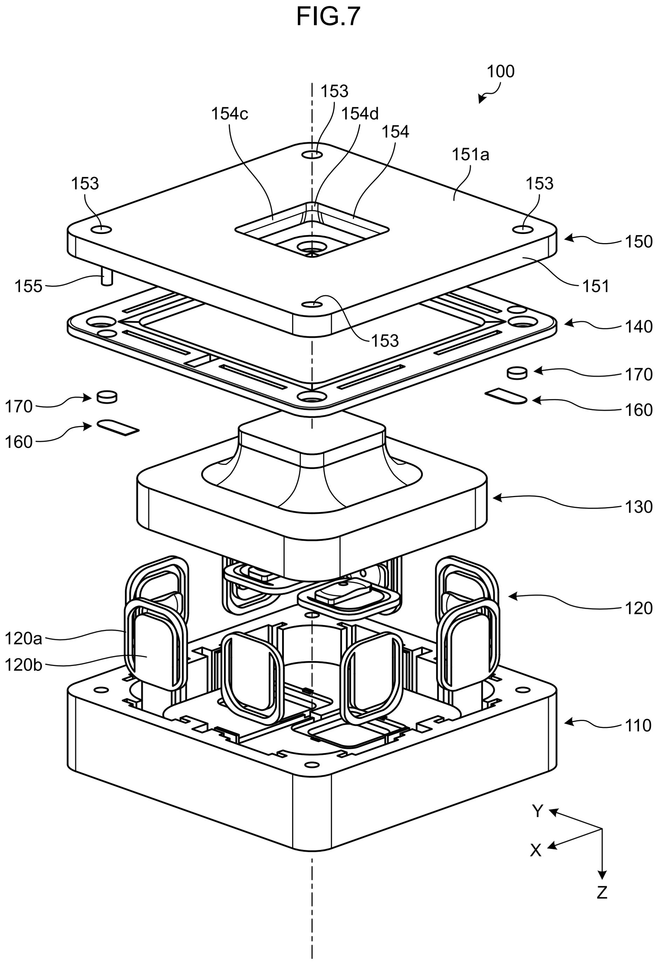

Next, the configuration of the connection module 100 according to the embodiment will be described with reference to FIGS. 7 to 13. FIG. 7 is an exploded perspective view illustrating a configuration example of the connection module 100 according to the embodiment. In the following description, one horizontal direction is referred to as the X-axis direction, a horizontal cross direction orthogonal to the X-axis direction is referred to as the Y-axis direction, and a vertical direction orthogonal to the X-axis direction and the Y-axis direction is referred to as the Z-axis direction. In addition, a rotation direction around the Z-axis is referred to as a θ rotation direction.

The connection module 100 separately measures loads on the connection module 100 in the X-axis direction, in the Y-axis direction, in the Z-axis direction, and around the Z-axis. The connection module 100 according to the embodiment further measures a moment around the Z-axis. In addition, the connection module 100 according to the embodiment has a function as a connection mechanism that connects the device main body 10 side of the traveling assistance device 1 and the traveling tool 200 (refer to FIGS. 16 and 17) to each other.

In the embodiment, the connection module 100 includes the sensor mounting member 110, a plurality of sensors 120, the load receiving member 130, a cover member 140, the attachment member 150, a pressure sensor 160, and a buffer member 170. In the connection module 100, the sensor mounting member 110, the plurality of sensors 120, the load receiving member 130, the cover member 140, the pressure sensor 160, and the buffer member 170 are separable from the attachment member 150. The sensor mounting member 110, the plurality of sensors 120, the load receiving member 130, and the cover member 140 are lifted up and lowered by the lifting mechanism 40 with the movement of the sliding member 30 in the front-back direction.

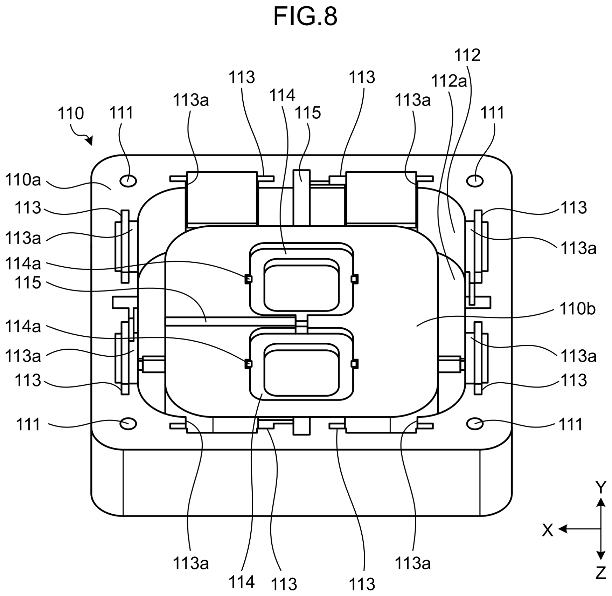

FIG. 8 is a perspective view illustrating a configuration example of the sensor mounting member 110 of the connection module 100 illustrated in FIG. 7. In the embodiment, the sensor mounting member 110 is formed in a substantially square pillar shape having a square shape with rounded corners in a plan view. The sensor mounting member 110 is a portion serving as a base portion of the connection module 100 and is fixed to the connection mechanism fixing portion 42 of the lifting mechanism 40. The sensor mounting member 110 is mounted, for example, in a state where its bottom surface and its side surface are supported by the connection mechanism fixing portion 42. The sensor mounting member 110 lifts up and lowers relative to the device main body 10 through the lifting mechanism 40 with the movement of the sliding member 30 in the front-back direction. In the sensor mounting member 110, a plurality of cover fixing screw holes 111, a pin leg accommodating channel portion 112, eight sensor mounting slits 113, two sensor mounting recessed portions 114, and a wiring hole 115 are formed.

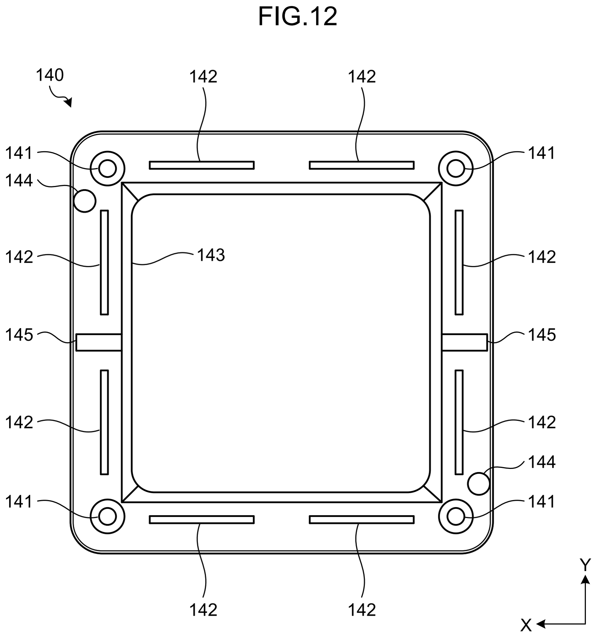

The cover fixing screw hole 111 is a hole into which a screw is inserted, wherein the screw is a screw for fixing the cover member 140, illustrated in FIG. 7 and FIG. 12 described below, to an upper surface 110a side of the sensor mounting member 110. The cover fixing screw hole 111 is formed downward in the Z-axis direction from the upper surface 110a side of the sensor mounting member 110. In the embodiment, four cover fixing screw holes 111 are provided. The four cover fixing screw holes 111 are formed at positions in the vicinity of four corners of the sensor mounting member 110 in a plan view.

The pin leg accommodating channel portion 112 is a channel for accommodating a leg portion 135 of the load receiving member 130 described below. The pin leg accommodating channel portion 112 is provided in a rectangular ring shape in a plan view to be recessed downward from the upper surface 110a of the sensor mounting member 110. In the sensor mounting member 110, in a plan view, a portion on the inner side of the inner periphery of the pin leg accommodating channel portion 112 is formed to be lower than the height of the upper surface 110a of the sensor mounting member 110 in the Z-axis direction.

The eight sensor mounting slits 113 are holes into which the respective sensors 120 described below are inserted and mounted. Each of the sensor mounting slits 113 has an elongated opening portion in the upper surface 110a of the sensor mounting member 110, and is formed downward in the Z-axis direction from the upper surface 110a side. In a plan view, the sensor mounting slit 113 is formed along the longitudinal direction of the elongated opening portion in the outer periphery of the pin leg accommodating channel portion 112 between the outer periphery of the sensor mounting member 110 and the outer periphery of the pin leg accommodating channel portion 112. In each of the sensor mounting slits 113, an opening 113a for a sensor is formed on the pin leg accommodating channel portion 112 side such that a detection portion of the sensor 120 is exposed in a state facing the pin leg accommodating channel portion 112 side.

The eight sensor mounting slits 113 are formed such that the sensors 120 mounted on the vicinity of the outer periphery of the pin leg accommodating channel portion 112 are uniformly located. That is, the eight sensor mounting slits 113 are formed to be line-symmetric in the X-axis direction, line-symmetric in the Y-axis direction, and point-symmetric around the Z-axis at 90° with respect to the center of the sensor mounting member 110 and to have the same height in the Z-axis direction. Specifically, two sensor mounting slits 113 are formed in the vicinity of each of the four sides of the outer periphery of the pin leg accommodating channel portion 112.

The two sensor mounting recessed portions 114 are recessed portions to which the sensors 120 described below are mounted. Each of the sensor mounting recessed portions 114 is formed in a recessed shape to be downward from an upper surface 110b of the portion of the sensor mounting member 110 on the inner side of the inner periphery of the pin leg accommodating channel portion 112. In each of the sensor mounting recessed portions 114, a claw portion 114a for fixing the sensor 120 to the sensor mounting recessed portion 114 in a state where the detection portion of the sensor 120 faces upward is formed. The claw portion 114a protrudes inward in a plan view from an edge of the sensor mounting recessed portion 114, and is formed to cover a part of the upper surface side of the sensor 120.

The two sensor mounting recessed portions 114 are formed such that the sensors 120 that are mounted are uniformly located. That is, the two sensor mounting recessed portions 114 are formed to be line-symmetric in the X-axis direction and line-symmetric in the Y-axis direction with respect to the center of the sensor mounting member 110 and to have the same height in the Z-axis direction. Specifically, the two sensor mounting recessed portions 114 are formed in parallel in the Y-axis direction.

The wiring hole 115 is a recessed channel and a hole through which a wiring connected to the sensor 120 passes. The wiring that is connected to the sensor 120 mounted in the sensor mounting slit 113 passes through a recessed channel that is formed from the sensor mounting slit 113 along an inner wall on the outer peripheral side of the pin leg accommodating channel portion 112, and extends to a bottom surface 112a of the pin leg accommodating channel portion 112.

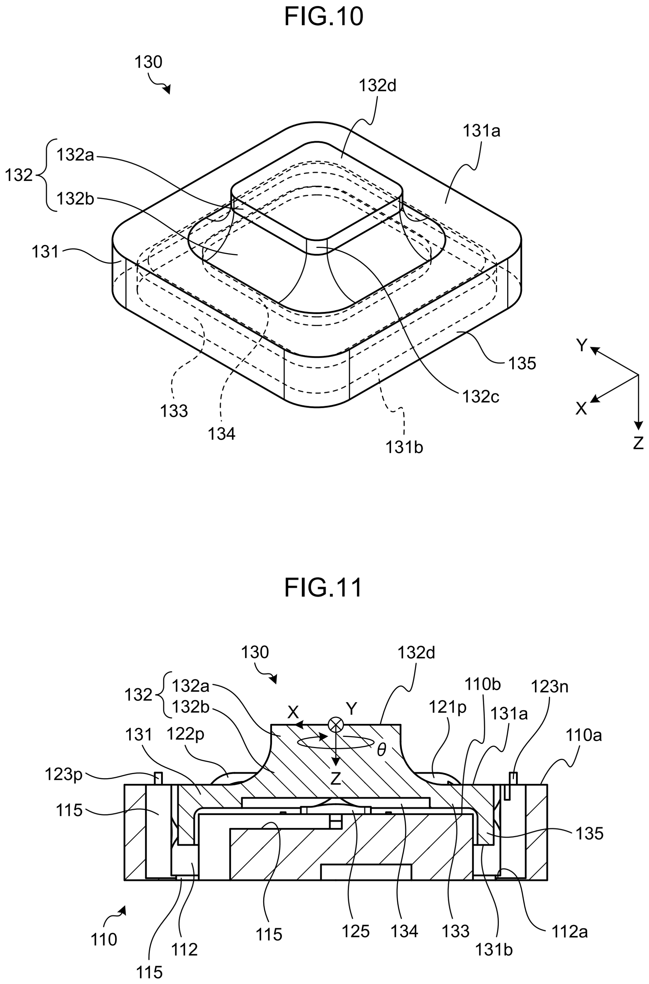

In addition, the wiring that is connected to the sensor 120 mounted in the sensor mounting recessed portion 114 passes through a recessed channel that is formed from the sensor mounting recessed portion 114 along the upper surface 110b of the portion on the inner side of the inner periphery of the pin leg accommodating channel portion 112 and the inner wall of the inner peripheral side of the pin leg accommodating channel portion 112, and extends to the bottom surface 112a of the pin leg accommodating channel portion 112. Each of the wirings is wired to be routed through a gap (refer to FIG. 11 described below) between the bottom surface 112a of the pin leg accommodating channel portion 112 and a lower surface 131b of the leg portion 135 of the load receiving member 130, and is connected to another element positioned outside the connection module 100 through a hole formed in the bottom surface 112a of the pin leg accommodating channel portion 112.

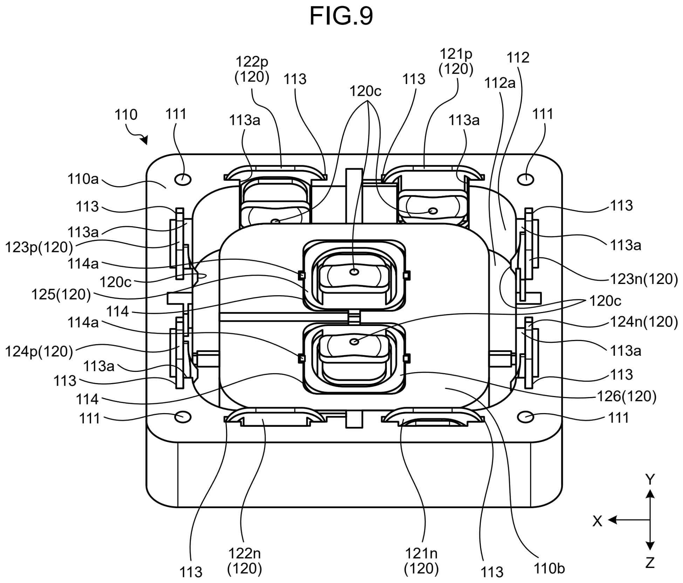

FIG. 9 is a perspective view illustrating a state where the sensors 120 are mounted in the connection module 100 illustrated in FIG. 7. In the embodiment, the sensors 120 include a strain gauge type load cell that detects a load. Each sensor 120 (load cell) includes two strain gauges. Each of the sensors 120 includes an outer frame 120a and a tongue piece 120b (refer to FIG. 7).

The outer frame 120a is a plate body having a rectangular ring shape. The tongue piece 120b is a plate body having a rectangular shape that is provided on the inner peripheral side of the outer frame 120a. One side of the tongue piece 120b is linked to one side of the inner peripheral edge of the outer frame 120a, and the tongue piece 120b is provided integrally with the outer frame 120a. One strain gauge is provided on each of both surfaces of the tongue piece 120b. In addition, a protrusion portion 120c in contact with the load receiving member 130 described below is formed at the center of one surface of the tongue piece 120b. The tongue piece 120b swings with respect to a link portion linked to the outer frame 120a by being pressed through the protrusion portion 120c. Based on the strain at this time, the sensor 120 detects a load applied in a direction perpendicular to the surface.

The plurality of sensors 120 include a first sensor group, a second sensor group, and a third sensor group. The first sensor group supports a base portion 131 of the load receiving member 130 interposed therein in one horizontal direction (for example, the Y-axis direction). The second sensor group supports the base portion 131 of the load receiving member 130 interposed therein in a cross direction orthogonal to the one horizontal direction (for example, the X-axis direction). The third sensor group supports the base portion 131 of the load receiving member 130 from below in a vertical direction (Z-axis direction) orthogonal to the one direction and the cross direction.

In the embodiment, the first sensor group includes four load cells including a first positive sensor 121p, a second positive sensor 122p, a first negative sensor 121n, and a second negative sensor 122n. In the embodiment, the second sensor group includes four load cells including a third positive sensor 123p, a fourth positive sensor 124p, a third negative sensor 123n, and a fourth negative sensor 124n. In the embodiment, the third sensor group includes two load cells including a fifth sensor 125 and a sixth sensor 126. That is, the plurality of sensors 120 according to the embodiment include ten load cells in total. In the following description, when it is not particularly necessary to distinguish between the sensors, the sensors will be simply referred to as the sensors 120.

The first positive sensor 121p, the first negative sensor 121n, the second positive sensor 122p, the second negative sensor 122n, the third positive sensor 123p, the third negative sensor 123n, the fourth positive sensor 124p, and the fourth negative sensor 124n are made to stand such that each of the protrusion portions 120c is directed to the opening 113a for a sensor, and are inserted and mounted into the sensor mounting slits 113 of the sensor mounting member 110. In the sensor 120 mounted in the sensor mounting slit 113, an upper end portion protrudes upward from the upper surface 110a of the sensor mounting member 110. In the eight sensors 120 mounted in the sensor mounting slits 113, the outer frames 120a are supported by the sensor mounting member 110 at positions where the protrusion portions 120c protrude from the openings 113a for a sensor toward the pin leg accommodating channel portion 112.

The first positive sensor 121p and the first negative sensor 121n are mounted in the sensor mounting slits 113 at positions facing each other in the Y-axis direction with respect to the center of the sensor mounting member 110. The second positive sensor 122p and the second negative sensor 122n are mounted in the sensor mounting slits 113 at positions facing each other in the Y-axis direction with respect to the center of the sensor mounting member 110. The first positive sensor 121p and the second positive sensor 122p are mounted in the sensor mounting slits 113 at positions adjacent to each other in the X-axis direction. The first negative sensor 121n and the second negative sensor 122n are mounted in the sensor mounting slits 113 at positions adjacent to each other in the X-axis direction.

The third positive sensor 123p and the third negative sensor 123n are mounted in the sensor mounting slits 113 at positions facing each other in the X-axis direction with respect to the center of the sensor mounting member 110. The fourth positive sensor 124p and the fourth negative sensor 124n are mounted in the sensor mounting slits 113 at positions facing each other in the X-axis direction with respect to the center of the sensor mounting member 110. The third positive sensor 123p and the fourth positive sensor 124p are mounted in the sensor mounting slits 113 at positions adjacent to each other in the Y-axis direction. The third negative sensor 123n and the fourth negative sensor 124n are mounted in the sensor mounting slits 113 at positions adjacent to each other in the Y-axis direction.

In addition, the eight sensors 120 are mounted in the sensor mounting slits 113 such that the adjacent sensors 120 are in vertically opposite orientations relative to each other (refer to FIG. 7). Specifically, the first positive sensor 121p, the second negative sensor 122n, the third negative sensor 123n, and the fourth positive sensor 124p are mounted such that the link portion between the outer frame 120a and the tongue piece 120b is positioned upward. The first negative sensor 121n, the second positive sensor 122p, the third positive sensor 123p, and the fourth negative sensor 124n are mounted such that the link portion between the outer frame 120a and the tongue piece 120b is positioned downward. As a result, the sensors 120 are located in a state where the positions in the Z-axis direction of the protrusion portions 120c of the adjacent sensors 120 are shifted from each other.

The fifth sensor 125 and the sixth sensor 126 are laid down such that the protrusion portions 120c are directed upward, and are mounted to be fitted into the sensor mounting recessed portions 114. In the two sensors 120 mounted in the sensor mounting recessed portions 114, the outer frames 120a are supported by the sensor mounting member 110 at positions where the protrusion portions 120c protrude upward from the upper surface 110b of the portion on the inner side of the inner periphery of the pin leg accommodating channel portion 112.

In addition, the two sensors 120 mounted in the sensor mounting recessed portions 114 are mounted such that the respective positions of the link portions between the outer frames 120a and the tongue pieces 120b are in opposite orientations relative to each other in the Y-axis direction. In addition, the fifth sensor 125 is mounted such that the link portion between the outer frame 120a and the tongue piece 120b is positioned in the negative direction of the Y-axis. In addition, the sixth sensor 126 is mounted such that the link portion between the outer frame 120a and the tongue piece 120b is positioned in the positive direction of the Y-axis.

FIG. 10 is a perspective view illustrating a configuration example of the load receiving member 130 of the connection module 100 illustrated in FIG. 7. FIG. 11 is a cross-sectional view illustrating a state where the load receiving member 130 illustrated in FIG. 10 is mounted in the sensor mounting member 110 and the sensor 120 illustrated in FIG. 9. The load receiving member 130 is a member that receives a load applied to the traveling tool 200 and transmits the received load to the sensor 120. The load receiving member 130 includes the base portion 131 and a connection pin portion 132.

The base portion 131 is a portion that is supported by the sensor mounting member 110 through the sensor 120, and is formed in a substantially square pillar shape having a square shape with rounded corners in a plan view in the embodiment. In the base portion 131, an upper surface 131a is positioned lower than the upper surface 110a of the sensor mounting member 110 in a state where the load receiving member 130 is supported by the sensor mounting member 110 through the sensor 120. The base portion 131 includes recessed portions 133 and 134 and the leg portion 135.

The recessed portion 133 is a recessed portion that is formed in a recessed shape upward from the lower surface 131b side of the base portion 131 and has a bottom surface having a square shape with rounded corners. The recessed portion 134 is a recessed portion that is formed in a recessed shape upward from a top surface of the recessed portion 133 and has a bottom surface having a square shape with rounded corners. The recessed portion 133 and the recessed portion 134 are formed such that a center in a plan view is a center of the base portion 131. That is, rectangular ring-shaped portions of two steps are formed on the lower surface 131b side of the base portion 131. The leg portion 135 is a rectangular ring-shaped portion positioned outside the outer periphery of the recessed portion 133.

The load receiving member 130 is provided not to be in direct contact with the sensor mounting member 110, and is supported by the sensor mounting member 110 through the plurality of sensors 120. That is, the load receiving member 130 is connected to the device main body 10 through the plurality of sensors 120, the sensor mounting member 110, and the lifting mechanism 40. At this time, the base portion 131 is supported in a state where the leg portion 135 is accommodated in the pin leg accommodating channel portion 112, and four side surfaces are in contact with the sensor 120. In addition, in the base portion 131, the recessed portion 133 and the recessed portion 134 face the upper surface 110b of the portion on the inner side of the inner periphery of the pin leg accommodating channel portion 112.

The load receiving member 130 is supported from below in a state where a top surface of the recessed portion 134 is supported by the protrusion portions 120c of the fifth sensor 125 and the sixth sensor 126. The recessed portion 133 and the recessed portion 134 are not in contact with the outer frames 120a of the fifth sensor 125 and the sixth sensor 126. That is, the fifth sensor 125 and the sixth sensor 126 are located adjacent to each other, and receive loads from a bottom surface of the load receiving member 130 (the top surface of the recessed portion 134) side. Therefore, forces applied from the load receiving member 130 to the fifth sensor 125 and the sixth sensor 126 have the same direction.

The load receiving member 130 is supported from the sides in a state where the side surface on the outer peripheral side of the leg portion 135 is supported by the protrusion portions 120c of the first positive sensor 121p, the first negative sensor 121n, the second positive sensor 122p, the second negative sensor 122n, the third positive sensor 123p, the third negative sensor 123n, the fourth positive sensor 124p, and the fourth negative sensor 124n. The leg portion 135 is not in contact with the inner wall and the bottom surface 112a of the pin leg accommodating channel portion 112.

As described above, the first positive sensor 121p and the first negative sensor 121n are located to face each other in the Y-axis direction with the load receiving member 130 therebetween. Therefore, forces applied from the load receiving member 130 to the first positive sensor 121p and the first negative sensor 121n have opposite directions. Likewise, the second positive sensor 122p and the second negative sensor 122n are located to face each other in the Y-axis direction with the load receiving member 130 therebetween. Therefore, forces applied from the load receiving member 130 to the second positive sensor 122p and the second negative sensor 122n have opposite directions.

Likewise, the third positive sensor 123p and the third negative sensor 123n are located to face each other in the X-axis direction with the load receiving member 130 therebetween. Therefore, forces applied from the load receiving member 130 to the third positive sensor 123p and the third negative sensor 123n have opposite directions. Likewise, the fourth positive sensor 124p and the fourth negative sensor 124n are located to face each other in the X-axis direction with the load receiving member 130 therebetween. Therefore, forces applied from the load receiving member 130 to the fourth positive sensor 124p and the fourth negative sensor 124n have opposite directions.

The connection pin portion 132 is formed to protrude from the center portion on the upper surface 131a side of the base portion 131 and to extend in the axial direction (Z-axis direction). The connection pin portion 132 is insertable from below into a fitting hole 154 of the attachment member 150 described below. The connection pin portion 132 includes a first pillar portion 132a and a second pillar portion 132b.

The first pillar portion 132a is positioned in an upper end portion of the connection pin portion 132 and has a pillar shape having an axial direction parallel to the Z-axis direction and a shape of an XY cross-section is constant. The first pillar portion 132a according to the embodiment illustrated in FIG. 10 has a square pillar shape in which a shape of a cross-section (in the following description, referred to as an XY cross-section) taken along a plane orthogonal to the axial direction is a square shape with rounded corners. However, in the present embodiment, the first pillar portion 132a may have any pillar shape other than a true circular pillar shape, and may have a polygonal pillar shape other than a square pillar shape, or an elliptical pillar shape. Further, in the first pillar portion 132a, the XY cross-section may have a shape such as a Reuleaux polygon shape or a lemon shape having a side portion swelling outside. That is, the first pillar portion 132a has a shape other than a true circle when seen in the axial direction. It is preferable that the XY cross-sectional shape of the first pillar portion 132a is rotationally symmetric.

In addition, an angular portion 132c corresponding to a side of the first pillar portion 132a may have a shape with rounded corners or a chamfered shape as in the embodiment. When the first pillar portion 132a has an elliptical pillar shape, both end portions of the major axis are regarded as the angular portions 132c. In addition, in the embodiment, an upper surface 132d of the first pillar portion 132a is formed to have a flat surface parallel to an XY plane.

The second pillar portion 132b is positioned below the first pillar portion 132a and has a pillar shape that is a tapered shape such as an exponentially tapered shape or parabolic tapered shape having an axial direction parallel to the Z-axis direction. In the second pillar portion 132b, a side surface of an upper end portion is continuous to a side surface of a lower end portion of the first pillar portion 132a, and a side surface of a lower end portion is continuous to the upper surface 131a of the base portion 131.

FIG. 12 is a plan view illustrating a configuration example of the cover member 140 of the connection module 100 illustrated in FIG. 7. The cover member 140 is a protective member having a rectangular ring shape that covers a region above the sensor 120 supported by the sensor mounting member 110. The cover member 140 has a lower surface that is fixed to the upper surface 110a of the sensor mounting member 110, and is provided not to be in direct contact with the load receiving member 130. That is, in a state where the lower surface of the cover member 140 is fixed to the sensor mounting member 110, a gap is provided between the lower surface of the cover member 140 and the upper surface 131a of the base portion 131 of the load receiving member 130 supported by the sensor mounting member 110 through the sensor 120. The cover member 140 includes a fixing screw hole 141, a hole 142 for a sensor, an opening 143 for a pin, a pressing pin through-hole 144, and a wiring hole 145.

The fixing screw hole 141 is a hole into which a screw for fixing the cover member 140 to the upper surface 110a side of the sensor mounting member 110 (refer to FIG. 8 and the like) is inserted. The fixing screw hole 141 is formed in a penetrating manner in the Z-axis direction. The same number of fixing screw holes 141 are provided at positions corresponding to the cover fixing screw holes 111 of the sensor mounting member 110 in a plan view. In the embodiment, one fixing screw hole 141 is formed at each of the positions in the vicinity of four corners in a plan view, that is, four fixing screw holes 141 in total are formed.

The sensors 120 mounted in the eight sensor mounting slits 113 each have the upper end portion that protrudes from the upper surface 110a of the sensor mounting member 110, and each of the holes 142 for sensors is a hole into which the upper end portion of the corresponding sensor 120 is inserted. The hole 142 for a sensor is formed upward in the Z-axis direction from the lower surface side of the cover member 140, and is formed in a penetrating manner in the Z-axis direction in the embodiment. The same number of holes 142 for sensors are provided at positions corresponding to the sensor mounting slits 113 in a plan view. In the embodiment, two holes 142 for sensors are formed at each of the positions in the vicinity of four sides in a plan view, that is, eight holes 142 for sensors in total are formed. In a state where the cover member 140 is fixed to the upper surface 110a of the sensor mounting member 110, the upper end of each of the sensors 120 mounted in the eight sensor mounting slits 113 is positioned below the upper surface 110a of the sensor mounting member 110.

The opening 143 for a pin is an opening into which the connection pin portion 132 of the load receiving member 130 is inserted. That is, the pin-insertion opening 143 refers to a portion on the inner side of the inner periphery of the cover member 140 having a rectangular ring shape. The opening 143 for a pin is formed such that its inner edge is positioned outside the connection pin portion 132 in a plan view so as to be separated from the connection pin portion 132.

The pressing pin through-hole 144 is a through-hole into which a pressing pin 155 formed in the attachment member 150 described below is inserted. The pressing pin through-hole 144 is provided in a penetrating manner in the Z-axis direction such that its diameter is larger than a diameter of the pressing pin 155. The same number of pressing pin through-holes 144 are provided at positions corresponding to the pressing pins 155 in a plan view. In the embodiment, one pressing pin through-hole 144 is formed in the vicinity of each of two fixing screw holes 141 on a diagonal line, that is, two pressing pin through-holes 144 in total are formed.

The wiring hole 145 is a hole through which a wiring connected to the pressure sensor 160 described below passes. The wiring is connected to another element outside the connection module 100 through the wiring hole 145, for example, through the wiring hole 115 of the sensor mounting member 110.

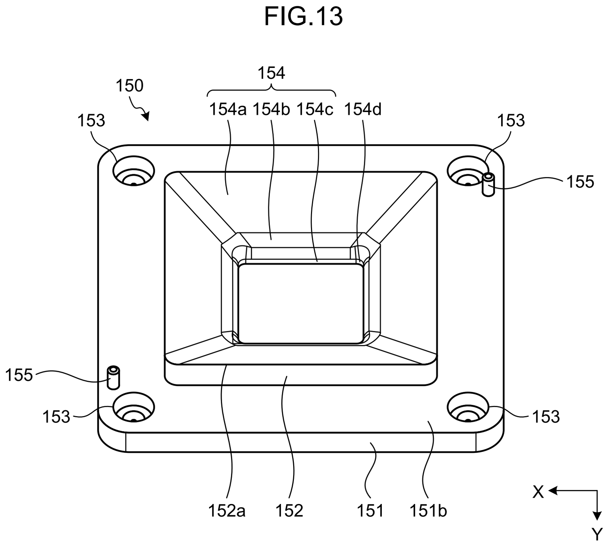

FIG. 13 is a perspective view illustrating a configuration example of the attachment member 150 of the connection module 100 illustrated in FIG. 7. The attachment member 150 is a member that is attached to the main body portion 210 of the traveling tool 200 (refer to FIGS. 16 and 17). The attachment member 150 is connectable to and separable from the load receiving member 130. By connecting the attachment member 150 to the load receiving member 130, the traveling assistance device 1 is connected to the traveling tool 200. The attachment member 150 includes a base portion 151, a hole formation portion 152, a plurality of (in the embodiment, four) fixing holes 153, the fitting hole 154, and the pressing pins 155.

The base portion 151 is a portion that is attached to the main body portion 210 of the traveling tool 200 (refer to FIGS. 16 and 17), and is formed in a thick plate shape having a square ring shape with rounded corners in a plan view in the embodiment. An upper surface 151a (refer to FIG. 7) side of the base portion 151 faces a lower surface side of the main body portion 210 of the traveling tool 200.

The hole formation portion 152 is a protrusion portion that is formed in a protrusion shape downward from a lower surface 151b side of the base portion 151 in a plan view and has a square shape with rounded corners in a plan view. The hole formation portion 152 is formed such that a center in a plan view is a center of the base portion 151. That is, the base portion 151 includes the lower surface 151b having a rectangular ring shape outside the outer periphery of the hole formation portion 152. The attachment member 150 is formed such that the thickness of a portion of the hole formation portion 152 in the Z-axis direction is larger than the thickness of the portion having a rectangular ring shape positioned outside the outer periphery of the hole formation portion 152.

The fixing hole 153 is a hole into which a screw for fixing the attachment member 150 to the lower surface side of the main body portion 210 of the traveling tool 200 (refer to FIGS. 16 and 17) is inserted. The fixing hole 153 is formed to penetrate the base portion 151 of the attachment member 150 in the Z-axis direction, and includes, for example, a female thread in an inner peripheral surface. In the embodiment, four fixing holes 153 are provided. The four fixing holes 153 are respectively formed at positions in the vicinity of four corners of the attachment member 150 in a plan view. For example, in a state where the upper surface 151a of the base portion 151 is aligned with the lower surface side of the main body portion 210 of the traveling tool 200, a screw is inserted into the fixing hole 153 from below the fixing hole 153 and is screwed together therewith, whereby the upper surface 151a is fixed to the lower surface of the main body portion 210 of the traveling tool 200.

The fitting hole 154 is a hole into which the hole formation portion 152 of the attachment member 150 penetrates in the Z-axis direction, and the connection pin portion 132 of the load receiving member 130 is insertable thereinto from below. The fitting hole 154 is formed in the center portion of the attachment member 150 in a plan view. The fitting hole 154 communicates with a first hole portion 154a, a second hole portion 154b, and a third hole portion 154c in this order.

In the embodiment, the first hole portion 154a is positioned below the second hole portion 154b and the third hole portion 154c. The first hole portion 154a is a hole that has an opening formed on the lower surface side of the attachment member 150 and has an axial direction parallel to the Z-axis direction. The first hole portion 154a has an inner wall having a tapered shape of which a size gradually decreases toward the second hole portion 154b. In the first hole portion 154a according to the embodiment, the XY cross-sectional shape is a square shape with rounded corners. It is preferable that the XY cross-sectional shape of the first hole portion 154a is rotationally symmetric.

The second hole portion 154b is positioned between the first hole portion 154a and the third hole portion 154c. The second hole portion 154b is a hole that communicates with a region above the first hole portion 154a and has an axial direction parallel to the Z-axis direction. The second hole portion 154b has an inner wall having a tapered shape of which a size gradually decreases toward the third hole portion 154c and a taper ratio is less than a taper ratio of the first hole portion 154a. In the second hole portion 154b according to the embodiment, the XY cross-sectional shape is a square shape with rounded corners. It is preferable that the XY cross-sectional shape of the second hole portion 154b is rotationally symmetric.

In the embodiment, the third hole portion 154c is positioned above the first hole portion 154a and the second hole portion 154b. The third hole portion 154c is a hole that communicates with a region above the second hole portion 154b, has an axial direction parallel to the Z-axis direction, and has a constant XY cross-sectional shape. The third hole portion 154c is a hole into which the first pillar portion 132a of the connection pin portion 132 of the load receiving member 130 is fittable. In a state where the third hole portion 154c is fitted into the first pillar portion 132a, an angular portion 154d faces the angular portion 132c of the first pillar portion 132a.

The third hole portion 154c according to the embodiment has an opening formed on the upper surface 151a side of the attachment member 150. In the third hole portion 154c according to the embodiment, the XY cross-sectional shape is a square shape with rounded corners. However, the third hole portion 154c may have any shape as long as the shape does not have a recessed corner or a recessed curved surface on the outer periphery and can restrict the rotation of the first pillar portion 132a in the θ rotation direction during fitting. It is preferable that the XY cross-sectional shape of the third hole portion 154c is rotationally symmetric.

In the load receiving member 130, when the connection pin portion 132 is inserted from below the fitting hole 154, the first pillar portion 132a is sequentially guided to the first hole portion 154a and the second hole portion 154b of the fitting hole 154 to be fitted into the third hole portion 154c. The fitting hole 154 is formed to satisfy a relationship of L = 1/D, where L represents a minor axis on a boundary surface between the first hole portion 154a and the second hole portion 154b and D represents a major axis on an upper surface 132d of the first pillar portion 132a of the load receiving member 130.

When the first pillar portion 132a is fitted into the third hole portion 154c, the positioning of the load receiving member 130 and the attachment member 150 in the XY plane direction and the θ rotation direction is achieved. In addition, when the first pillar portion 132a is fitted into the third hole portion 154c such that a lower edge 152a of the hole formation portion 152 of the attachment member 150 is supported by and in contact with the upper surface 131a of the base portion 131 of the load receiving member 130, the positioning of the load receiving member 130 and the attachment member 150 in the Z-axis direction is achieved. That is, the four-axis positioning of the load receiving member 130 and the attachment member 150 can be achieved.

In the fitting hole 154, in a state where the first pillar portion 132a is fitted into the third hole portion 154c, an outer peripheral edge in a lower end portion of the first hole portion 154a is positioned inside the base portion 131 of the load receiving member 130 in a plan view. In the load receiving member 130 according to the embodiment, in a state where the first pillar portion 132a is fitted into the third hole portion 154c to support the attachment member 150 with the base portion 131 from below, the upper surface 132d of the first pillar portion 132a is maintained at a position having a height that is the same as or lower than that of the upper surface 151a of the attachment member 150.

In the second hole portion 154b according to the embodiment, the XY cross-sectional shape is a square shape with rounded corners. However, the present embodiment is not limited to a square shape. For example, when the XY cross-sectional shapes of the first pillar portion 132a and the third hole portion 154c are regular polygonal shapes, the second hole portion 154b may have a regular polygonal shape that does not have a recessed corner or a recessed curved surface on the outer periphery, and where the number of vertices of the XY cross-section is less than or equal to those of the first pillar portion 132a and the third hole portion 154c.

In the first hole portion 154a according to the embodiment, the XY cross-sectional shape is a square shape with rounded corners. However, the present embodiment is not limited to a square shape. For example, when the XY cross-sectional shape of the second hole portion 154b is a regular polygonal shape, the first hole portion 154a may have a regular polygonal shape that does not have a recessed corner or a recessed curved surface on the outer periphery, and where the number of vertices of the XY cross-section is less than or equal to that of the second hole portion 154b or may have a circular shape.

The pressing pins 155 are each a protrusion that presses the pressure sensor 160 through the buffer member 170 described below. The pressing pin 155 is formed to protrude from the lower surface 151b side of the base portion 151 and to extend in a direction parallel to the Z-axis direction. A front end of the pressing pin 155 is formed in a dome shape. In the embodiment, the pressing pins 155 includes two pressing pins 155 diagonally located in a plan view. In a state where the attachment member 150 is connected to the load receiving member 130, the pressing pins 155 are inserted into the pressing pin through-holes 144 of the cover member 140 to press the pressure sensors 160 located below the pressing pin through-holes 144 through the buffer members 170.

The pressure sensor 160 includes, for example, a functional part including an electrode and protective films provided such that the functional part is interposed therebetween. The pressure sensor 160 is a sensor that can measure a position and a size of an external pressure applied to the functional part. The pressure sensor 160 is provided corresponding to the positions and the numbers of the pressing pins 155 and the pressing pin through-holes 144 of the cover member 140. The same number of pressure sensors 160 are provided at positions corresponding to the pressing pins 155 and the pressing pin through-holes 144 of the cover member 140 in a plan view. In the embodiment, one pressure sensor 160 is formed on each of lower end sides of two pressing pin through-holes 144 on a diagonal line, that is, two pressure sensors 160 in total are formed. The pressure sensor 160 is provided and fixed to, for example, the lower surface side of the cover member 140 such that the pressing pin through-hole 144 coincides with the functional part in a plan view.

The buffer member 170 is located on the upper surface side of the functional part of each of the pressure sensors 160. The pressing pin 155 is inserted into the pressing pin through-hole 144 when the connection pin portion 132 of the load receiving member 130 is inserted into the fitting hole 154 of the attachment member 150 such that the first pillar portion 132a and the third hole portion 154c are fitted to each other. At this time, the pressure sensor 160 detects the press on the pressure sensor 160 through the buffer member 170 by the front end of the pressing pin 155. That is, the pressure sensor 160 detects the connection state of the load receiving member 130 and the attachment member 150.

The traveling assistance device 1 may include a plurality of attachment members 150 connectable to the load receiving member 130. By attaching the attachment members 150 to a plurality of traveling tools 200, respectively, the traveling assistance device 1 can be sequentially connected to the respective traveling tools 200 to assist traveling. In addition, a plurality of load receiving members 130 and a plurality of attachment members 150 may be provided for one traveling assistance device 1. As long as the traveling tools 200 can be supported at a plurality of positions, for example, the traveling tools 200 can be connected to four corners of the traveling assistance device 1 in a plan view, the configuration is also applicable to a case where the traveling tool 200 is large or heavy.

(Four-Axis Load Measurement of Connection Module 100)

In the connection module 100, when the traveling tool 200 is connected to the traveling assistance device 1 and a force of a transporter is applied to the traveling tool 200 and/or the traveling assistance device 1 is accelerated, a load is applied to the load receiving member 130 through the attachment member 150. When a load is applied to the load receiving member 130, the load receiving member 130 transmits the applied load to the sensor 120 that supports the base portion 131.

Here, a method of measuring the load transmitted from the load receiving member 130 using the sensor 120 illustrated in FIGS. 7, 9, and 11 will be described. In the eight sensors 120 mounted in the sensor mounting slits 113, a Wheatstone bridge circuit is configured using every two sensors 120 to measure a differential output voltage value corresponding to strains in the positive and negative directions.

Specifically, the third positive sensor 123p and the third negative sensor 123n facing each other in the X-axis direction constitute the Wheatstone bridge circuit to measure a differential output voltage value $V_{S3}\pm$ corresponding to strains in the X-axis direction. In addition, the fourth positive sensor 124p and the fourth negative sensor 124n facing each other in the X-axis direction constitute the Wheatstone bridge circuit to measure a differential output voltage value $V_{S4}\pm$ corresponding to strains in the X-axis direction.

In addition, the first positive sensor 121p and the first negative sensor 121n facing each other in the Y-axis direction constitute the Wheatstone bridge circuit to measure a differential output voltage value $V_{S1}\pm$ corresponding to strains in the Y-axis direction. In addition, the second positive sensor 122p and the second negative sensor 122n facing each other in the Y-axis direction constitute the Wheatstone bridge circuit to measure a differential output voltage value $V_{S2}\pm$ corresponding to strains in the Y-axis direction.

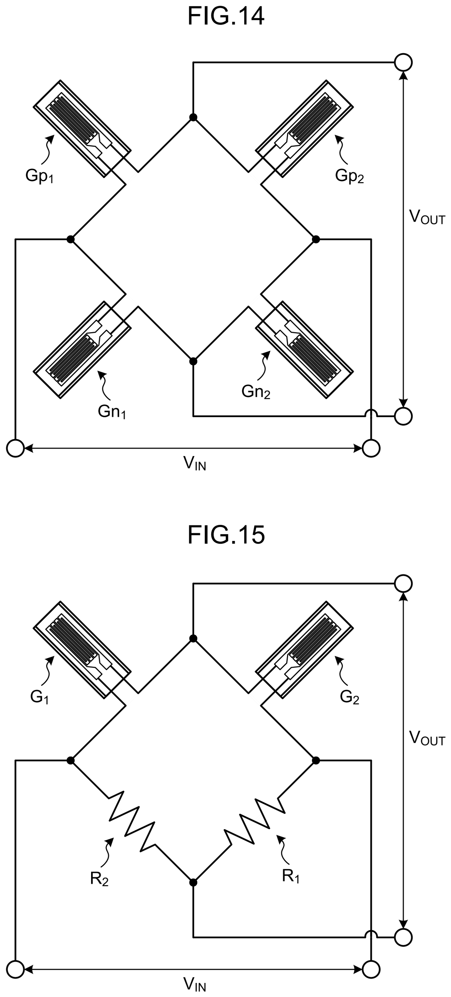

The circuit diagram of the sensors 120 (strain gauges) that measure the differential output voltage values $V_{S1}\pm$, $V_{S2}\pm$, $V_{S3}\pm$, and $V_{S4}\pm$ will be described. FIG. 14 is a diagram illustrating an example of a circuit diagram of the sensors 120 located facing each other in the X-axis direction or the Y-axis direction. In the following description, the circuit diagram of the first positive sensor 121p and the first negative sensor 121n will be described as an example. However, the second positive sensor 122p and the second negative sensor 122n, the third positive sensor 123p and the third negative sensor 123n, and the fourth positive sensor 124p and the fourth negative sensor 124n also have the same circuit configuration.

In the circuit diagram illustrated in FIG. 14, strain gauges $Gp_1$, $Gp_2$, $Gn_1$, and $Gn_2$ are connected to four sides of the bridge circuit, respectively. The strain gauge $Gp_1$ is provided on a surface of the first positive sensor 121p on the protrusion portion 120c side and is provided on one side of the bridge circuit. The strain gauge $Gp_2$ is provided on a surface of the first positive sensor 121p opposite to the strain gauge $Gp_1$, and is provided on one side of the bridge circuit adjacent to the side where the strain gauge $Gp_1$ is provided. The strain gauge $Gn_1$ is provided on a surface of the first negative sensor 121n on the protrusion portion 120c side, and is provided on one side of the bridge circuit opposite to the side where the strain gauge $Gp_1$ is provided. The strain gauge $Gn_2$ is provided on a surface of the first negative sensor 121n opposite to the strain gauge $Gn_1$, and is provided on one side of the bridge circuit opposite to the side where the strain gauge $Gp_2$ is provided. As described above, forces applied from the load receiving member 130 to the first positive sensor 121p and the first negative sensor 121n have opposite directions. Therefore, the strain gauge $Gp_1$ and the strain gauge $Gn_2$ are strained in the same direction, and the strain gauge $Gp_3$ and the strain gauge $Gn_1$ are strained in opposite directions.

In the circuit diagram illustrated in FIG. 14, by applying an applied voltage $V_{IN}$ from below, an output voltage $V_{OUT}$ is output from the right side. When a gauge factor is represented by K and a strain is represented by $\varepsilon$, the output voltage $V_{OUT}$ is represented by Mathematical Expression (1) below. When the sensors 120 connected to the circuit are the first positive sensor 121p and the first negative sensor 121n, the output voltage $V_{OUT}$ is $V_{S1}\pm$.

$$V_{OUT} = V_{IN} \cdot K \cdot \varepsilon \quad \cdots (1)$$

In addition, the two sensors 120 mounted in the sensor mounting recessed portions 114 measure output voltage values corresponding to the strains in the positive direction, respectively. Specifically, the fifth sensor 125 and the sixth sensor 126 arranged in the Y-axis direction measure output voltage values $V_{S5+}$ and $V_{S6+}$ corresponding to the strains in the positive direction of the Z-axis.

The circuit diagram of the sensors 120 (strain gauges) that measure the output voltage values $V_{S5+}$ and $V_{S6+}$ will be described. FIG. 15 is a diagram illustrating an example of the circuit diagram of the sensor 120 located with the protrusion portion 120c facing upward in the Z-axis direction. In the following description, the circuit diagram of the fifth sensor 125 will be described as an example. However, the sixth sensor 126 also has the same circuit configuration.

In the circuit diagram illustrated in FIG. 15, strain gauges $G_1$ and $G_2$ and fixed resistors $R_1$ and $R_2$ are connected to four adjacent sides of the bridge circuit, respectively. The strain gauge $G_1$ is provided on a surface of the fifth sensor 125 on the protrusion portion 120c side and is provided on one side of the bridge circuit. The strain gauge $G_2$ is provided on a surface of the fifth sensor 125 opposite to the strain gauge $G_1$, and is provided on one side of the bridge circuit adjacent to the side where the strain gauge $G_1$ is provided. The fixed resistor $R_1$ is provided on a side of the bridge circuit opposite to the side where the strain gauge $G_1$ is provided. The fixed resistor $R_2$ is provided on a side of the bridge circuit opposite to the side where the strain gauge $G_2$ is provided. As described above, forces applied from the load receiving member 130 to the fifth sensor 125 and the sixth sensor 126 have the same direction. Therefore, the strain gauge $G_1$ of the fifth sensor 125 and the strain gauge $G_1$ of the sixth sensor 126 are strained in the same direction, and the strain gauge $G_2$ of the fifth sensor 125 and the strain gauge $G_2$ of the sixth sensor 126 are strained in opposite directions.

In the circuit diagram illustrated in FIG. 15, by applying an applied voltage $V_{IN}$ from below, an output voltage $V_{OUT}$ is output from the right side. The output voltage $V_{OUT}$ is represented by Mathematical Expression (2) below. When the sensor 120 connected to the circuit is the fifth sensor 125, the output voltage $V_{OUT}$ is $V_{S5+}$, and when the sensor 120 connected to the circuit is the sixth sensor 126, the output voltage $V_{OUT}$ is $V_{S6+}$.

$$V_{OUT} = \frac{V_{IN}}{2} \cdot K \cdot \varepsilon \quad \cdots (2)$$

Each of the measured values measured by the connection module 100 is output to, for example, the controller 22 of the traveling assistance device 1. The controller 22 calculates three-axis loads and a moment around the Z-axis applied to the load receiving member 130 based on each of the measured values. When an output power value during application of 1 [N] to the sensor 120 is represented by $V_{cal}$, the load $F_x$ applied in the X-axis direction, the load $F_y$ applied in the Y-axis direction, and the load $F_z$ applied in the Z-axis direction are represented by Mathematical Expressions (3), (4), and (5) below.

$$F_x = \frac{V_{S3\pm} + V_{S4\pm}}{2}/V_{cal} \quad \cdots (3)$$

$$F_y = \frac{V_{S1\pm} + V_{S2\pm}}{2}/V_{cal} \quad \cdots (4)$$

$$F_z = \frac{(V_{S5+} + V_{S6+})}{2}/V_{cal} \quad \cdots (5)$$

In addition, when a distance from an origin point of the load receiving member 130 to a contact point with the protrusion portion 120c of the sensor 120 is represented by L and a rotation angle of the load receiving member 130 around the Z-axis is represented by $\phi$, the moment $M_z$ around the Z-axis is represented by Mathematical Expression (6) below. The origin point of the load receiving member 130 is set to be positioned at the center of the load receiving member 130 in a plan view, for example, to be positioned on the upper surface 132d of the load receiving member 130 illustrated in FIG. 11. In addition, the angle $\phi$ is calculated based on a difference between the strain amounts in the Y-axis direction or the X-axis direction of two contact points between the protrusion portions 120c of the two sensors 120 adjacent to each other in the X-axis direction or the Y-axis direction and the load receiving member 130.

$$M_z = \frac{(V_{S1\pm} + V_{S2\mp} + V_{S3\pm} + V_{S4\mp})}{4}/V_{cal} \cdot L \cdot \sin\phi \quad \cdots (6)$$

(Connection Operation of Traveling Assistance Device 1 to Traveling Tool 200)

Next, the connection operation of the traveling assistance device 1 to the traveling tool 200 will be described with reference to FIGS. 16 and 17. FIG. 16 is a side view illustrating a partial cross-section of a state before connection of the traveling assistance device 1 illustrated in FIG. 1 to the traveling tool 200. FIG. 17 is a side view illustrating the partial cross-section of the state after the connection of the traveling assistance device 1 illustrated in FIG. 2 to the traveling tool 200.

When the traveling assistance device 1 according to the embodiment transports the traveling tool 200, a worker previously attaches the attachment member 150 to the traveling tool 200. The worker fixes the upper surface 151a of the base portion 151 of the attachment member 150 to the lower surface side of the traveling tool 200, for example, with a screw (not illustrated) and the like. When the traveling assistance device 1 transports a plurality of traveling tools 200, the attachment members 150 are previously attached to all the traveling tools 200. In addition, the worker drives the lifting mechanism 40 using the linear actuator 50 through the sliding member 30 to lower the sensor mounting member 110 and the load receiving member 130.

In the connection, first, the driving wheels 20 are driven to cause the traveling assistance device 1 to travel such that the traveling assistance device 1 is moved underneath the traveling tool 200 to which the attachment member 150 is attached as illustrated in FIG. 16. Next, the connection pin portion 132 of the load receiving member 130 is positioned immediately below the fitting hole 154 of the attachment member 150 such that they face each other.

When the traveling assistance device 1 is moved underneath the traveling tool 200, for example, the traveling assistance device 1 may autonomously travel, the operator may operate the traveling of the traveling assistance device 1 from a terminal device through wireless communication, or the operator may insert the traveling assistance device 1 beneath the traveling tool 200 by pushing the traveling assistance device 1 using the hand or a leg. Examples of the autonomous traveling method include a method of guiding the traveling assistance device 1 using a transmitter such as a beacon, a method of bonding a marker (identifier) to the vicinity of the guide member 230 that is an entrance of the traveling assistance device 1 and recognizing the marker with a camera mounted on the traveling assistance device 1, a method of identifying a relative positional relationship between a 3D camera mounted on the traveling assistance device 1 and the traveling tool 200, and a method of appropriately combining these methods.

Next, the linear actuator 50 is driven in the direction in which the linear actuator 50 expands. Together with the expansion of the linear actuator 50, the movable portion 52 moves the sliding member 30 to the rotating shaft member 43a side (the right side in FIGS. 16 and 17) of the lifting mechanism 40 in the front-back direction. As a result, as illustrated in FIG. 17, the lifting mechanism 40 lifts up the load receiving member 130 through the sensor mounting member 110 and the sensors 120. More specifically, the movable portion 52 moves the sliding member 30 such that the slide shaft member 44b of the second link arm 44 moves to the rotating shaft member 43a side in the guide hole 41b of the base fixing portion 41.

Accordingly, the second link arm 44 rotates around the shaft center of the rotating shaft member 44a, the first link arm 43 linked through the center shaft member 45 rotates around a shaft center of the rotating shaft member 43a, and the slide shaft member 43b moves to the rotating shaft member 44a side in the guide hole 42b of the connection mechanism fixing portion 42. As a result, together with the connection mechanism fixing portion 42, the load receiving member 130 is lifted up through the sensor mounting member 110 and the sensors 120.

The load receiving member 130 that is lifted up approaches the attachment member 150 from below, and the connection pin portion 132 is inserted and fitted into the fitting hole 154 from below. As a result, the load receiving member 130 restricts movement of the attachment member 150 in the horizontal direction and a turning direction around a vertical shaft, and supports and holds the traveling tool 200 from below. Therefore, the traveling assistance device 1 is connected to the traveling tool 200 through the connection module 100.

When the load receiving member 130 and the attachment member 150 are accurately connected to each other, the pressure sensor 160 is pressed against the pressing pin 155 through the buffer member 170 to detect the connection state. The connection pin portion 132 and the fitting hole 154 are fitted to each other such that the four-axis positioning of the traveling assistance device 1 is achieved, which includes the horizontal direction (XY plane direction) positioning, the vertical direction (Z-axis direction) positioning, and the turning direction ($\theta$ rotation direction) positioning around the vertical shaft relative to the traveling tool 200.

At this time, when the traveling assistance device 1 travels, the connection module 100 moves in the traveling direction. The traveling assistance device 1 pulls the traveling tool 200 through the connection module 100 in the traveling direction. In addition, the traveling assistance device 1 pulls the traveling tool 200 through the connection module 100 in a left-right movement direction or a turning movement direction. In addition, when the traveling tool 200 is made to travel by the operator, the traveling assistance device 1 is pulled in a direction of a force applied to the traveling tool 200 through the connection module 100. That is, the traveling assistance device 1 and the traveling tool 200 follow each other in the connection state.

When the traveling assistance device 1 is detached from the traveling tool 200, the linear actuator 50 is driven in the direction in which the linear actuator 50 contracts. Together with the contraction of the linear actuator 50, the movable portion 52 moves the sliding member 30 to the fixed portion 51 side (the left side in FIGS. 16 and 17) in the front-back direction. As a result, together with the sliding member 30, the slide shaft member 44b of the second link arm 44 moves to the fixed portion 51 side in the guide hole 41b of the base fixing portion 41.

Accordingly, the second link arm 44 rotates around the shaft center of the rotating shaft member 44a, the first link arm 43 linked through the center shaft member 45 rotates around the shaft center of the rotating shaft member 43a, and the slide shaft member 43b moves to the fixed portion 51 side in the guide hole 42b of the connection mechanism fixing portion 42. As a result, together with the connection mechanism fixing portion 42, the sensor mounting member 110 and the load receiving member 130 are lowered.

When the load receiving member 130 is moved downward, the connection pin portion 132 comes off downward from the fitting hole 154, and the load receiving member 130 is separated downward from the attachment member 150. As a result, the traveling assistance device 1 is detached from the traveling tool 200.

(Traveling Assistance Control Method)

Next, a traveling assistance control method for assisting the traveling of traveling tool 200 using the traveling assistance device 1 according to the embodiment will be described. First, a dynamic model of the traveling tool 200 used for the traveling assistance control process will be described. FIG. 18 is a diagram illustrating an example of the dynamic model of the traveling tool 200 used for the traveling assistance control process according to the embodiment. The dynamic model represents a balance of a force in the horizontal direction in a state where the traveling assistance device 1 is connected to the traveling tool 200. In the following description, boldface representations for representing vectors or matrices are omitted.

In the dynamic model illustrated in FIG. 18, points A, B, C, and D represent the driven wheels 220 of the traveling tool 200, a point S represents a gravity center of the traveling tool 200, and a point H represents a position where the operator who operates the traveling tool 200 holds the traveling tool 200 to push or pull the traveling tool 200. In the dynamic model according to the embodiment, the X-axis is set to the front-back direction (the front side is the positive direction) of the traveling assistance device 1 and the traveling tool 200 with the point S as the origin point, and the Y-axis is set to the width direction (the right direction while facing forward) of the traveling assistance device 1 and the traveling tool 200 with the point S as the origin point.

In the traveling assistance device 1 according to the embodiment, the center of the connection module 100 coincides with the point S. More specifically, in the embodiment, in a state where the traveling assistance device 1 is connected to the traveling tool 200, coordinate systems of the dynamic model and the connection module 100 illustrated in FIGS. 7 to 13 are the same. The coordinate system of the dynamic model is not limited to the example illustrated in FIG. 18. For example, a global coordinate system having any origin point may be set and transformed using a well-known transformation method.

In the dynamic model, when the mass of the traveling tool 200 including a transport target is represented by M, an inertia moment is represented by I, a traveling speed is represented by v, an angular speed is represented by $\omega$, frictional forces of the driven wheels 220 are represented by $f_A$, $f_B$, $f_C$, and $f_D$, a translational driving force by the traveling assistance device 1 is represented by $F_R$, a turning driving force is represented by $\tau_R$, a translational external force applied to the traveling tool 200 by the operator is represented by $F_H$, and a turning external force is represented by $\tau_H$, Mathematical Expressions (7) and (8) below are satisfied.

$$M\dot{\vec{v}} = \vec{f}_A + \vec{f}_B + \vec{f}_C + \vec{f}_D + \vec{F}_R + \vec{F}_H \quad \cdots (7)$$

$$I\dot{\vec{\omega}} = \vec{\tau}_H + \overrightarrow{SA} \times (\vec{f}_A - \vec{f}_C) + \overrightarrow{SB} \times (\vec{f}_B - \vec{f}_D) + \vec{\tau}_R \quad \cdots (8)$$

In addition, based on Mathematical Expressions (7) and (8), when a term regarding the friction of the driven wheel 220 is represented as a matrix $\Psi_f$ in Mathematical Expression (9), a term regarding the driving force by the traveling assistance device 1 is represented as a matrix $\Psi_R$ in Mathematical Expression (10), a term regarding the external force by the operator is represented as a matrix $\Psi_H$ in Mathematical Expression (11), and a term regarding the inertia system is represented as a matrix $\Psi$ in Mathematical Expression (12), these relationships are represented by Mathematical Expression (13).

$$\psi_f = \begin{bmatrix} \vec{f}_A + \vec{f}_B + \vec{f}_C + \vec{f}_D \\ \overrightarrow{SA} \times (\vec{f}_A - \vec{f}_C) + \overrightarrow{SB} \times (\vec{f}_B - \vec{f}_D) \end{bmatrix} \quad \cdots (9)$$

$$\psi_R = \begin{bmatrix} \vec{F}_R \\ \vec{\tau}_R \end{bmatrix} \quad \cdots (10)$$

$$\psi_H = \begin{bmatrix} \vec{F}_H \\ \vec{\tau}_H \end{bmatrix} \quad \cdots (11)$$

$$\psi = \begin{bmatrix} M\vec{v} \\ I\vec{\omega} \end{bmatrix} \quad \cdots (12)$$

$$\dot{\psi} = \psi_f + \psi_R + \psi_H \quad \cdots (13)$$

Next, an overall sequence of the traveling assistance control process will be described. FIG. 19 is a flowchart illustrating the sequence of the traveling assistance control process in the traveling assistance device 1 according to the embodiment. The traveling assistance control process illustrated in FIG. 19 is executed assuming the dynamic model illustrated in FIG. 18. It is assumed that the traveling assistance device 1 is connected to the traveling tool 200 through the above-described operation.

The controller 22 of the traveling assistance device 1 executes the process illustrated in FIG. 19 based on a predetermined control program and data. The controller 22 starts the process of the flowchart illustrated in FIG. 19, for example, when the pressure sensor 160 of the traveling assistance device 1 detects the connection of the load receiving member 130 and the attachment member 150 attached to the traveling tool 200, or when a predetermined operation for starting the traveling assistance operation is received. As illustrated in FIG. 19, the traveling assistance control method according to the embodiment includes a calibration process S300, an estimation process S400, and a finite state machine (FSM) control process (hereinafter, also referred to as the FSM control process S500).

In the calibration process S300, the frictional forces $\Psi_f$ ($f_A$, $f_B$, $f_C$, $f_D$) of the driven wheels 220 of the traveling tool 200 are calculated. In the embodiment, a maximum static frictional force when the traveling assistance device 1 and the traveling tool 200 start moving from a stationary state is calculated. Here, the calibration process S300 will be described in more detail. FIG. 20 is a flowchart illustrating an example of a sequence of the calibration process S300 illustrated in FIG. 19. As illustrated in FIG. 20, the calibration process S300 according to the embodiment includes processes from Step S301 to Step S330. In the process of the flowchart illustrated in FIG. 19, when transitioning to the calibration process S300, the controller 22 executes the processes in order from Step S301 illustrated in FIG. 20.

In Step S301, the controller 22 starts to detect the speed of the traveling assistance device 1. That is, the controller 22 acquires the speed v and the angular speed $\omega$ of the traveling assistance device 1 from the speed acquisition unit 20a at predetermined intervals. More specifically, the speed acquisition unit 20a calculates, at predetermined intervals, the speed $v_x$ in the X-axis direction, the speed $v_y$ in the Y-axis direction, and the angular speed $\omega_z$ around the Z-axis based on the rotating speed of the rotational actuator 21, and outputs the information on the calculated speeds $v_x$ and $v_y$ and the calculated angular speed $\omega_z$ to the controller 22. The controller 22 acquires the information on the speeds $v_x$ and $v_y$ and the calculated angular speed $\omega_z$ of the device main body 10 calculated based on the rotating speed of the rotational actuator 21. The controller 22 transitions to Step S302.

In Step S302, the controller 22 notifies the start of the calibration process S300. Specifically, the controller 22 controls, for example, the notification part including a speaker provided in the device main body 10 to output a predetermined voice for notifying the start of calibration process S300 to the surroundings. In the calibration process S300, the frictional forces $\Psi_f$ ($f_A$, $f_B$, $f_C$, $f_D$) of the driven wheels 220 of the traveling tool 200 in a state where the external forces $\Psi_H$ (the translational external force $F_H$ and the turning external force $\tau_H$) are zero are calculated. Thus, in Step S302, the start of the calibration process S300 is notified to the operator and the surroundings to keep a distance from the traveling tool 200 and to prevent contact with the traveling tool 200. The controller 22 transitions to Step S303.

In Step S303, the controller 22 determines whether or not the speed of the traveling assistance device 1 is zero. After starting to detect the speed in Step S301, the controller 22 acquires the information on the speeds $v_x$ and $v_y$ and the angular speed $\omega_z$ of the traveling assistance device 1 from the speed acquisition unit 20a at predetermined intervals. In Step S303, the controller 22 determines whether all of the acquired speeds $v_x$ and $v_y$ and the acquired angular speed $\omega_z$ are zero or at least any one thereof is not zero. When the traveling assistance device 1 and the traveling tool 200 connected thereto are stopped, all of the speeds $v_x$ and $v_y$ and the angular speed $\omega_z$ are zero. When it is determined that all of the speeds $v_x$ and $v_y$ and the angular speed $\omega_z$ are zero (Step S303; Yes), the controller 22 transitions to Step S310.

When the traveling assistance device 1 and the traveling tool 200 connected thereto move against the frictional forces $\Psi_f$ of the driven wheels 220, at least any one of the speeds $v_x$ and $v_y$ and the angular speed $\omega_z$ is not zero. That is, the traveling tool 200 is in a state where the external forces $\Psi_H$ are applied. When it is determined that the speed $\neq 0$ (Step S303; No), the controller 22 returns to Step S302. The calibration process S300 needs to start in a state where the traveling assistance device 1 is stopped. Therefore, Step S302 to Step S303 are repeatedly executed until Yes is determined in Step S303.

In Step S310, the controller 22 causes the traveling assistance device 1 to travel to align the driven wheels 220 of the traveling tool 200 connected to the traveling assistance device 1. The alignment of the driven wheels 220 means that directions of all (in the embodiment, four) of the driven wheels 220 of the traveling tool 200 are aligned. The direction of the driven wheel 220 refers to a direction along a direction in which the driven wheel 220 can travel. When the driven wheel 220 rotates around the vertical shaft (turning portion of the universal wheel), the direction of the driven wheel 220 also changes. Step S310 will be described below in detail. When Step S310 ends, the controller 22 transitions to Step S320.

In Step S320, the controller 22 acquires the frictional forces $\Psi_f$ of the driven wheels 220 of the traveling tool 200 based on the driving forces $\Psi_R$ of the traveling assistance device 1. A method of acquiring the frictional forces $\Psi_f$ in Step S320 will be described below in detail. When Step S320 ends, the controller 22 transitions to Step S330.

In Step S330, the controller 22 notifies the end of the calibration process S300. Specifically, the controller 22 controls, for example, the notification part including a speaker provided in the device main body 10 to output a predetermined voice for notifying the end of calibration process S300 to the surroundings. As a result, in Step S330, the notification part notifies completion of preparation of the traveling assistance for assisting the operation of the traveling tool 200 to the operator to prompt the start of the operation of the traveling tool 200. When Step S330 is executed, the controller 22 ends the process of the flowchart illustrated in FIG. 20.

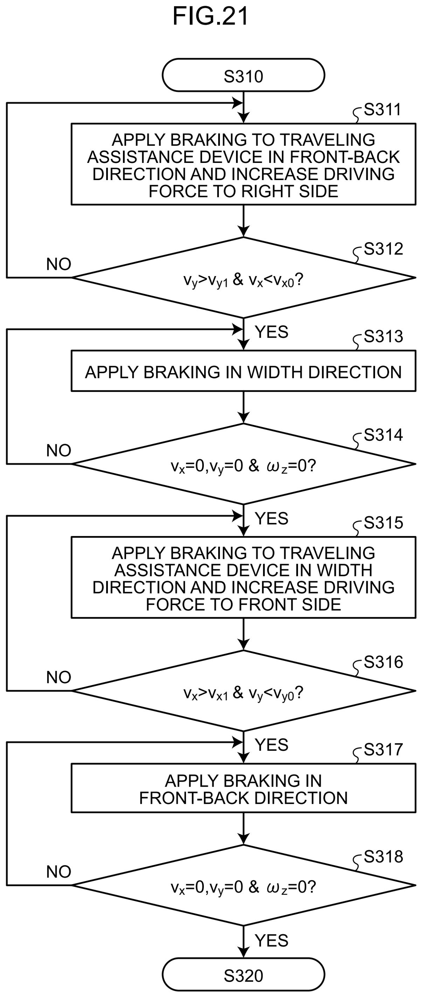

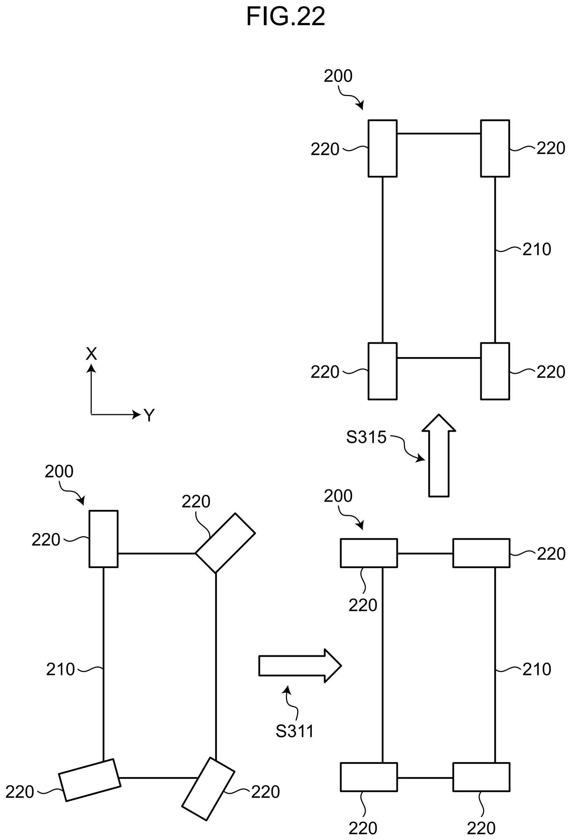

Here, Step S310 of the flowchart illustrated in FIG. 20 will be described in detail. FIG. 21 is a flowchart illustrating a detailed example of Step S310 illustrated in FIG. 20. FIG. 22 is a schematic diagram illustrating an alignment operation of the driven wheels 220 of the traveling tool 200. As illustrated in the lower left diagram of FIG. 22, it is assumed that the directions of the driven wheels 220 of the traveling tool 200 are misaligned in an initial state. As illustrated in FIG. 21, Step S310 includes processes from Step S311 to Step S318. In the process of the flowchart illustrated in FIG. 20, when transitioning to Step S310, the controller 22 executes the processes in order from Step S311 illustrated in FIG. 21.

In Step S311, the controller 22 applies braking to the traveling assistance device 1 in the front-back direction (X-axis direction), and increases the driving force (translational driving force $F_{Ry}$) to the right (Y-axis positive direction). The driving force to the right is equal to the load $F_y$ applied from the traveling tool 200 in the connection portion between the traveling assistance device 1 and the traveling tool 200 when the traveling assistance device 1 travels to the right as a whole without turning due to the rotation of each of the driving wheels 20. The controller 22 controls each of the rotational actuators 21 using the motor drivers 21a such that the driving force in the direction in which the traveling assistance device 1 travels to the right as a whole due to the rotation of each of the driving wheels 20 increases by a predetermined amount.

In addition, in order to prevent sliding of the traveling assistance device 1 in the front-back direction (X-axis direction), the controller 22 controls each of the rotational actuators 21 using the motor drivers 21a such that the speed $v_x$ in the front-back direction is zero. The controller 22 maintains the braking in the front-back direction until Step S314 described below from Step S311.

In Step S312, the controller 22 determines whether or not the speed $v_y$ in the Y-axis direction acquired in the speed acquisition unit 20a is higher than a predetermined threshold $v_{y1}$ ($v_y > v_{y1}$?). In addition, the controller 22 determines whether or not the speed $v_x$ in the X-axis direction acquired in the speed acquisition unit 20a is lower than a predetermined threshold $v_{x0}$ ($v_x < v_{x0}$?). The threshold $v_{y1}$ is a threshold for determining the traveling start state of the width direction (Y-axis direction) in the calibration process S300. The threshold $v_{y1}$ is a positive value close to zero, and is a preset fixed value for allowing error caused by vibration or the like. That is, it is considered that, when the speed $v_y$ is higher than the threshold $v_{y1}$, the traveling assistance device 1 moves in the positive direction of the Y-axis. The threshold $v_{x0}$ is a threshold for determining the stationary state of the front-back direction (X-axis direction) in the calibration process S300. The threshold $v_{x0}$ is a value close to zero, and is a preset fixed value for allowing error caused by vibration or the like. That is, it is considered that, when the speed $v_x$ is lower than the threshold $v_{x0}$, the traveling assistance device 1 does not move in the X-axis direction.

When the traveling assistance device 1 starts to travel to the right (Y-axis positive direction) from the state of the lower left diagram of FIG. 22, the driven wheels 220 of the traveling tool 200 are aligned in the Y-axis direction while turning around the Z-axis direction. The alignment in the Y-axis direction means that axles of all the driven wheels 220 are parallel to the X-axis direction and all the driven wheels 220 are directed to the Y-axis direction.

When it is determined that at least any of $v_y > v_{y1}$ and $v_x < v_{x0}$ is not satisfied (Step S312; No), the controller 22 returns to Step S311, the driving force to the right (translational driving force $F_{Ry}$) is increased by a predetermined amount, and Step S311 to Step S312 are repeatedly executed until Yes is determined in Step S312.

As illustrated in the lower right drawing of FIG. 22, when the traveling assistance device 1 travels to the right (Y-axis positive direction) in a certain distance in a state where braking is applied in the front-back direction (X-axis direction), the driven wheels 220 are aligned in the Y-axis direction. In this case, the driven wheels 220 roll to travel in the Y-axis direction, and sliding in the X-axis direction disappears. Therefore, $v_y > v_{y1}$ and $v_x < v_{x0}$ are satisfied. When it is determined that the speed $v_y$ in the Y-axis direction acquired in the speed acquisition unit 20a is higher than the predetermined threshold $v_{y1}$ and the speed $v_x$ in the X-axis direction acquired in the speed acquisition unit 20a is lower than the predetermined threshold $v_{x0}$ (Step S312; Yes), the controller 22 transitions to Step S313.

In Step S313, braking in the width direction (Y-axis direction) is applied to the traveling assistance device 1. That is, the rotational actuators 21 are controlled using the motor drivers 21a such that the speed $v_y$ in the width direction is zero. The controller 22 maintains the braking in the width direction until Step S318 described below from Step S313.

In Step S314, the controller 22 determines whether or not the speed of the traveling assistance device 1 is zero. After starting to detect the speed in Step S301, the controller 22 acquires the information on the speeds $v_x$ and $v_y$ and the angular speed $\omega_z$ of the traveling assistance device 1 from the speed acquisition unit 20a at predetermined intervals. In Step S314, the controller 22 determines whether all of the acquired speeds $v_y$ and $v_y$ and the acquired angular speed $\omega_z$ are zero or at least any one thereof is not zero.

When the braking in Step S313 is weak such that the traveling assistance device 1 and the traveling tool 200 connected thereto are not stopped, at least any one of the speeds $v_y$ and $v_y$ and the angular speed $\omega_z$ is not zero. When it is determined that the speed $\neq 0$ (Step S314; No), the controller 22 returns to Step S313.

When the traveling assistance device 1 and the traveling tool 200 connected thereto are stopped, all of the speeds $v_y$ and $v_y$ and the angular speed $\omega_z$ are zero. When it is determined that all of the speeds $v_x$ and $v_y$ and the angular speed $\omega_z$ are zero (Step S314; Yes), the controller 22 transitions to Step S315.

In Step S315, the controller 22 applies braking to the traveling assistance device 1 in the width direction (Y-axis direction), and increases the driving force (translational driving force $F_{Rx}$) toward the front (X-axis positive direction). The driving force toward the front is equal to the load $F_x$ applied from the traveling tool 200 in the connection portion between the traveling assistance device 1 and the traveling tool 200 when the traveling assistance device 1 travels toward the front as a whole without turning due to the rotation of each of the driving wheels 20. The controller 22 controls the rotational actuators 21 using the motor drivers 21a such that the driving force in the direction in which the traveling assistance device 1 travels toward the front as a whole due to the rotation of each of the driving wheels 20 increases by a predetermined amount.

In addition, in order to prevent sliding of the traveling assistance device 1 in the width direction, the controller 22 controls the rotational actuators 21 using the motor drivers 21a such that the speed $v_y$ in the width direction (Y-axis direction) is zero. The controller 22 maintains the braking in the width direction until Step S318 described below from Step S315.

In Step S316, the controller 22 determines whether or not the speed $v_x$ in the X-axis direction acquired in the speed acquisition unit 20a is higher than a predetermined threshold $v_{x1}$ ($v_x > v_{x1}$?). In addition, the controller 22 determines whether or not the speed $v_y$ in the Y-axis direction acquired in the speed acquisition unit 20a is lower than a predetermined threshold $v_{y0}$ ($v_y < v_{y0}$?). The threshold $v_{x1}$ is a threshold for determining the traveling start state of the front-back direction (X-axis direction) in the calibration process S300. The threshold $v_{x1}$ is a positive value close to zero, and is a preset fixed value for allowing error caused by vibration or the like. That is, it is considered that, when the speed $v_x$ is higher than the threshold $v_{x1}$, the traveling assistance device 1 moves in the positive direction of the X-axis. The threshold $v_{y0}$ is a threshold for determining the stationary state of the width direction (Y-axis direction) in the calibration process S300. The threshold $v_{y0}$ is a value close to zero, and is a preset fixed value for allowing error caused by vibration or the like. That is, it is considered that, when the speed $v_y$ is lower than the threshold $v_{y0}$, the traveling assistance device 1 does not move in the Y-axis direction.

When the traveling assistance device 1 starts to travel toward the front (X-axis positive direction) from the state of the lower right drawing of FIG. 22, the driven wheels 220 of the traveling tool 200 are aligned in the X-axis direction while turning around the Z-axis direction. The alignment in the X-axis direction means that axles of all the driven wheels 220 are parallel to the Y-axis direction and all the driven wheels 220 are directed to the X-axis direction.

When it is determined that at least any of $v_x > v_{x1}$ and $v_x < v_{x0}$ is not satisfied (Step S316; No), the controller 22 returns to Step S315, the driving force toward the front (translational driving force $F_{Rx}$) is increased by a predetermined amount, and Step S315 to Step S316 are repeatedly executed until Yes is determined in Step S316.

As illustrated in the upper right drawing of FIG. 22, when the traveling assistance device 1 travels toward the front (X-axis positive direction) in a certain distance in a state where braking is applied in the width direction (Y-axis direction), the driven wheels 220 are aligned in the X-axis direction. In this case, the driven wheels 220 roll to travel in the X-axis direction, and sliding in the Y-axis direction disappears. Therefore, $v_x > v_{x1}$ and $v_y < v_{y0}$ are satisfied. When it is determined that the speed $v_x$ in the X-axis direction acquired in the speed acquisition unit 20a is higher than the predetermined threshold $v_{x1}$ and the speed $v_y$ in the Y-axis direction acquired in the speed acquisition unit 20a is lower than the predetermined threshold $v_{y0}$ (Step S316; Yes), the controller 22 transitions to Step S317.

In Step S317, braking in the front-back direction (X-axis direction) is applied to the traveling assistance device 1. That is, the rotational actuators 21 are controlled using the motor drivers 21a such that the speed $v_x$ in the front-back direction is zero. The controller 22 maintains the braking in the front-back direction until Step S318 described below from Step S317.

In Step S318, the controller 22 determines whether or not the speed of the traveling assistance device 1 is zero. After starting to detect the speed in Step S301, the controller 22 acquires the information on the speeds $v_x$ and $v_y$ and the angular speed $\omega_z$ of the traveling assistance device 1 from the speed acquisition unit 20a at predetermined intervals. In Step S318, the controller 22 determines whether all of the acquired speeds $v_x$ and $v_y$ and the acquired angular speed $\omega_z$ are zero or at least any one thereof is not zero.

When the braking in Step S317 is weak and thus the traveling assistance device 1 and the traveling tool 200 connected thereto are not stopped, at least any one of the speeds $v_x$ and $v_y$ and the angular speed $\omega_z$ is not zero. When it is determined that the speed $\neq 0$ (Step S318; No), the controller 22 returns to Step S317.

When the traveling assistance device 1 and the traveling tool 200 connected thereto are stopped, all of the speeds $v_x$ and $v_y$ and the angular speed $\omega_z$ are zero. When it is determined that all of the speeds $v_x$ and $v_y$ and the angular speed $\omega_z$ are zero (Step S318; Yes), the controller 22 ends the process of the flowchart illustrated in FIG. 21 and transitions to Step S320 illustrated in FIG. 20.

In Step S314 and Step S318, the speeds $v_x$ and $v_y$ and the angular speed $\omega_z$ of the traveling assistance device 1 are lower than the thresholds $v_{y0}$ and $v_{y0}$ and a threshold $\omega_{z0}$. Therefore, it may be considered that the traveling assistance device 1 is stopped. That is, error caused by vibration or the like when the traveling assistance device 1 is stopped may be allowed. The threshold $\omega_{z0}$ is a threshold for determining the stationary state of the turning direction (around the Z-axis direction). The threshold $\omega_{z0}$ is a value close to zero, and is a preset fixed value for allowing error caused by vibration or the like.

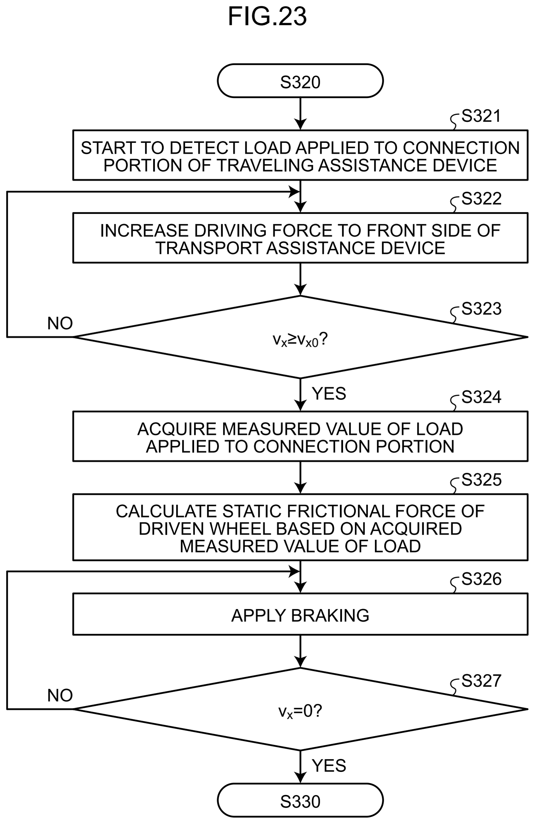

Next, Step S320 of the flowchart illustrated in FIG. 20 will be described in detail. FIG. 23 is a flowchart illustrating a detailed example of Step S320 illustrated in FIG. 20. In the process of the flowchart illustrated in FIG. 20, when transitioning to Step S320, the controller 22 executes the processes in order from Step S321 illustrated in FIG. 23.

In Step S321, the controller 22 starts to detect the load applied to the connection portion of the traveling assistance device 1. During the detection of the load, in the connection portion between the traveling assistance device 1 and the traveling tool 200, a direction and a size of the load applied from the traveling tool 200 are detected. That is, in the embodiment, the controller 22 acquires, at predetermined intervals, a measured value of a voltage corresponding to the strain measured by the sensor 120 due to the load received by the load receiving member 130 from the attachment member 150 attached to the traveling tool 200. The controller 22 transitions to Step S322.

In Step S322, the controller 22 increases the driving force (translational driving force $F_{Rx}$) toward the front (X-axis positive direction) of the traveling assistance device 1. The driving force toward the front is equal to the load $F_x$ applied from the traveling tool 200 in the connection portion between the traveling assistance device 1 and the traveling tool 200 when the traveling assistance device 1 travels toward the front as a whole due to the rotation of each of the driving wheels 20. The controller 22 controls the rotational actuators 21 using the motor drivers 21a such that the driving force in the direction in which the traveling assistance device 1 travels toward the front as a whole due to the rotation of each of the driving wheels 20 increases by a predetermined amount. The controller 22 transitions to Step S323.

In Step S323, the controller 22 determines whether or not the speed $v_x$ of the traveling assistance device 1 in the X-axis direction is the predetermined threshold $v_{x0}$ or higher ($v_x \geq v_{x0}$?). As in the threshold $v_{x0}$ used in Step S312 described above, the threshold $v_{x0}$ is a value close to zero, and is a preset value for allowing error caused by vibration or the like. It is considered that, when the speed $v_x$ is lower than the threshold $v_{x0}$, the traveling assistance device 1 does not move in the X-axis direction. That is, in Step S323, whether or not the traveling assistance device 1 has started to move in the X-axis direction due to the translational driving force $F_{Rx}$ is determined. The threshold $v_{x0}$ used in Step S323 may be a value different from the threshold $v_{x0}$ used in Step S312. After starting to detect the speed in Step S301, the controller 22 acquires the speed $v_x$ of the traveling assistance device 1 from the speed acquisition unit 20a at predetermined intervals. In Step S323, the controller 22 determines whether or not the acquired speed $v_x$ is the predetermined threshold $v_{x0}$ or higher.

After aligning the driven wheels 220 in the X-axis direction in Step S310 illustrated in FIG. 21 and determining that the speeds $v_x$ and $v_y$ and the angular speed $\omega_z$ of the traveling assistance device 1 are zero in Step S318, only the driving force in the X-axis direction is applied in Step S322. Therefore, in Step S323, it is assumed that the traveling assistance device 1 translationally moves in the X-axis direction.

When the traveling assistance device 1 and the traveling tool 200 connected thereto are maintained in the stopped state due to the frictional forces (static frictional forces) $f_A$, $f_B$, $f_C$, and $f_D$ of the driven wheels 220, the speed $v_x$ is zero. When it is determined that the speed $v_x < v_{x0}$ (Step S323; No), the controller 22 returns to Step S322, increases the driving force by a predetermined amount, and repeatedly executes Step S322 to Step S323 until Yes is determined in Step S323.

When the traveling tool 200 moves against the maximum static frictional force of the driven wheels 220 due to the driving force contributing to the traveling assistance device 1 in Step S322, the traveling tool 200 starts to advance, and the speed $v_x$ is a positive value. When it is determined that the speed $v_x \geq v_{x0}$ (Step S323; Yes), the controller 22 transitions to Step S324.

In Step S324, the controller 22 acquires a measured value of the load applied to the connection portion. Specifically, the controller 22 acquires a measured value of the sensor 120 when it is determined that the speed $v_x \geq v_{x0}$ in Step S323. The maximum static frictional force is generated immediately before the traveling assistance device 1 and the traveling tool 200 start to move. Regarding the measured value of the load that is acquired from the sensor 120 periodically from Step S322, it is preferable that the controller 22 acquires the measured value of the load in Step S324 immediately before determining that the speed $v_y \geq v_{x0}$. The controller 22 transitions to Step S325.

In Step S325, the controller 22 calculates the frictional forces $\Psi_f$ ($f_A$, $f_B$, $f_C$, $f_D$) of the driven wheels 220 based on the acquired measured value of the load. The frictional forces $\Psi_f$ calculated in the embodiment are the maximum static frictional forces. First, based on the measured value acquired from the sensors 120, the load calculation processor 22a of the controller 22 calculates the load $F_x$ applied to the connection portion between the traveling assistance device 1 and the traveling tool 200 using Mathematical Expression (3). The load $F_x$ corresponds to an X-axis direction component of the translational driving force $F_R$ of the traveling assistance device 1. Here, after aligning the driven wheels 220 in the X-axis direction in Step S310 illustrated in FIG. 21 and determining that the speed $v_x$ of the traveling assistance device 1 is zero (the external force is zero) in Step S318, only the driving force in the X-axis direction is applied in Step S322. Therefore, it can be assumed that, in Step S324, the load applied to the traveling assistance device 1 is only the X-axis direction component.

Next, the controller 22 calculates the frictional forces $\Psi_f$ ($f_A$, $f_B$, $f_C$, $f_D$) of the driven wheels 220 based on the translational driving force $F_{Rx}$ using Mathematical Expression (7). Here, as described above, Mathematical Expression (7) can be arranged using only one axial direction in the X-axis direction. The translational driving force $F_R$ ($F_{Rx}$) is a value when the traveling assistance device 1 and the traveling tool 200 start to move. Accordingly, the speed $v$ ($v_x$) of the traveling

assistance device 1 and the traveling tool 200 is zero. In addition, it is determined that the speed v ($v_x$) of the traveling assistance device 1 is zero (the external force is zero) in Step S303 illustrated in FIG. 20. Therefore, the translational external force $F_H$ is zero. Accordingly, Mathematical Expression (7) can be arranged as $0 = f_A + f_B + f_C + f_D + F_R$.

In addition, at this time, all the driven wheels 220 are aligned in the X-axis direction. Therefore, the frictional forces $\psi_f$ ($f_A$, $f_B$, $f_C$, $f_D$) applied to the driven wheels 220 in the X-axis direction are the maximum static frictional forces of the driven wheels 220. In addition, the frictional forces $f_A$, $f_B$, $f_C$, and $f_D$ of the four driven wheels 220 are the same ($f_A = f_B = f_C = f_D$), and thus $f_A = f_B = f_C = f_D = -F_R/4$ is satisfied. The controller 22 transitions to Step S326.

In Step S326, the controller 22 applies braking to the traveling assistance device 1. Specifically, the controller 22 controls the rotational actuators 21 using the motor drivers 21a such that the rotation of each of the driving wheels 20 is braked. The controller 22 transitions to Step S327.

In Step S327, the controller 22 determines whether or not the speed of the traveling assistance device 1 is zero. After starting to detect the speed in Step S301, the controller 22 acquires the information on the speed $v_x$ of the traveling assistance device 1 from the speed acquisition unit 20a at predetermined intervals. In Step S327, the controller 22 determines whether or not the acquired speed $v_x$ is zero. When the traveling assistance device 1 and the traveling tool 200 connected thereto are stopped, the speed $v_x$ is zero. When it is determined that the speed $v_x$ is zero (Step S327; Yes), the controller 22 ends the process of the flowchart illustrated in FIG. 23, and transitions to Step S330 illustrated in FIG. 20.

When the calibration process S300 is completed, as illustrated in FIG. 19, the traveling assistance control for assisting the operation of the traveling tool 200 by the operator starts. In the traveling assistance control, the estimation process S400 and the FSM control process S500 are repeatedly executed.

In the estimation process S400, the external forces $\Psi_H$ (the translational external force $F_H$ and the turning external force $\tau_H$) applied to the traveling tool 200 through the operation of the operator are estimated. In the FSM control process S500, instead of the external forces $\Psi_H$ applied to the traveling tool 200 through the operation of the operator, the driving forces $\Psi_R$ (the translational driving force $F_R$ and the turning driving force $\tau_R$) of the traveling assistance device 1 are applied. As a result, the traveling assistance control by the traveling assistance device 1 is executed such that the external forces $\Psi_H$ are zero or reduced. The estimation process S400 and the FSM control process S500 are repeatedly executed until the traveling assistance control ends after returning to the estimation process S400 again.

First, the estimation process S400 and the FSM control process S500 will be described in more detail. FIG. 24 is a control block diagram of the traveling assistance device 1 in the estimation process S400 and the FSM control process S500.

As illustrated in FIG. 24, the controller 22 controls the rotational actuators 21 corresponding to the driving wheels 20 using the motor drivers 21a. The motor drivers 21a supply power for applying a predetermined torque to the driving wheels 20 to the rotational actuators 21. In addition, the controller 22 acquires the information on the acceleration $a_x$ of the traveling assistance device 1 from the acceleration acquisition unit 10a, and acquires the information on the driving forces $\Psi_R$ (the translational driving force $F_R$ and the turning driving force $\tau_R$) by the traveling assistance device 1 from the sensors 120.

In addition, as described above, the motor driver 21a acquires the information on the rotating speed from the rotational actuator 21, and outputs the acquired information on the rotating speed to the speed acquisition unit 20a. The speed acquisition unit 20a calculates the speeds $v_x$ and $v_y$ and the angular speed $\omega_z$ of the entire traveling assistance device 1 based on the information on the rotating speed of each of the rotational actuators 21. The speed acquisition unit 20a outputs the information on the speeds $v_x$ and $v_y$ and the angular speed $\omega_z$ that are acquired to the controller 22. The controller 22 acquires the information on the speeds $v_x$ and $v_y$ and the angular speed $\omega_z$ of the traveling assistance device 1 from the speed acquisition unit 20a.

In the estimation process S400, first, the controller 22 calculates the loads $F_x$, $F_y$, and $F_z$ and the moment $M_z$ around the Z-axis applied to the connection portion between the traveling assistance device 1 and the traveling tool 200 from the measured values of the sensors 120 of the connection module 100. The load $F_x$ corresponds to the X-axis direction component of the translational driving force $F_R$ of the traveling assistance device 1, and the load $F_y$ corresponds to a Y-axis direction component of the translational driving force $F_R$. In addition, the moment $M_z$ corresponds to the turning driving force $\tau_R$.

Next, the controller 22 calculates the external forces $\Psi_H$ (the translational external force $F_H$ and the turning external force $\tau_H$) based on the driving forces $\Psi_R$ (the translational driving force $F_R$ and the turning driving force $\tau_R$) and the frictional forces $\psi_f$ ($f_A$, $f_B$, $f_C$, $f_D$) calculated in the calibration process S300. Here, in the embodiment, assuming that the mass M of the traveling tool 200 and the inertia moment I in Mathematical Expression (12) are zero and the term $\psi$ of the inertia system in Mathematical Expression (13) is $\psi = 0$, to ignore the effect of inertia, the estimation process S400 is executed. Accordingly, in the estimation process S400, the external forces $\psi_H$ (the translational external force $F_H$ and the turning external force $\tau_H$) are calculated from Mathematical Expression (14) below.

$$\psi_H = -(\psi_f + \psi_R) \quad \cdots (14)$$

In the following description, the estimated values of the external forces $\Psi_H$ calculated in the estimation process S400 will be referred to as the external forces $\psi_H{}^*$ (the translational external force $F_H{}^*$ and the turning external force $\tau_H{}^*$). That is, the translational external force $F_H{}^*$ includes an external force $F_{Hx}{}^*$ of the **X**-axis direction component and an external force $F_{Hy}{}^*$ of the Y-axis direction component. In addition, the turning external force $\tau_H{}^*$ is an external force $\tau_{Hz}{}^*$ around the **Z**-axis component. The controller 22 outputs the external forces $\psi_H{}^*$ ($F_{Hx}{}^*$, $F_{Hy}{}^*$, $\tau_{Hz}{}^*$) in the estimation process S400, and transitions to the FSM control process S500.

In the FSM control process S500, a translational driving force $F_{cmd}$ that is a control input value of the translational driving force $F_R$ and a turning driving force $\tau_{cmd}$ that is a control input value of the turning driving force $\tau_R$ for making the traveling assistance device 1 to suitably travel are calculated. The translational driving force $F_{cmd}$ includes a translational driving force $F_{cmdx}$ of the X-axis direction component and a translational driving force $F_{cmdy}$ of the Y-axis direction component. In addition, the turning driving force $\tau_{cmd}$ is a turning driving force $\tau_{cmdz}$ of the Z-axis component. The control input values of the driving forces are represented by Mathematical Expression (15) below.

$$\psi_{cmd} = \begin{bmatrix} \vec{F}_{cmd} \\ \vec{\tau}_{cmd} \end{bmatrix} \quad \cdots (15)$$

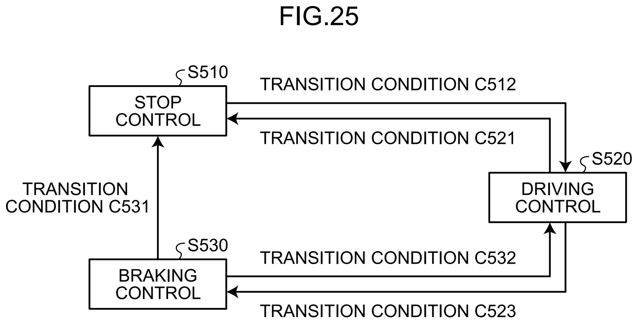

The FSM control process S500 will be described in more detail. FIG. 25 is a control block diagram of the FSM control process S500. The FSM control process S500 includes a stop control S510, a driving control S520, and a braking control S530, and executes any of the controls. In addition, in the FSM control process S500, when a preset transition condition is satisfied, the process transitions to another control.

The stop control S510 is a control for entering a state where the traveling assistance device 1 does not apply the driving forces $\Psi_R$ to the traveling tool 200 or for maintaining the state. That is, in the stop control S510, the controller 22 calculates driving forces $\Psi_{cmd}$ (the translational driving force $F_{cmd}$ and the turning driving force $\tau_{cmd}$) that are the control input values based on Mathematical Expression (16) below such that both of the translational driving force $F_R$ and the turning driving force $\tau_R$ in the driving forces $\Psi_R$ of the traveling assistance device 1 are zero.

$$\psi_{cmd} = 0 \quad \cdots (16)$$

In the FSM control process S500, when a transition condition C512 is satisfied in a state where the stop control S510 is being executed, the process transitions to the driving control S520. The transition condition C512 includes a condition that an absolute value of the speed v of the traveling assistance device 1 connected to the traveling tool 200 is a predetermined threshold $v_{stop}$ or higher ($|v| \geq v_{stop}$). That is, in a state where the traveling assistance device 1 does not apply the driving forces to the traveling tool 200, when the operator applies the external forces $\psi_H$ to the traveling tool 200 and whereby the absolute value of the speed v of the traveling assistance device 1 and the traveling tool 200 is the predetermined threshold $v_{stop}$ or higher, the process transitions to the driving control S520.

The threshold $v_{stop}$ is a threshold for determining the traveling start state and the stationary state in the FSM control process S500. The threshold $v_{stop}$ is a value close to zero and is a preset fixed value for allowing error caused by vibration or the like. More specifically, in the FSM control process S500, external forces $\psi_H$ not intended by the operator may be applied, for example, when unintended vibrations occur due to accidental impact on the traveling tool 200 from the operator or due to the operator placing their non-operating hand on the traveling tool 200. The threshold $v_{stop}$ is preset to suppress the erroneous operation. The threshold $v_{stop}$ is set to a value that is higher than the thresholds $v_{x0}$, $v_{y0}$, $v_{x1}$, and $v_{y1}$ for allowing error caused by vibration or the like used in the calibration process S300 that is executed in a state where the external forces $\psi_H$ are not applied by the operator. As the threshold $v_{stop}$ increases, safety is achieved, but traveling start is difficult. When the threshold $v_{stop}$ is excessively low, the safety decreases. Therefore, it is preferable to previously execute a trial to set the threshold $v_{stop}$.

The driving control S520 is a control for giving the driving forces $\psi_R$ to the traveling tool 200 from the traveling assistance device 1 depending on the external forces $\psi_H$ applied to the traveling tool 200 by the operator. The controller 22 calculates the driving forces $\psi_{cmd}$ (the translational driving force $F_{cmd}$ and the turning driving force $\tau_{cmd}$) that are the control input values based on Mathematical Expressions (17) and (18) below.

$$\psi_{cmd} = -\alpha(\psi_f + \psi_R) \quad \cdots (17)$$

$$\alpha = diag(\alpha_x, \alpha_y, 0,0,0, \alpha_z) \quad \cdots (18)$$

The traveling assistance device 1 assists the traveling of the traveling tool 200, and thus a diagonal matrix $\alpha$ of

coefficients is determined such that the driving forces $\psi_{cmd}$ are constantly maintained to be lower than the frictional forces $\Psi_f$ of the driven wheels 220 of the traveling tool 200 ($\psi_{cmd} < \Psi_f$).

As derived from Mathematical Expressions (14) and (17), the driving forces $\psi_{cmd}$ are proportional to the external forces $\psi_H$. That is, the driving forces $\psi_{cmd}$ (the translational driving force $F_{cmdx}$ of the X-axis direction component, the translational driving force $F_{cmdy}$ of the Y-axis direction component, and the turning driving force $\tau_{cmdz}$ of the Z-axis component) are calculated based on the external forces $F_{Hx}{}^*$, $F_{Hy}{}^*$, and $\tau_{Hz}{}^*$ calculated in the estimation process S400 and the diagonal matrix $\alpha$ of coefficients.

In the FSM control process S500, when a transition condition C521 is satisfied in a state where the driving control S520 is being executed, the process transitions to the stop control S510. The transition condition C521 includes a condition that the absolute value of the speed v of the traveling assistance device 1 connected to the traveling tool 200 is lower than the predetermined threshold $v_{stop}$ ($|v| < v_{stop}$) . That is, when the absolute value of the speed v of the traveling assistance device 1 and the traveling tool 200 is lower than the predetermined threshold $v_{stop}$ in a state where the traveling assistance device 1 is traveling together with the traveling tool 200, the process transitions to the stop control S510.

In the FSM control process S500, when a transition condition C523 is satisfied in a state where the driving control S520 is being executed, the process transitions to the braking control S530. The transition condition C523 includes a condition that the positive-negative sign of the speed $v_x$ in the X-axis direction and the positive-negative sign of the acceleration $a_x$ in the X-axis direction do not match each other ($v_x a_x < 0$) in a state where the absolute value of the speed v of the traveling assistance device 1 connected to the traveling tool 200 is the predetermined threshold $v_{stop}$ or higher ($|v| \geq v_{stop}$), the absolute value of the acceleration $a_x$ in the X-axis direction is higher than a predetermined threshold $a_{x1}$ ($|a_x| > a_{x1}$), and an absolute value of the angular speed $\omega_z$ of the rotation direction around the Z-axis is a predetermined threshold $\omega_{z1}$ or lower ($|\omega_z| \leq \omega_{z1}$) .

That is, when the traveling assistance device 1 and the traveling tool 200 are decelerated in the X-axis direction, the process transitions from the driving control S520 to the braking control S530. Even during the deceleration in the X-axis direction, when the absolute value of the speed v is lower than the predetermined threshold $v_{stop}$, the absolute value of the acceleration $a_x$ is the threshold $a_{x1}$ or lower, or when the absolute value of the angular speed $\omega_z$ is higher than the threshold $\omega_{z1}$, the process does not transition to the braking control S530. The threshold $a_{x1}$ and the threshold $\omega_{z1}$ are positive values and are preset fixed values for allowing error caused by vibration or the like. When the absolute value of the acceleration $a_x$ is higher than the threshold $a_{x1}$, it is considered that the traveling assistance device 1 is accelerated or decelerated on the X-axis. The threshold $a_{x1}$ is provided for applying braking only when the external force $F_{Hx}{}^*$ of the X-axis direction component acts by a predetermined amount or higher in a direction opposite to the traveling direction such that the operator intendedly decelerates the traveling assistance device 1. In addition, when the absolute value of the angular speed $\omega_z$ is lower than the predetermined threshold $\omega_{z1}$, it is considered that there is no large turning operation. The threshold $\omega_{z1}$ is provided for suppressing erroneous braking during the turning operation of the traveling assistance device 1.

The braking control S530 is a control for applying braking in the front-back direction (X-axis direction) of the traveling tool 200 depending on the speed $v_x$ and for applying the driving forces $\Psi_R$ in the width direction (Y-axis direction) and the turning direction (rotation direction around the Z-axis) of the traveling tool 200 depending on the external forces $\Psi_H$ applied to the traveling tool 200 by the operator. In the braking control S530, a viscous resistance (Drag) control is applied for the braking in the X-axis direction, and the translational driving force $F_{cmdx}$ in the X-axis direction that is the control input value reproduces viscous resistance. The controller 22 calculates the translational driving force $F_{cmdx}$ of the X-axis direction component in the driving forces $\Psi_{cmd}$ that is the control input value based on Mathematical Expression (19) below.

$$F_{cmdx} = -bv_x \quad \cdots (19)$$

In Mathematical Expression (20), a viscous resistance coefficient b can be freely set to virtually reproduce viscous resistance applied to a sphere passing through a predetermined space, and is represented by Mathematical Expression (20) below when the radius of the sphere is represented by r and a coefficient of kinematic viscosity of the space is represented by $\mu_d$.

$$b = 6\pi\mu_d r \quad \cdots (20)$$

A control in the Y-axis direction and the rotation direction around the Z-axis in the braking control S530 is the same as the driving control S520. That is, the controller 22 calculates the translational driving force $F_{cmdy}$ of the Y-axis direction component and the turning driving force $\tau_{cmdz}$ of the Z-axis component in the driving forces $\Psi_{cmd}$ that is the control input value based on Mathematical Expressions (21) and (22) below.

$$F_{cmdy} = -\alpha_y(\psi_{fy} + \psi_{Ry}) \quad \cdots(21)$$

$$F_{cmdz} = -\alpha_z(\psi_{fz} + \psi_{Rz}) \quad \cdots(22)$$

In the FSM control process S500, when a transition condition C531 is satisfied in a state where the braking control S530 is being executed, the process transitions to the stop control S510. The transition condition C531 includes a condition that the absolute value of the speed v of the traveling assistance device 1 connected to the traveling tool 200 is lower than the predetermined threshold $v_{stop}$ ($|v| < v_{stop}$). That is, when the absolute value of the speed v of the traveling assistance device 1 and the traveling tool 200 is lower than the predetermined threshold $v_{stop}$ in a state where the traveling assistance device 1 is traveling together with the traveling tool 200, the process transitions to the stop control S510.

In the FSM control process S500, when a transition condition C532 is satisfied in a state where the braking control S530 is being executed, the process transitions to the driving control S520. The transition condition C532 includes a condition that the positive-negative sign of the speed $v_x$ in the X-axis direction and the positive-negative sign of the acceleration $a_x$ in the X-axis direction match each other ($v_x a_x \geq 0$) in a state where the absolute value of the speed v of the traveling assistance device 1 connected to the traveling tool 200 is the predetermined threshold $v_{stop}$ or higher ($|v| \geq v_{stop}$) and the absolute value of the acceleration $a_x$ in the X-axis direction is higher than a predetermined threshold $a_{x1}$ ($|a_x| > a_{x1}$).

When the traveling assistance device 1 and the traveling tool 200 are accelerated in the X-axis direction, the process transitions from the braking control S530 to the driving control S520. Even during the acceleration in the X-axis direction, when the absolute value of the speed v is lower than the predetermined threshold $v_{stop}$, or the absolute value of the acceleration $a_x$ is the threshold $a_{x1}$ or lower, the process does not transition to the driving control S520. The threshold $a_{x1}$ is provided for releasing braking only when the operator intendedly attempts to accelerate the traveling assistance device 1 and the external force $F_{Hx}{}^*$ of the X-axis direction component acts by a predetermined amount or higher in the traveling direction. The transition from the braking control S530 to the driving control S520 refers to restart of acceleration during deceleration.

In the FSM control process S500, even during any of the stop control S510, the driving control S520, and the braking control S530, a torque value $\tau_{wheel}$ of each of the driving wheels 20 that is achieved by the traveling assistance device 1 is calculated based on $\psi_{cmd}$ (the translational driving force $F_{cmd}$ and the turning driving force $\tau_{cmd}$) that is the calculated control input value, and is output to the motor driver 21a. The controller 22 controls the rotational actuators 21 using the motor drivers 21a such that each of the driving wheels 20 rotates at the calculated torque value $\tau_{wheel}$.

As illustrated in FIG. 19, the estimation process S400 and the FSM control process S500 described above are repeatedly executed at predetermined intervals until the traveling assistance control ends. For example, when the pressure sensor 160 of the traveling assistance device 1 that receives a predetermined operation for ending the traveling assistance operation detects the connection/release of the load receiving member 130 and the attachment member 150 attached to the traveling tool 200, the controller 22 ends the process of the flowchart illustrated in FIG. 19. When the traveling assistance operation is temporarily stopped, the controller 22 stores the result of the calibration process S300 and may omit the calibration process S300 at the time of restart.

As described above, the traveling assistance device 1 according to the embodiment includes: the driving wheel 20 supported by the device main body 10 and configured to cause the device main body 10 to travel; the speed acquisition unit 20a configured to acquire information on the speed v and the angular speed $\omega$ of the device main body 10; the connection portion (the load receiving member 130 and the attachment member 150) connected to the traveling tool 200 including the main body portion 210 and the plurality of driven wheels 220 supported by the main body portion 210 and configured to receive the loads $F_x$, $F_y$, and $\tau_z$ applied to the traveling tool 200; the driving force acquisition unit 10b configured to acquire the driving forces $\psi_R$ of the driving wheel 20; and the controller 22. The controller 22 calculates the frictional forces $\psi_f$ of the driven wheel 220 based on the driving forces $\psi_R$ in a state where the external force $\psi_H$ is not applied to the traveling tool 200. When the speed v of the device main body 10 is the predetermined threshold $v_{stop}$ or higher, the controller 22 executes a control such that the driving wheel 20 travels with the driving forces $\psi_{cmd}$ against the frictional forces $\Psi_f$. When the speed v of the device main body 10 is lower than the predetermined threshold $v_{stop}$, the controller 22 executes a control such that the driving forces $\psi_{cmd}$ of the driving wheel 20 are zero.

This configuration eliminates the need for a dedicated operating unit and can reduce the load caused by the frictional forces $\Psi_f$ applied to the traveling tool 200 through the driven wheel 220, whereby the external forces $\Psi_H$ applied to the traveling tool 200 by the operator can be reduced. In addition, the traveling assistance device 1 is connectable to and disconnectable from the existing traveling tool 200 in the connection portion (the load receiving member 130 and the attachment member 150), and is applicable to various traveling tools 200. In addition, the frictional forces $\Psi_f$ applied to the traveling tool 200 on which a transport target is placed are calculated. Therefore, even when transport targets having different weights are loaded each time, the traveling assistance control for applying the driving forces $\psi_{cmd}$ against the frictional forces $\Psi_f$ corresponding to the weight can be executed. In addition, depending on the condition based on the speed information acquired from the speed acquisition unit 20a, it is possible to transition to and execute the more suitable control of a control of executing traveling assistance and a control of not executing traveling assistance.

In the traveling assistance device according to one aspect of the present invention, the controller 22 calculates estimated values (external forces $\Psi_H$*) of the external forces $\Psi_H$ (translational external force $F_H$, turning external force $\tau_H$) applied to the traveling tool 200 based on the driving forces $\psi_R$ and the frictional forces $\psi_f$. When the speed v of the device main body 10 is the predetermined threshold $v_{stop}$ or higher, the controller 22 calculates the driving forces $\psi_{cmd}$ for reducing the external forces $\Psi_H$ based on the external forces $\Psi_H$ and executes a control such that the driving wheel 20 travels with the calculated driving forces $\psi_{cmd}$. When the speed v of the device main body 10 is lower than the predetermined threshold $v_{stop}$, the controller 22 executes a control such that the driving force $\psi_{cmd}$ of the driving wheel 20 are zero.

As a result, a dedicated operating unit is not required, and the assistance is executed such that the traveling tool 200 travels in a direction in which the operator applies the external forces (translational external force $F_H$, turning external force $\tau_H$), and the burden of the operator can be reduced. Even without a dedicated operating unit, the operator can directly operate the traveling tool 200 by holding any portion of the traveling tool 200 with their hand. Therefore, a special training for operating the traveling assistance device 1 is not required, and a precise movement of the traveling tool 200 can be achieved even in a narrow space or a crowded environment. In addition, the frictional forces $\psi_f$ applied to the traveling tool 200 that load a transport target are calculated. Therefore, assuming the frictional forces $\psi_f$ of the traveling tool 200 including the transport target, the external forces by the operator who operates the traveling tool 200 are estimated from the frictional forces $\psi_f$ and the driving forces $\psi_R$, and a control is executed such that the external forces decrease. Therefore, even when transport targets having different weights are loaded each time, the traveling assistance control corresponding to the weight can be executed.

In addition, in the traveling assistance device 1 according to the embodiment, when the speed v of the device main body 10 is the predetermined threshold $v_{stop}$ or higher, the control unit 22 calculates the driving forces $\psi_{cmd}$ that are proportional to the external forces $\psi_H$ and lower than the external forces $\psi_H$ and executes a control such that the driving wheel 20 travels with the calculated driving forces $\psi_{cmd}$.

As a result, as the external forces $\psi_H$ by the operator increase, the driving forces $\psi_R$ that assist the traveling increase in proportion thereto. Therefore, the operator can execute an intuitive operation.

In addition, the traveling assistance device 1 according to the embodiment further includes the acceleration acquisition unit 10a configured to acquire the information on the acceleration "a" of the device main body 10. In addition, in the traveling assistance device 1, when the speed v of the device main body 10 is the predetermined threshold $v_{stop}$ or higher and the acceleration $a_x$ applied to the device main body 10 acts in a direction opposite to the traveling direction such that the acceleration "a" is the predetermined threshold $a_{x1}$ or higher, the controller 22 sets the brake force calculated by multiplying the speed v and the angular speed $\omega$ by the predetermined viscous resistance coefficient "b" as the driving forces $\psi_{cmd}$, and changes a control such that the driving wheel 20 travels with the set driving forces $\psi_{cmd}$.

As a result, when the speed v and the angular speed $\omega$ are low, vibration can be suppressed, and the brake force can be increased at the time of high-speed traveling. Accordingly, for example, when the traveling tool 200 is about to come into contact with an obstacle, the traveling tool 200 can be decelerated or stopped immediately while reducing the burden on the transport target.

In addition, in the traveling assistance device 1 according to the embodiment, when the speed v of the device main body 10 is lower than the predetermined threshold $v_{stop}$ in a state where the brake force is controlled as the driving forces $\psi_{cmd}$, the controller 22 changes a control such that the driving forces $\psi_{cmd}$ of the driving wheel 20 are zero.

As a result, depending on the condition based on the speed information acquired from the acceleration acquisition unit 10a, it is possible to transition to and execute the more suitable control of a control (braking control S530) of executing braking assistance and a control (stop control S510) of not executing traveling assistance and braking assistance.

In addition, in the traveling assistance device 1 according to the embodiment, when the acceleration $a_x$ applied to the device main body 10 acts in the traveling direction such that the acceleration $a_x$ is the predetermined threshold $a_x$, or higher in a state where the brake force is controlled as the driving forces $\psi_{cmd}$, the controller 22 changes a control such that the driving wheel 20 travels with the driving forces $\psi_{cmd}$ for reducing the external forces $\psi_H$ based on the external forces $\Psi_H$.

With this configuration, depending on the condition based on the speed information acquired from the acceleration acquisition unit 10a, it is possible to transition to and execute the more suitable control or continue a control of a control (driving control S520) of restarting traveling assistance and a control (braking control S530) of continuing braking.

In addition, in the traveling assistance device 1 according to the embodiment, the driven wheel 220 of the traveling tool 200 is the universal wheel.

At the start of travel, when the universal wheel is pushed in a horizontal direction perpendicular to an axial direction of the universal wheel, the load on the operator is at a minimum, and when the universal wheel is pushed in the axial direction, the load is at a maximum. The traveling assistance device 1 applies the driving forces $\psi_{cmd}$ against the load caused by the frictional forces $\psi_f$ of the traveling tool 200. Therefore, the load on the operator at the start of travel is reduced, and even when a load is applied in the axial direction of the universal wheel, the traveling tool 200 can be easily made to start traveling.

In addition, in the traveling assistance device 1 according to the embodiment, the controller 22 aligns directions of the plurality of driven wheels 220 by controlling the traveling tool 200 such that the traveling tool travels in one direction (Y-axis positive direction), and re-aligns directions of the plurality of driven wheels 220 by controlling the traveling tool 200 such that the traveling tool 200 travels in the cross direction (X-axis positive direction) orthogonal to the one direction, and calculates the maximum static frictional force as the frictional forces $\psi_f$ of the driven wheel 220 based on the driving forces $\psi_R$ when the driving wheel starts to travel by applying the driving force (translational driving force $F_{Rx}$) to the driving wheel 20 in the cross direction.

With this configuration, when the driven wheel 220 turns or a load in the axial direction of the driven wheel 220 is applied at the start of travel, excessive calculation of the frictional forces $\psi_f$ can be suppressed. In addition, by setting the values of the frictional forces $\psi_f$ used for the traveling assistance control as the maximum static frictional force, a large load at the start of travel from the stationary state can be reduced.

In addition, in the traveling assistance device 1 according to the embodiment, the controller 22 aligns directions of the plurality of driven wheels 220 by controlling the traveling tool 200 such that the traveling tool travels in one direction (in the embodiment, the Y-axis direction), and re-aligns directions of the plurality of driven wheels 220 by controlling the traveling tool 200 such that the traveling tool 200 travels in the cross direction (in the embodiment, X-axis direction) orthogonal to the one direction, and calculates the kinetic frictional force as the frictional forces $\psi_f$ of the driven wheel 220 based on the driving forces $\psi_R$ in a state where the driving forces $\psi_R$ are applied to the driving wheel 20 in the cross direction such that the driving wheel 20 travels at the constant speed v.

With this configuration, even if the driven wheel 220, oriented in the opposite direction before the start of travel, turns during travel such that a load is applied in the axial direction of the driven wheel 220, excessive calculation of the frictional forces $\psi_f$ can be suppressed. In addition, by setting the value of the frictional forces $\psi_f$ used for the traveling assistance control as the kinetic frictional force, the load can be reduced by substantially the same amount as the load caused by the frictional forces $\psi_f$ applied during travel.

In the traveling assistance device 1 according to the embodiment, the driving force acquisition unit 10b includes the sensor 120 (load sensor) configured to detect the loads $F_x$, $F_y$, and $\tau_z$ applied to the connection portion, and the loads $F_x$, $F_y$, and $\tau_z$ detected by the sensor 120 are determined to be the driving forces $\psi_R$ (translational driving forces $F_{RX}$ and $F_{Ry}$ and turning driving force $\tau_{Rz}$) of the traveling assistance device 1.

This way, the loads $F_x$, $F_y$, and $\tau_z$ applied to the connection portion (the load receiving member 130 and the attachment member 150) when the traveling assistance device 1 transports the traveling tool 200 are forces with which the traveling assistance device 1 presses the traveling tool 200, and thus can be determined to be the driving forces $\psi_R$ of the traveling assistance device 1. Accordingly, the sensor 120 (load sensor) for detecting whether or not the connection state between the traveling assistance device 1 and the traveling tool 200 is normal can also be used as the driving force acquisition means.

In addition, in the traveling assistance device 1 according to the embodiment, the base portion 131 having a square shape in a plan view is provided, the sensor 120 (load sensor) includes the plurality of sensors 120 that are mounted in the sensor mounting member 110 having the channel portion (pin leg accommodating channel portion 112) where the base portion 131 of the connection portion (load receiving member 130) is accommodated. The plurality of sensors 120 include the first sensor group (the first positive sensor 121p, the second positive sensor 122p, the first negative sensor 121n, and the second negative sensor 122n) that is located with the base portion 131 interposed in the first sensor group in the first direction (Y-axis direction) on the plane (XY plane) crossing the axial direction and is in contact with the base portion 131 to measure the first measured value (differential output voltage values $V_{S1\pm}$, $V_{S2\pm}$) corresponding to the displacement of the base portion 131, the second sensor group (the third positive sensor 123p, the fourth positive sensor 124p, the third negative sensor 123n, and the fourth negative sensor 124n) that is located with the base portion 131 interposed in the second sensor group in the second direction (X-axis direction) crossing the first direction on the plane and is in contact with the base portion 131 to measure the second measured value (differential output voltage value $V_{S3\pm}$, $V_{S4\pm}$) corresponding to the displacement of the base portion 131, and the third sensor group (the fifth sensor 125 and the sixth sensor 126) that is in contact with the base portion 131 to measure the third measured value (output voltage value $V_{S5+}$, $V_{S6+}$) corresponding to the displacement of the base portion 131 in the third direction (Z-axis direction) along the axial direction.

In the connection portion (load receiving member 130) that receives the load from the traveling tool 200, the four side surfaces and the bottom surface (the top surface of the recessed portion 134) are supported through the plurality of sensors 120 mounted in the sensor mounting member 110, and the first measured value, the second measured value, and the third measured value corresponding to the displacements of the connection portion in the first direction, the second direction, and the third direction are measured by the plurality of sensors 120. With this configuration, for example, the controller 22 can calculate the three-axis loads $F_x$, $F_y$, and $F_z$ based on the respective measured values measured by the sensors 120. Accordingly, the traveling assistance device 1 can measure the respective measured values for separately calculating the three-axis loads applied from the traveling tool 200. In addition, in the traveling assistance device 1, the material of the sensor mounting member 110 having the sensor 120 mounted therein is not limited.

In addition, in the traveling assistance device 1 according to the embodiment, two load sensors in the first sensor group (the first positive sensor 121p, the second positive sensor 122p, the first negative sensor 121n, and the second negative sensor 122n) are provided for each of the two side surfaces of the base portion 131 facing each other in the first direction (Y-axis direction) such that each of the load sensors in the first sensor group measures the first measured value (differential output voltage value $V_{S1\pm}$, $V_{S2\pm}$) to measure the two first measured values, and two load sensors in the second sensor group (the third positive sensor 123p, the fourth positive sensor 124p, the third negative sensor 123n, and the fourth negative sensor 124n) are provided for each of the two side surfaces of the base portion 131 facing each other in the second direction (X-axis direction) such that each of the load sensors in the second sensor group measures the second measured value (differential output voltage value $V_{S3\pm}$, $V_{S4\pm}$) to measure the two second measured values.

In the traveling assistance device 1, when a moment is applied to the connection portion (load receiving member 130) in the rotation direction ($\theta$ rotation direction) around the third direction (Z-axis), two sensors that are diagonally positioned among the four sensors 120 located on the side surfaces of the base portion 131 facing each other are pressed. Accordingly, by arranging the two sensors on each of the side surfaces of the base portion 131, for example, the controller 22 can calculate the moment $M_z$ around the third direction based on each of the measured values measured by the sensors 120, the distance to the sensor 120, and the rotation angle around the third direction. That is, the traveling assistance device 1 can measure the respective measured values for separately calculating the loads of four axes applied from the traveling tool 200.

In addition, in the traveling assistance device 1 according to the embodiment, the controller 22 calculates three-axis loads $F_x$, $F_y$, and $F_z$ applied to the connection portion (load receiving member 130) based on the first measured value (differential output voltage value $V_{S1\pm}$, $V_{S2\pm}$), the second measured value (differential output voltage value $V_{S3\pm}$, $V_{S4\pm}$), and the third measured value (differential voltage value $V_{S5\pm}$, $V_{S6+}$), calculates the moment $M_z$ in the third direction applied to the connection portion based on the first measured value, the second measured value, the distance L from the predetermined origin point of the connection portion (load receiving member 130) to the contact point between the base portion 131 and the sensor 120, and the rotation angle $\phi$ of the connection portion in the third direction (Z-axis direction), and determines the loads $F_y$ and $F_x$ in the first direction (Y-axis direction) and the second direction (X-axis direction) among the calculated three-axis loads and the moment $M_z$ in the third direction (Z-axis direction) to be the driving forces (translational driving force $F_R$, turning driving force $\tau_R$) of the traveling assistance device 1.

In the traveling assistance device 1, the load from the traveling tool 200 is applied to the connection portion (the load receiving member 130 through the attachment member 150) in a state where the traveling tool 200 is connected, and the first measured value, the second measured value, and the third measured value corresponding to the displacements of the connection portion (load receiving member 130) that is displaced due to the load applied from the traveling tool 200 are measured. The traveling assistance device 1 can calculate the three-axis loads $F_x$, $F_y$, and $F_z$ using the controller 22 based on the respective measured values. In addition, in the traveling assistance device 1, when a moment is applied to the connection portion (load receiving member 130) in the rotation direction ($\theta$ rotation direction) around the third direction, the two sensors 120 that are diagonally positioned among the four sensors 120 located on the side surfaces of the base portion 131 facing each other are pressed. Accordingly, by arranging the two sensors 120 on each of the side surfaces of the base portion 131, the traveling assistance device 1 can calculate the moment $M_z$ around the third direction using the controller 22 based on each of the measured values, the distance to the sensor 120, and the rotation angle $\phi$ around the third direction. As a result, the traveling assistance device 1 can calculate not only the loads $F_x$, $F_y$, and $F_z$ applied in the first direction, the second direction, and the third direction but also the moment $M_z$ around the third direction. The loads $F_y$ and $F_x$ applied in the first direction and the second direction are determined to be the translational driving force $F_x$, the moment $M_z$ around the third direction is determined to be the turning driving force $\tau_R$, and the estimated values of the external forces (translational external force $F_H$, turning external force $\tau_H$) by the operator who operates the traveling tool 200 can be calculated.

In addition, in the traveling assistance device 1 according to the embodiment, the sensors 120 each includes the outer frame 120a that is a plate body having a rectangular ring shape, the tongue piece 120b as a plate body having a rectangular shape that is linked to one side of the inner peripheral edge of the outer frame 120a and provided on the inner peripheral side of the outer frame 120a, and the protrusion portion 120c that protrudes from one surface of the tongue piece 120b to be in contact with the base portion 131. The two sensors 120 supporting the same side surface of the base portion 131 are mounted on the sensor mounting member 110 such that positions of the protrusion portions 120c in the third direction (Z-axis direction) are shifted from each other.

With this configuration, the positions of the portions that support the side surfaces of the base portion 131 vary in the third direction. Therefore, unintended rotation of the connection portion (load receiving member 130) including the base portion 131 relative to the sensor mounting member 110 can be suppressed.

In addition, in the traveling assistance device 1 according to the embodiment, the connection portion includes the load receiving member 130 including the base portion 131 that has a square shape in a plan view and the connection pin portion 132 that protrudes from the upper surface 131a of the base portion 131 to extend in the axial direction (Z-axis direction), and the attachment member 150 that is attached to the traveling tool 200 and has the fitting hole 154 into which the connection pin portion 132 is insertable.

In the traveling assistance device 1, the load receiving member 130 includes the connection pin portion 132, and the attachment member 150 attached to the traveling tool 200 has the fitting hole 154 into which the connection pin portion 132 is insertable. Therefore, connection to and separation from the traveling tool 200 can be easily executed.

In addition, in the traveling assistance device 1 according to the embodiment, the connection pin portion 132 includes the first pillar portion 132a having a shape other than a true circle when seen in the axial direction (Z-axis direction) in the upper end portion, the fitting hole 154 communicates with the first hole portion 154a, the second hole portion 154b, and the third hole portion 154c in this order, the first hole portion 154a has an inner wall having a tapered shape of which a size gradually decreases toward the second hole portion 154b, the second hole portion 154b has an inner wall having a tapered shape of which a size gradually decreases toward the third hole portion 154c and a taper ratio is less than a taper ratio of the first hole portion 154a, and the first pillar portion 132a of the connection pin portion 132 is fittable into the third hole portion 154c.

With this configuration, in the connection portion of the traveling assistance device 1, when the load receiving member 130 and the attachment member 150 are positioned, the positioning in the two axial directions (the X-axis direction and the Y-axis direction) on the plane crossing the axial direction is achieved by the first hole portion 154a, the positioning in the rotation direction ($\theta$ rotation direction) around the axial direction is achieved by the second hole portion 154b, and the positioning in one axial direction (Z-axis direction) is achieved by the fitting using the third hole portion 154c. As a result, four-axis positioning can be achieved using only one set of the fitting hole 154 and the connection pin portion 132. In addition, when the load receiving member 130 moves in the direction of the second hole portion 154b relative to the attachment member 150 in the first hole portion 154a, the angular portion 132c of the upper edge of the first pillar portion 132a comes into contact with the inner wall of the first hole portion 154a and is guided by the inner wall to move in the radial center direction. In addition, when the load receiving member 130 moves in the direction of the third hole portion 154c relative to the attachment member 150 in the second hole portion 154b, the angular portion 132c that is positioned in both end portions of the major axis of the first pillar portion 132a is guided to the angular portion of the second hole portion 154b while being in contact with the inner wall of the second hole portion 154b, thereby rotating around the axial center. That is, in the connection portion, by inserting the connection pin portion 132 into the fitting hole 154 in a state where the connection pin portion 132 and the fitting hole 154 face each other, the positioning in the two axial directions on the plane crossing the axial direction, the positioning in the rotation direction around the axial direction, and the positioning in the one axial direction are sequentially achieved. Therefore, the four-axis positioning can be easily achieved.

In addition, the traveling assistance device 1 according to the embodiment further includes: the sliding member 30 that is provided to be movable in one direction (for example, the front-back direction of the device main body 10) relative to the device main body 10; the lifting mechanism 40 that is connected to the device main body 10 and the load receiving member 130 and lifts up and lowers the load receiving member 130 relative to the device main body 10 with the movement of the sliding member 30; and the linear actuator 50 that moves the sliding member 30 in the one direction relative to the device main body 10. The load receiving member 130 is configured to lift up from below the attachment member 150 fixed to the lower surface side of the main body portion 210 to be capable of holding the traveling tool 200 through the attachment member 150, and lower to be disconnected from the mounting member 150 and the traveling tool 200.

With this configuration, in the traveling assistance device 1, the traveling assistance device 1 is moved underneath the traveling tool 200, and the load receiving member 130 is connected to the attachment member 150 attached to the traveling tool 200 from below. Therefore, it is easy to switch between turning right and left, cornering, traveling forward, and traveling backward, whereby stable traveling can be executed. In addition, when the traveling assistance device 1 is moved underneath the traveling tool 200 before being connected to the traveling tool 200, the total height of the traveling assistance device 1 can be reduced by lowering the load receiving member 130. Therefore, it is also possible to support the low-floor traveling tool 200. In addition, the connection to the attachment member 150 attached to the traveling tool 200 can be easily released by lowering the load receiving member 130. Therefore, by previously attaching the plurality of attachment members 150 to the plurality of traveling tools 200, respectively, the plurality of traveling tools 200 can be sequentially transported.

In addition, the traveling assistance control method according to the embodiment is the traveling assistance control method for assisting traveling of the traveling tool 200 in the traveling assistance device 1 including the driving wheel 20 supported by the device main body 10 and configured to make the device main body 10 to travel, the speed acquisition unit 20a configured to acquire the information on the speed v and the angular speed $\omega$ of the device main body 10, the connection portion (the load receiving member 130 and the attachment member 150) connected to the traveling tool 200 including the main body portion 210 and the plurality of driven wheels 220 supported by the main body portion 210 and configured to receive the loads $F_x$, $F_y$, and $\tau_z$ applied to the traveling tool 200, and the driving force acquisition unit 10b configured to acquire the driving forces $\psi_R$ of the driving wheel 20. The traveling assistance control method includes the calibration process S300 of calculating the frictional forces $\psi_f$ of the driven wheel 220 based on the driving forces $\psi_R$ in a state where the external force $\psi_H$ is not applied to the traveling tool 200; and the FSM control process S500, in which the FSM control process S500 includes the driving control S520 of executing a control such that the driving wheel 20 travels with the driving forces $\psi_{cmd}$ against the frictional forces $\psi_f$, and the stop control S510 of executing a control such that the driving forces $\psi_{cmd}$ of the driving wheel 20 are zero. When the first condition (transition condition C521) is satisfied in the driving control S520, the FSM control process S500 transitions from the driving control S520 to the stop control S510. When the second condition (transition condition C512) is satisfied in the stop control S510, the FSM control process transitions from the stop control S510 to the driving control S520.

As a result, a dedicated operating unit is not required, and by reducing the load caused by the frictional forces $\psi_f$ applied to the traveling tool 200 through the driven wheel 220, the external forces $\psi_H$ applied to the traveling tool 200 by the operator can be reduced. In addition, the traveling assistance device 1 is connectable to and disconnectable from the existing traveling tool 200 in the connection portion (the load receiving member 130 and the attachment member 150), and is applicable to various traveling tools 200. In addition, the frictional forces $\psi_f$ applied to the traveling tool 200 on which a transport target is placed are calculated. Therefore, even when transport targets having different weights are loaded each time, the traveling assistance control for applying the driving forces $\psi_{cmd}$ against the frictional forces $\psi_f$ corresponding to the weight can be executed. In addition, depending on the condition based on the speed information acquired from the speed acquisition unit 20a, it is possible to transition to and execute the more suitable control of a control of executing traveling assistance and a control of not executing traveling assistance.

In addition, in the traveling assistance control method according to the embodiment, the first condition (transition condition C521) includes the condition that the speed v of the device main body 10 is lower than the predetermined threshold $v_{stop}$, and the second condition (transition condition C512) includes the condition that the speed v of the device main body 10 is the predetermined threshold $v_{stop}$ or higher.

As a result, depending on the condition based on the speed information acquired from the speed acquisition unit 20a, it is possible to transition to and execute the more suitable control of a control (driving control S520) of executing traveling assistance and a control (stop control S510) of not executing traveling assistance.

The traveling assistance control method according to one aspect of the present invention further includes the estimation process S400 of calculating the estimated values (external forces $\psi_H{}^*$) of the external forces $\Psi_H$ applied to the traveling tool 200 based on the driving forces $\psi_R$ and the frictional forces $\psi_f$, in which the estimation process S400 and the FSM control process S500 are repeatedly executed. In the driving control S520, the driving forces $\psi_{cmd}$ for reducing the external forces $\psi_H$ are calculated based on the external forces $\psi_H$ and executes a control such that the driving wheel 20 travels with the calculated driving forces $\psi_{cmd}$, and in the stop control S510, a control is executed such that the driving forces $\psi_{cmd}$ of the driving wheel 20 are zero.

This configuration eliminates the need for a dedicated operating unit and allows the assistance to be executed such that the traveling tool travels in a direction in which the operator applies the external forces (translational external force $F_H$, turning external force $\tau_H$), whereby the burden of the operator can be reduced. Even without a dedicated operating unit, the operator can directly operate the traveling tool 200 by holding any portion of the traveling tool 200 with their hand. Therefore, a special training for operating the traveling assistance device 1 is not required, and a precise movement of the traveling tool 200 can be achieved even in a narrow space or a crowded environment. In addition, the frictional forces $\psi_f$ applied to the traveling tool 200 that load a transport target are calculated. Therefore, assuming the frictional forces $\psi_f$ of the traveling tool 200 is the frictional forces $\psi_f$ of the traveling tool 200 including the transport target, the external forces by the operator who operates the traveling tool 200 are estimated from the frictional forces $\psi_f$ and the driving forces $\psi_R$, and a control is executed such that the external forces decrease. Therefore, even when transport targets having different weights are loaded each time, the traveling assistance control corresponding to the weight can be executed.

In addition, in the traveling assistance control method according to the embodiment, the FSM control process S500 further includes the braking control S530 of setting the brake force calculated by multiplying the speed v and the angular speed $\omega$ by the predetermined viscous resistance coefficient b as the driving forces $\psi_{cmd}$ and executing a control such that the driving wheel 20 travels with the set driving forces $\psi_{cmd}$. When the third condition (transition condition C523) is satisfied in the driving control S520, the FSM control process transitions from the driving control S520 to the braking control S530, when the fourth condition (transition condition C532) is satisfied in the braking control S530, the FSM control process transitions from the braking control S530 to the driving control S520, and when the fifth condition (transition condition C531) is satisfied in the braking control S530, the FSM control process transitions from the braking control S530 to the stop control S510.

As a result, when the speed v and the angular speed $\omega$ are low, vibration can be suppressed, and the brake force can be increased at the time of high-speed traveling. Accordingly, for example, when the traveling tool 200 is about to come into contact with an obstacle, the traveling tool 200 can be decelerated or stopped immediately while reducing the burden on the transport target. In addition, based on the condition, it is possible to transition to and execute the most suitable control of a control (driving control S520) of executing traveling assistance, a control (stop control S510) of not executing traveling assistance, and a control (braking control S530) of applying braking.

In addition, in the traveling assistance control method according to the embodiment, the traveling assistance device 1 further includes the acceleration acquisition unit 10a configured to acquire the information on the acceleration a of the device main body 10. The third condition (transition condition C523) includes the condition that the acceleration $a_x$ applied to the device main body 10 acts in a direction opposite to the traveling direction such that the acceleration $a_x$ is the predetermined threshold $a_x$, or higher, the fourth condition (transition condition C532) includes the condition that the acceleration $a_x$ applied to the device main body 10 acts in the traveling direction such that the acceleration $a_x$ is the predetermined threshold $a_{x1}$ or higher, and the fifth condition (transition condition C531) includes the condition that the speed v of the device main body 10 is lower than the predetermined threshold $v_{stop}$.

As a result, depending on the condition based on the speed information acquired from the speed acquisition unit 20a, it is possible to transition to and execute the most suitable control or can continue a control of a control (driving control S520) of restarting traveling assistance, a control (stop control S510) of not executing traveling assistance, and a control (braking control S530) of continuing braking.

The present embodiment is not limited to the above-described aspect. That is, various modifications can be made within a range not departing from the gist of the present embodiment.

For example, in the embodiment, not only the loads in the X-axis direction and the Y-axis direction and the inertia moment around the Z-axis direction but also the load in the Z-axis direction can be detected. However, as long as at least the loads in the X-axis direction and the Y-axis direction and the inertia moment around the Z-axis direction can be detected, the kinds, number, arrangement, and combination of force sensors are not limited.

In addition, in the embodiment, the omnidirectional movable traveling assistance device 1 has been described. However, for example, even when the traveling assistance device 1 is a device that travels only in one axial direction (X-axis direction) on a rail, the present embodiment is applicable. In this case, the load detection of the connection portion is not limited as long as the positive-negative sign and size of the load applied in the one axial direction can be detected, and the speed detection is not limited as long as the speed in the one axial direction can be detected.

In addition, regarding the sensor mounting member 110, the cover member 140, and the attachment member 150, the external shape in a plan view is not limited to a square shape and may be a rectangular shape, a triangular shape, a circular shape, or the like. In addition, in the embodiment, the fixing between the sensor mounting member 110 and the cover member 140, or the fixing between the attachment member 150 and the traveling tool 200 may be, for example, screw fixing having high versatility to existing products. However, a new attachment structure may be provided for fixing. In addition, regarding the sensor mounting member 110, the material of the mounting portion of the sensor 120 is not particularly limited, and may be formed using various materials such as PLA, aluminum, or SUS.

In addition, the connection module 100 is not limited to the aspect of the embodiment where the liftable load receiving member 130 and the attachment member 150 attached to the traveling tool 200 are separably provided. However, a magnet or a sucker that lifts up from below the traveling tool 200 to adsorb the lower surface of the traveling tool 200 may be provided, or the connection module 100 may be connected to the traveling tool 200 by fixing using a screw or the like. The sensor 120 is supported on the device main body 10 side. However, as long as a load applied to the connection portion can be acquired, the sensor 120 may be configured to be mounted on the traveling tool 200 side.

In addition, the controller 22 may include the arithmetic processing device of the speed acquisition unit 20a, and the controller 22 may execute the conversion from the rotating speed of the rotational actuator 21 into the speed v and the angular speed $\omega$ of the entire traveling assistance device 1. That is, the controller 22 may calculate the speed v and the angular speed $\omega$ of the entire traveling assistance device 1 based on the measurement result of the rotating speed by the rotary encoder of the rotational actuator 21.

In addition, in the embodiment, in the calibration process S300, as the frictional forces $\psi_f (f_A, f_B, f_C, f_D)$ of the driven wheels 220 of the traveling tool 200, the maximum static frictional force when the traveling assistance device 1 and the traveling tool 200 start to move from the stationary state is calculated. However, a kinetic frictional force in a state where the traveling assistance device 1 and the traveling tool 200 are traveling at a constant speed may be calculated. In this case, after being aligned in the front-back direction (X-axis direction) in Step S310, the driven wheels 220 of the traveling tool 200 are made to start traveling toward the front (X-axis direction) and travel at a constant speed.

At this time, the driving force $\psi_R$ applied to the traveling assistance device 1 is only the translational driving force $F_{RX}$ in the X-axis direction, and the driven wheels 220 are aligned in the X-axis direction. Therefore, Mathematical Expression (7) can be arranged using only one axial direction of the X-axis direction. It is verified that the derivative value of the speed v that is the constant speed is zero and the translational external force $F_H$ is zero in Step S303. Therefore, based on Mathematical Expression (7), the kinetic frictional force can be calculated as $f_A = f_B = f_C = f_D = - F_R/4$ as in the case of calculating the maximum static frictional force.

Regarding the transition condition C512 for the transition from the stop control S510 to the driving control S520 in the FSM control process S500, a situation where the turning operation is executed at the start of movement is less likely to occur. Therefore, in the embodiment, the threshold is set for only the translational speed v. However, a threshold may be set for the angular speed $\omega_z$.

In addition, in the braking control S530 of the FSM control process S500 according to the embodiment, the viscous resistance control is applied to only the control in the X-axis direction. However, the viscous resistance control may also be applied to the control in the Y-axis direction and around the Z-axis direction.

In the embodiment, the load applied to the connection portion acquired from the sensor 120 is the driving forces $\psi_R$ of the traveling assistance device 1. However, for example, the driving forces $\psi_R$ may be calculated from the current value of the rotational actuator 21 (motor) of the driving wheel 20. In this case, in the calibration process S300, the detection of the current value of the rotational actuator 21 (motor) of the driving wheel 20 starts instead of the detection of the load applied to the connection portion in Step S321, and the calculated driving forces are acquired from the current value instead of the measured value of the load applied to the connection portion in Step S324. That is, the driving force acquisition unit does not need to include the sensor 120.

In addition, the estimation process S400 of estimating the external forces $\psi_H$ by the operator may be skipped such that the drag by the frictional force is zero or decreases in the driving control S520 of the FSM control process S500. The controller 22 calculates the driving forces $\psi_{cmd}$ (the translational driving force $F_{cmd}$ and the turning driving force $\tau_{cmd}$) that are the control input values based on Mathematical Expression (23) below instead of Mathematical Expression (17) above.

$$\psi_{cmd} = -\alpha\psi_f \quad \cdots (23)$$

In addition, in the traveling assistance control method according to the present embodiment, the load caused by the effect of the gravity may be reduced. The direction in which the gravitational acceleration is applied and the size thereof can be acquired by the acceleration acquisition unit 10a. In this case, when the gravity is represented by $\psi_G$, the inertia system $\psi$ is represented by Mathematical Expression (24) below instead of Mathematical Expression (13) above.

$$\dot{\psi} = \psi_f + \psi_G + \psi_R + \psi_H \quad \cdots (24)$$

In addition, in the driving control S520 of the FSM control process S500, the controller 22 calculates the driving forces $\psi_{cmd}$ (the translational driving force $F_{cmd}$ and the turning driving force $\tau_{cmd}$) that are the control input values based on Mathematical Expression (25) below instead of Mathematical Expression (17) above.

$$\psi_{cmd} = -\alpha(\psi_f + \psi_G + \psi_R) \quad \cdots (25)$$

Reference Signs List

1 TRAVELING ASSISTANCE DEVICE
10 DEVICE MAIN BODY
10a ACCELERATION ACQUISITION UNIT
10b DRIVING FORCE ACQUISITION UNIT
11 BASE
11a OPENING FOR DRIVING WHEEL 12 DRIVING WHEEL SUPPORT PORTION
13 ACTUATOR SUPPORT PORTION
15 COVER MEMBER
15a OPENING FOR LIFTING MECHANISM
15b UPPER SURFACE
20 DRIVING WHEEL
20a SPEED ACQUISITION UNIT
21 ROTATIONAL ACTUATOR
21a MOTOR DRIVER
22 CONTROLLER
22a LOAD CALCULATION PROCESSOR
23 BATTERY
24 EMERGENCY STOP BUTTON
25 RELAY SWITCH
30 SLIDING MEMBER
31 GUIDE SHAFT PORTION
32 FIXED PORTION
33 RECESSED PORTION
40 LIFTING MECHANISM

41 BASE FIXING PORTION
41a SHAFT HOLE
41b GUIDE HOLE
42 CONNECTION MECHANISM FIXING PORTION
42a SHAFT HOLE
42b GUIDE HOLE
43 FIRST LINK ARM
43a ROTATING SHAFT MEMBER
43b SLIDE SHAFT MEMBER
44 SECOND LINK ARM
44a ROTATING SHAFT MEMBER
44b SLIDE SHAFT MEMBER
45 CENTER SHAFT MEMBER
50 LINEAR ACTUATOR
51 FIXING PORTION
52 MOVABLE PORTION
100 CONNECTION MODULE
110 SENSOR ATTACHMENT MEMBER
110a, 110b UPPER SURFACE
111 COVER FIXING SCREW HOLE
112 PIN LEG ACCOMMODATING CHANNEL PORTION
112a BOTTOM SURFACE
113 SENSOR ATTACHMENT SLIT
113a OPENING FOR SENSOR
114 SENSOR ATTACHMENT RECESSED PORTION
114a CLAW PORTION
115 WIRING HOLE
120 SENSOR (LOAD SENSOR)
120a OUTER FRAME
120b TONGUE PIECE
120c PROTRUSION PORTION
121p FIRST POSITIVE SENSOR
121n FIRST NEGATIVE SENSOR
122p SECOND POSITIVE SENSOR
122n SECOND NEGATIVE SENSOR
123p THIRD POSITIVE SENSOR
123n THIRD NEGATIVE SENSOR
124p FOURTH POSITIVE SENSOR
124n FOURTH NEGATIVE SENSOR
125 FIFTH SENSOR
126 SIXTH SENSOR
130 LOAD RECEIVING MEMBER (CONNECTION PORTION)
131 BASE PORTION
131a UPPER SURFACE
131b LOWER SURFACE
132 CONNECTION PIN PORTION
132a FIRST PILLAR PORTION
132b SECOND PILLAR PORTION
132c ANGULAR PORTION
132d UPPER SURFACE
133, 134 RECESSED PORTION
135 LEG PORTION
140 COVER MEMBER
141 FIXING SCREW HOLE
142 HOLE FOR SENSOR
143 OPENING FOR PIN
144 PRESSING PIN THROUGH-HOLE
145 WIRING HOLE

150 ATTACHMENT MEMBER (CONNECTION PORTION)
151 BASE PORTION
151a UPPER SURFACE
151b LOWER SURFACE
152 HOLE FORMATION PORTION
152a LOWER EDGE
153 FIXING HOLE
154 FITTING HOLE
154a FIRST HOLE PORTION
154b SECOND HOLE PORTION
154c THIRD HOLE PORTION
154d ANGULAR PORTION
155 PRESSING PIN
160 PRESSURE SENSOR
170 BUFFER MEMBER
200 TRAVELING TOOL
210 MAIN BODY PORTION
220 DRIVEN WHEEL
230 GUIDE MEMBER
231 FIRST ARM
232 SECOND ARM
240 STOPPER
250 HANDLE

**Claims**

1. A traveling assistance device comprising:

   a driving wheel supported by a device main body and configured to cause the device main body to travel;
   a speed acquisition unit configured to acquire information on a speed and an angular speed of the device main body;
   a connection portion connected to a traveling tool including a main body portion and a plurality of driven wheels supported by the main body portion and configured to receive a load applied to the traveling tool;
   a driving force acquisition unit configured to acquire a driving force of the driving wheel; and
   a controller,
   wherein the controller is configured to:

   calculate a frictional force of the driven wheel based on the driving force in a state where an external force is not applied to the traveling tool;
   when the speed of the device main body is a predetermined threshold or higher, execute a control such that the driving wheel travels with a driving force against the frictional force; and
   when the speed of the device main body is lower than the predetermined threshold, execute a control such that the driving force of the driving wheel is zero.

2. The traveling assistance device according to claim 1,
   wherein the controller is configured to:

   calculate an estimated value of the external force applied to the traveling tool based on the driving force and the frictional force;
   when the speed of the device main body is the predetermined threshold or higher, calculates a driving force for reducing the external force based on the external force and execute a control such that the driving wheel travels with the calculated driving force; and
   when the speed of the device main body is lower than the predetermined threshold, execute a control such that the driving force of the driving wheel is zero.

3. The traveling assistance device according to claim 2,
   wherein the controller is configured to, when the speed of the device main body is the predetermined threshold or higher, calculate a driving force that is proportional to the external force and lower than the external force and execute a control such that the driving wheel travels with the calculated driving force.

4. The traveling assistance device according to claim 1, further comprising

an acceleration acquisition unit configured to acquire information on an acceleration of the device main body, wherein, when the speed of the device main body is the predetermined threshold or higher and an acceleration applied to the device main body acts in a direction opposite to a traveling direction such that the acceleration is a predetermined threshold or higher, the controller is configured to set a brake force calculated by multiplying the speed and the angular speed by a predetermined viscous resistance coefficient as the driving force, and change a control such that the driving wheel travels with the set driving force.

5. The traveling assistance device according to claim 4,
wherein the controller is configured to, when the speed of the device main body is lower than the predetermined threshold in a state where the brake force is controlled as the driving force, change a control such that the driving force of the driving wheel is zero.

6. The traveling assistance device according to claim 4,
wherein, the controller is configured to, when the acceleration applied to the device main body acts in the traveling direction such that the acceleration is the predetermined threshold or higher in a state where the brake force is controlled as the driving force, change a control such that the driving wheel travels with a driving force for reducing the external force based on the external force.

7. The traveling assistance device according to claim 1,
wherein the driven wheel of the traveling tool is a universal wheel.

8. The traveling assistance device according to claim 7,
wherein the controller is configured to:

align directions of the plurality of driven wheels by controlling the traveling tool such that the traveling tool travels in one direction, and re-aligns the directions of the plurality of driven wheels by controlling the traveling tool such that the traveling tool travels in a cross direction orthogonal to the one direction; and calculate a maximum static frictional force as the frictional force of the driven wheel based on the driving force when the driving wheel starts to travel by applying the driving force to the driving wheel in the cross direction.

9. The traveling assistance device according to claim 7,
wherein the controller is configured to:

align directions of the plurality of driven wheels by controlling the traveling tool such that the traveling tool travels in one direction, and re-aligns the directions of the plurality of driven wheels by controlling the traveling tool such that the traveling tool travels in a cross direction orthogonal to the one direction; and calculate a kinetic frictional force as the frictional force of the driven wheel based on the driving force in a state where the driving force is applied to the driving wheel in the cross direction such that the driving wheel travels at a constant speed.

10. The traveling assistance device according to any one of claims 1 to 9,

wherein the driving force acquisition unit includes a load sensor configured to detect the load applied to the connection portion, and the load detected by the load sensor is determined to be the driving force of the traveling assistance device.

11. The traveling assistance device according to claim 10,

wherein the connection portion includes a base portion having a square shape in a plan view, the load sensor includes a plurality of load sensors that are mounted in a sensor mounting member having a channel portion where the base portion of the connection portion is accommodated, and the plurality of load sensors include

a first sensor group that is located with the base portion interposed in the first sensor group in a first direction on a plane crossing an axial direction and is in contact with the base portion to measure a first measured value corresponding to a displacement of the base portion,

a second sensor group that is located with the base portion interposed in the second sensor group in a second direction crossing the first direction on the plane and is in contact with the base portion to measure a second measured value corresponding to a displacement of the base portion, and

a third sensor group that is in contact with the base portion to measure a third measured value corresponding to a displacement of the base portion in a third direction along the axial direction.

12. The traveling assistance device according to claim 11,

wherein two load sensors in the first sensor group are provided for each of two side surfaces of the base portion facing each other in the first direction such that each of the load sensors in the first sensor group measures the first measured value to measure the two first measured values, and

two load sensors in the second sensor group are provided for each of two side surfaces of the base portion facing each other in the second direction such that each of the load sensors in the second sensor group measures the second measured value to measure the two second measured values.

13. The traveling assistance device according to claim 12,
wherein the controller is configured to:

calculate three-axis loads applied to the connection portion based on the first measured value, the second measured value, and the third measured value;

calculate a moment in the third direction applied to the connection portion based on the first measured value, the second measured value, a distance from a predetermined origin point of the connection portion to a contact point between the base portion and the load sensor, and a rotation angle of the connection portion in the third direction; and

determine loads in the first direction and the second direction among the calculated three-axis loads and the moment in the third direction to be the driving force of the traveling assistance device.

14. The traveling assistance device according to claim 12,

wherein the load sensors each includes

an outer frame that is a plate body having a rectangular ring shape,

a tongue piece as a plate body having a rectangular shape that is linked to one side of an inner peripheral edge of the outer frame and provided on an inner peripheral side of the outer frame, and

a protrusion portion that protrudes from one surface of the tongue piece to be in contact with the base portion, and

two load sensors supporting the same side surface of the base portion are mounted in the sensor mounting member such that positions of the protrusion portions in the third direction are shifted from each other.

15. The traveling assistance device according to claim 10,
wherein the connection portion includes

a load receiving member including a base portion that has a square shape in a plan view and a connection pin portion that protrudes from an upper surface of the base portion to extend in an axial direction, and

an attachment member that is attached to the traveling tool and has a fitting hole into which the connection pin portion is insertable.

16. The traveling assistance device according to claim 15,

wherein the connection pin portion includes a first pillar portion having a shape other than a true circle when seen in the axial direction in an upper end portion,

the fitting hole communicates with a first hole portion, a second hole portion, and a third hole portion in the order as listed,

the first hole portion has an inner wall having a tapered shape of which a size gradually decreases toward the second hole portion,
the second hole portion has an inner wall having a tapered shape of which a size gradually decreases toward the third hole portion and a taper ratio is less than a taper ratio of the first hole portion, and
the first pillar portion of the connection pin portion is fittable into the third hole portion.

17. The traveling assistance device according to claim 15, further comprising:

a sliding member that is provided to be movable in one direction relative to the device main body;
a lifting mechanism that is connected to the device main body and the load receiving member and lifts up and lowers the load receiving member relative to the device main body with movement of the sliding member; and
a linear actuator that moves the sliding member in the one direction relative to the device main body,
wherein the load receiving member is configured to lift up from below the attachment member fixed to a lower surface side of the main body portion to hold the traveling tool through the attachment member, and lower to be disconnected from the attachment member and the traveling tool.

18. A traveling assistance control method for assisting traveling of a traveling tool in a traveling assistance device including

a driving wheel supported by a device main body and configured to cause the device main body to travel,
a speed acquisition unit configured to acquire information on a speed and an angular speed of the device main body,
a connection portion connected to the traveling tool including a main body portion and a plurality of driven wheels supported by the main body portion and configured to receive a load applied to the traveling tool, and
a driving force acquisition unit configured to acquire a driving force of the driving wheel,

the traveling assistance control method comprising:

a calibration process of calculating a frictional force of the driven wheel based on the driving force in a state where an external force is not applied to the traveling tool; and
a finite state machine control process,
wherein the finite state machine control process includes

a driving control of executing a control such that the driving wheel travels with a driving force against the frictional force, and
a stop control of executing a control such that the driving force of the driving wheel is zero, and

the finite state machine control process

transitions from the driving control to the stop control when a first condition is satisfied in the driving control, and
transitions from the stop control to the driving control when a second condition is satisfied in the stop control.

19. The traveling assistance control method according to claim 18,

wherein the first condition includes a condition that the speed of the device main body is lower than a predetermined threshold, and
the second condition includes a condition that the speed of the device main body is the predetermined threshold or higher.

20. The traveling assistance control method according to claim 18 or 19, further comprising

an estimation process of calculating an estimated value of the external force applied to the traveling tool based on the driving force and the frictional force,
wherein the estimation process and the finite state machine control process are repeatedly executed,
in the driving control, a driving force for reducing the external force is calculated based on the external force and a control is executed such that the driving wheel travels with the calculated driving force, and
in the stop control, a control is executed such that the driving force of the driving wheel is zero.

21. The traveling assistance control method according to claim 18 or 19,

wherein the finite state machine control process further includes a braking control of setting a brake force calculated by multiplying the speed and the angular speed by a predetermined viscous resistance coefficient as the driving force and executing a control such that the driving wheel travels with the set driving force, and the finite state machine control process
transitions from the driving control to the braking control when a third condition is satisfied in the driving control,
transitions from the braking control to the driving control when a fourth condition is satisfied in the braking control, and
transitions from the braking control to the stop control when a fifth condition is satisfied in the braking control.

22. The traveling assistance control method according to claim 21,

wherein the traveling assistance device further includes an acceleration acquisition unit configured to acquire information on an acceleration of the device main body,
the third condition includes a condition that an acceleration applied to the device main body acts in a direction opposite to a traveling direction such that the acceleration is a predetermined threshold or higher,
the fourth condition includes a condition that the acceleration applied to the device main body acts in the traveling direction such that the acceleration is the predetermined threshold or higher, and
the fifth condition includes a condition that the speed of the device main body is lower than the predetermined threshold.

FIG.1

EP 4 707 120 A1

FIG.2

# FIG.3

# FIG.4

# FIG.5

FIG.6

# FIG.7

FIG.8

# FIG.9

# FIG.10

# FIG.11

# FIG.12

# FIG.13

# FIG.14

$V_{OUT}$

$V_{IN}$

$Gp_1$

$Gp_2$

$Gn_1$

$Gn_2$

# FIG.15

$V_{OUT}$

$V_{IN}$

$G_1$

$G_2$

$R_2$

$R_1$

## FIG.16

# FIG.17

# FIG.18

$F_R$

A

X

$f_A$

B

S

$f_B$

Y

D

$F_H$

$f_D$

H

C

$f_C$

# FIG.19

START

CALCULATE FRICTIONAL FORCE OF
DRIVEN WHEEL OF TRAVELING TOOL
(CALIBRATION PROCESS) — S300

UNTIL END OF TRAVELING ASSISTANCE CONTROL

ESTIMATE EXTERNAL FORCE APPLIED TO
TRAVELING TOOL THROUGH OPERATION OF
USER FROM DRIVING FORCE AND FRICTIONAL
FORCE OF TRAVELING ASSISTANCE DEVICE
(ESTIMATION PROCESS) — S400

EXECUTE ANY OF STOP CONTROL,
DRIVING CONTROL, AND BRAKING CONTROL
REGARDING TRAVELING ASSISTANCE CONTROL
BASED ON MEASURED SPEED AND ACCELERATION
(FSM CONTROL PROCESS) — S500

END

# FIG.20

```
                    ┌──────────────┐
                    │    START     │
                    └──────┬───────┘
                           │                      ⌐S301
        ┌──────────────────▼──────────────────────┐
        │       START TO DETECT SPEED OF          │
        │      TRAVELING ASSISTANCE DEVICE        │
        └──────────────────┬──────────────────────┘
                           │                      ⌐S302
        ┌──────────────────▼──────────────────────┐
        │    NOTIFY START OF CALIBRATION PROCESS   │
        └──────────────────┬──────────────────────┘
                           │                      ⌐S303
              ◇────────────▼────────────◇
        NO  ◇                            ◇
      ◇─────    vₓ=0,v_y=0 & ω_z=0?       ◇
              ◇                          ◇
                ◇──────────┬──────────◇
                           │ YES
                           │                      ⌐S310
        ┌──────────────────▼──────────────────────┐
        │   ALIGN DRIVEN WHEELS OF TRAVELING TOOL  │
        └──────────────────┬──────────────────────┘
                           │                      ⌐S320
        ┌──────────────────▼──────────────────────┐
        │        ACQUIRE FRICTIONAL FORCE OF       │
        │      DRIVEN WHEEL OF TRAVELING TOOL      │
        │        BASED ON DRIVING FORCE OF         │
        │       TRAVELING ASSISTANCE DEVICE        │
        └──────────────────┬──────────────────────┘
                           │                      ⌐S330
        ┌──────────────────▼──────────────────────┐
        │    NOTIFY END OF CALIBRATION PROCESS     │
        └──────────────────┬──────────────────────┘
                           │
                    ┌──────▼───────┐
                    │     END      │
                    └──────────────┘
```

Decision S303: $v_x = 0, v_y = 0$ & $\omega_z = 0$?

# FIG.21

S310

S311

APPLY BRAKING TO TRAVELING
ASSISTANCE DEVICE IN FRONT-BACK
DIRECTION AND INCREASE DRIVING
FORCE TO RIGHT SIDE

S312

$v_y > v_{y1}$ & $v_x < v_{x0}$?

NO

YES

S313

APPLY BRAKING IN WIDTH DIRECTION

S314

$v_x = 0, v_y = 0$ & $\omega_z = 0$?

NO

YES

S315

APPLY BRAKING TO TRAVELING
ASSISTANCE DEVICE IN WIDTH
DIRECTION AND INCREASE DRIVING
FORCE TO FRONT SIDE

S316

$v_x > v_{x1}$ & $v_y < v_{y0}$?

NO

YES

S317

APPLY BRAKING IN
FRONT-BACK DIRECTION

S318

$v_x = 0, v_y = 0$ & $\omega_z = 0$?

NO

YES

S320

# FIG.22

EP 4 707 120 A1

# FIG.23

S320

S321
START TO DETECT LOAD APPLIED TO CONNECTION
PORTION OF TRAVELING ASSISTANCE DEVICE

S322
INCREASE DRIVING FORCE TO FRONT SIDE OF
TRANSPORT ASSISTANCE DEVICE

S323
$v_x \geq v_{x0}$?

NO

YES

S324
ACQUIRE MEASURED VALUE OF LOAD
APPLIED TO CONNECTION PORTION

S325
CALCULATE STATIC FRICTIONAL FORCE OF
DRIVEN WHEEL BASED ON ACQUIRED
MEASURED VALUE OF LOAD

S326
APPLY BRAKING

S327
$v_x = 0$?

NO

YES

S330

63

FIG.24

EP 4 707 120 A1

# FIG.25

STOP CONTROL — S510

TRANSITION CONDITION C512

TRANSITION CONDITION C521

DRIVING CONTROL — S520

TRANSITION CONDITION C531

BRAKING CONTROL — S530

TRANSITION CONDITION C532

TRANSITION CONDITION C523

## INTERNATIONAL SEARCH REPORT

| International application No. |
|---|
| **PCT/JP2024/016532** |

**A. CLASSIFICATION OF SUBJECT MATTER**

*B62B 3/00*(2006.01)i; *B62B 5/00*(2006.01)i; *B62B 5/04*(2006.01)i; *G01L 5/1627*(2020.01)i
FI:   B62B3/00 G; B62B5/00 C; B62B5/00 K; B62B5/04 Z; G01L5/1627

According to International Patent Classification (IPC) or to both national classification and IPC

**B. FIELDS SEARCHED**

Minimum documentation searched (classification system followed by classification symbols)

B62B3/00; B62B5/00; B62B5/04; G01L5/1627

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/080200 A1 (PANASONIC INTELLECTUAL PROPERTY MANAGEMENT CO., LTD.) 23 April 2020 (2020-04-23)<br>fig. 1-2, 13 | 1-22 |
| A | JP 2022-187099 A (KABUSHIKI KAISHA MEIDENSHA) 19 December 2022 (2022-12-19)<br>fig. 1, 13 | 1-22 |
| P, A | JP 2023-173321 A (NSK LTD.) 07 December 2023 (2023-12-07)<br>paragraphs [0162]-[0188], fig. 18 | 1-22 |

☐ Further documents are listed in the continuation of Box C.      ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

| International application No. |
| PCT/JP2024/016532 |

| Patent document cited in search report | | | Publication date (day/month/year) | Patent family member(s) | | | Publication date (day/month/year) |
|---|---|---|---|---|---|---|---|
| WO | 2020/080200 | A1 | 23 April 2020 | US 2021/0339993 A1 fig. 1-2, 13 | | | |
| JP | 2022-187099 | A | 19 December 2022 | (Family: none) | | | |
| JP | 2023-173321 | A | 07 December 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017536150 A
- JP 2006001426 A
- JP 2000107230 A